(19) Europäisches Patentamt
European Patent Office
Office européen des brevets

(11) EP 0 754 723 B1

(12) # EUROPÄISCHE PATENTSCHRIFT

(45) Veröffentlichungstag und Bekanntmachung des Hinweises auf die Patenterteilung:
**28.04.1999 Patentblatt 1999/17**

(51) Int Cl.[6]: **C08K 5/3435**, C08K 5/3492, C08K 5/54, C08K 5/353

(21) Anmeldenummer: **96810455.4**

(22) Anmeldetag: **12.07.1996**

(54) **Synergistisches Stabilisatorgemisch**

Synergistic stabiliser mixture

Mélange de stabilisateurs synergistique

(84) Benannte Vertragsstaaten:
**AT BE DE DK ES FR GB IT NL SE**

(30) Priorität: **21.07.1995 CH 2174/95**

(43) Veröffentlichungstag der Anmeldung:
**22.01.1997 Patentblatt 1997/04**

(73) Patentinhaber: **Ciba Specialty Chemicals Holding Inc.**
**4057 Basel (CH)**

(72) Erfinder: **Gugumus, François, Dr.**
**4123 Allschwill (CH)**

(56) Entgegenhaltungen:
**EP-A- 0 309 402**
**EP-A- 0 345 220**
**US-A- 4 957 953**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 754 723 B1

Printed by Jouve, 75001 PARIS (FR)

## Beschreibung

Die vorliegende Erfindung betrifft ein Stabilisatorsystem enthaltend zwei spezifische Polyalkylpiperidinderivate, die Verwendung dieses Stabilisatorsystems zum Stabilisieren von organischem Material sowie das mit dem erwähnten Stabilisatorsystem gegen thermischen, oxidativen oder lichtinduzierten Abbau geschützte organische Material.

In US-A-4 692 486, US-A-4 863 981, US-A-4 957 953, US-A-5 021 485, US-A-5 439 959, WO-A-92/12 201, WO-A-94/22 946, EP-A-449 685, EP-A-632 092, GB-A-2 267 499 und in der Research Disclosure 34 549 (Januar 1993) werden einige Stabilisatorgemische beschrieben, welche zwei Polyalkylpiperidinderivate enthalten.

Ein Gegenstand der vorliegenden Erfindung ist ein Stabilisatorgemisch enthaltend mindestens zwei unterschiedliche Verbindungen aus der Gruppe der Komponenten a), b), c), d), e), f), g), h), i), j), k) und l), wobei

die Komponente a) mindestens eine Verbindung der Formel I ist,

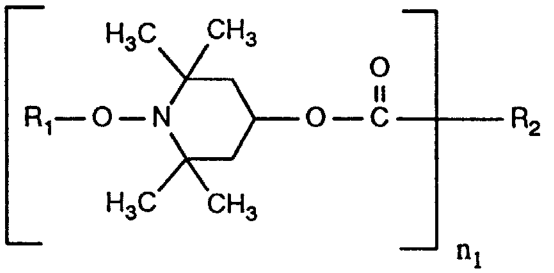

(I)

worin

$R_1$ Wasserstoff, $C_1$-$C_{18}$-Alkyl, $C_5$-$C_{12}$-Cycloalkyl oder durch $C_1$-$C_4$-Alkyl substituiertes $C_5$-$C_{12}$-Cycloalkyl ist,
$n_1$ 1, 2 oder 4 bedeutet,
wenn $n_1$ 1 ist, $R_2$ $C_1$-$C_{25}$-Alkyl darstellt,
wenn $n_1$ 2 ist, $R_2$ $C_1$-$C_{14}$-Alkylen bedeutet und
wenn $n_1$ 4 ist, $R_2$ $C_4$-$C_{10}$-Alkantetrayl darstellt;

die Komponente b) mindestens eine Verbindung der Formel II ist,

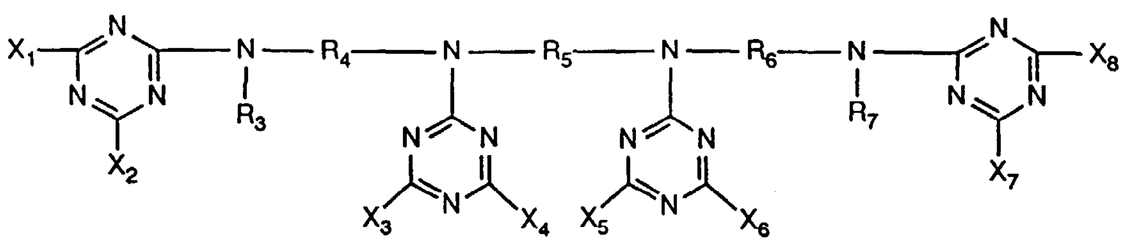

(II)

worin

$R_3$ und $R_7$ unabhängig voneinander Wasserstoff oder $C_1$-$C_{12}$-Alkyl darstellen,
$R_4$, $R_5$ und $R_6$ unabhängig voneinander $C_2$-$C_{10}$-Alkylen sind und
$X_1$, $X_2$, $X_3$, $X_4$, $X_5$, $X_6$, $X_7$ und $X_8$ unabhängig voneinander eine Gruppe der Formel III bedeuten,

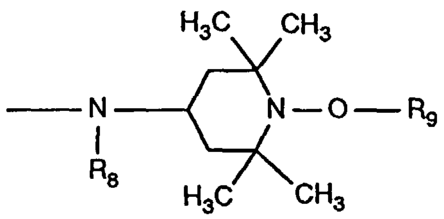

(III)

worin $R_8$ Wasserstoff, $C_1$-$C_{12}$-Alkyl, $C_5$-$C_{12}$-Cycloalkyl, durch $C_1$-$C_4$-Alkyl substituiertes $C_5$-$C_{12}$-Cycloalkyl, Phenyl, durch -OH und/oder $C_1$-$C_{10}$-Alkyl substituiertes Phenyl, $C_7$-$C_9$-Phenylalkyl, am Phenylrest durch -OH und/oder $C_1$-$C_{10}$-Alkyl substituiertes $C_7$-$C_9$-Phenylalkyl oder eine Gruppe der Formel IV bedeutet und

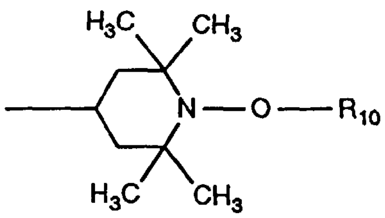

(IV)

$R_9$ und $R_{10}$ unabhängig voneinander eine der für $R_1$ angegebenen Bedeutungen besitzen;

die Komponente c) mindestens eine Verbindung der Formel V ist,

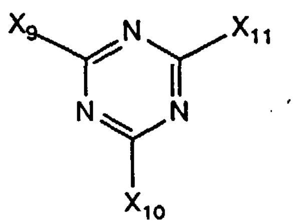

(V)

worin

$X_9$, $X_{10}$ und $X_{11}$ unabhängig voneinander eine Gruppe der Formel III bedeuten;

die Komponente d) mindestens eine Verbindung der Formel VI ist,

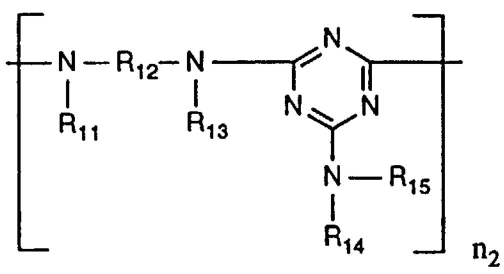

(VI)

worin

$R_{11}$, $R_{13}$, $R_{14}$ und $R_{15}$ unabhängig voneinander Wasserstoff, $C_1$-$C_{12}$-Alkyl, $C_5$-$C_{12}$-Cycloalkyl, durch $C_1$-$C_4$-Alkyl substituiertes $C_5$-$C_{12}$-Cycloalkyl, Phenyl, durch -OH und/oder $C_1$-$C_{10}$-Alkyl substituiertes Phenyl, $C_7$-$C_9$-Phenylalkyl, am Phenylrest durch -OH und/oder $C_1$-$C_{10}$-Alkyl substituiertes $C_7$-$C_9$-Phenylalkyl oder eine Gruppe der Formel IV bedeuten,

$R_{12}$ $C_2$-$C_{18}$-Alkylen, $C_5$-$C_7$-Cycloalkylen oder $C_1$-$C_4$-Alkylendi($C_5$-$C_7$-cycloalkylen) ist oder

die Reste $R_{11}$, $R_{12}$ und $R_{13}$ zusammen mit den Stickstoffatomen, an die sie gebunden sind, einen 5- bis 10-gliedrigen heterocyclischen Ring bilden oder

$R_{14}$ und $R_{15}$ zusammen mit dem Stickstoffatom, an das sie gebunden sind, einen 5- bis 10-gliedrigen heterocyclischen Ring bilden,

$n_2$ eine Zahl von 2 bis 50 ist und

mindestens einer der Reste $R_{11}$, $R_{13}$, $R_{14}$ und $R_{15}$ eine Gruppe der Formel IV darstellt;
die Komponente e) mindestens eine Verbindung der Formel VII ist,

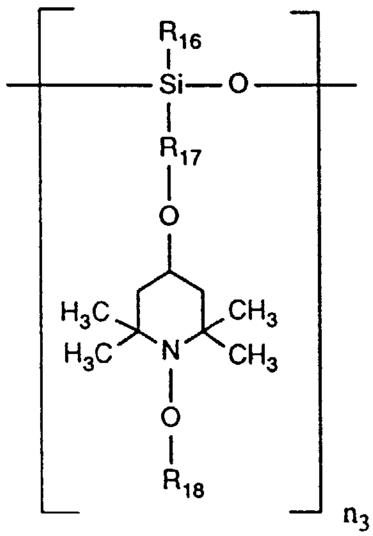

(VII)

worin

$R_{16}$ $C_1$-$C_{10}$-Alkyl, $C_5$-$C_{12}$-Cycloalkyl, durch $C_1$-$C_4$-Alkyl substituiertes $C_5$-$C_{12}$-Cycloalkyl, Phenyl oder durch $C_1$-$C_{10}$-Alkyl substituiertes Phenyl ist,

$R_{17}$ $C_3$-$C_{10}$-Alkylen darstellt,

$R_{18}$ eine der für $R_1$ angegebenen Bedeutungen besitzt und

$n_3$ eine Zahl von 1 bis 50 bedeutet;

die Komponente f) ein Produkt bedeutet, erhältlich durch Umsetzung eines durch Reaktion eines Polyamins der Formel VIIIa mit Cyanursäurechlorid erhaltenen Produktes mit einer Verbindung der Formel VIIIb zu einem 2,2,6,6-Tetramethyl-4-piperidylgruppen enthaltenden Triazinderivat und anschliessender Umsetzung der im Triazinderivat enthaltenen 2,2,6,6-Tetramethyl-4-piperidylgruppen zu Gruppen der Formel VIIIc,

$$H_2N-(CH_2)_{n_4'}-NH-(CH_2)_{n_4''}-NH-(CH_2)_{n_4'''}-NH_2 \qquad \text{(VIIIa)}$$

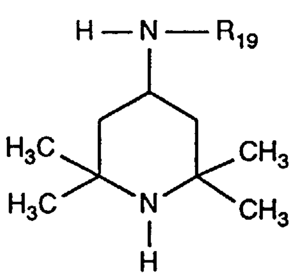

(VIIIb)

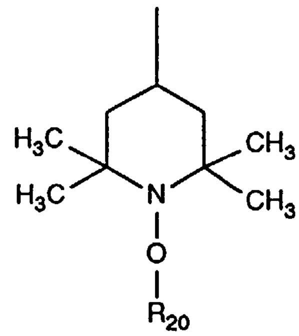

(VIIIc)

worin

$n_4'$, $n_4''$ und $n_4'''$ unabhängig voneinander eine Zahl von 2 bis 12 sind,
$R_{19}$ Wasserstoff, $C_1$-$C_{12}$-Alkyl, $C_5$-$C_{12}$-Cycloalkyl, Phenyl oder $C_7$-$C_9$-Phenylalkyl ist und
$R_{20}$ eine der für $R_1$ angegebenen Bedeutungen besitzt;

die Komponente g) mindestens eine Verbindung der Formel IX ist,

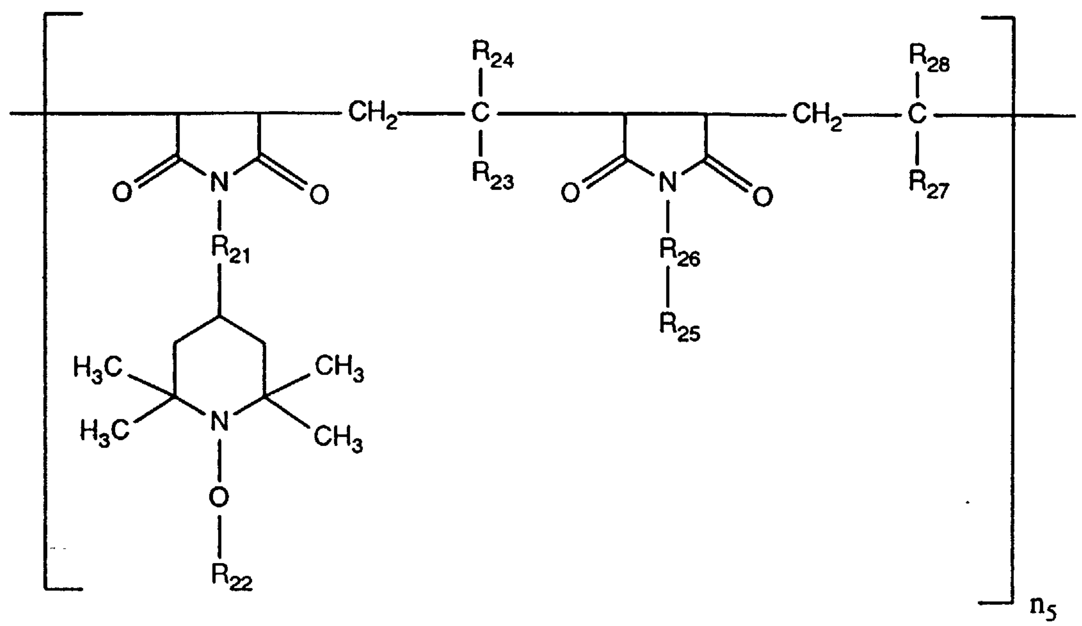

(IX)

worin

$R_{21}$ und $R_{26}$ unabhängig voneinander eine direkte Bindung oder eine Gruppe -N($Y_1$)-CO-$Y_2$-CO-N($Y_3$)- bedeuten, $Y_1$ und $Y_3$ unabhängig voneinander Wasserstoff,
$C_1$-$C_8$-Alkyl, $C_5$-$C_{12}$-Cycloalkyl, Phenyl, $C_7$-$C_9$-Phenylalkyl oder eine Gruppe der Formel IV sind, $Y_2$ eine direkte Bindung oder $C_1$-$C_4$-Alkylen darstellt,
$R_{22}$ eine der für $R_1$ angegebenen Bedeutungen besitzt,
$R_{23}$, $R_{24}$, $R_{27}$ und $R_{28}$ unabhängig voneinander Wasserstoff, $C_1$-$C_{30}$-Alkyl, $C_5$-$C_{12}$-Cycloalkyl oder Phenyl bedeuten,
$R_{25}$ Wasserstoff, $C_1$-$C_{30}$-Alkyl, $C_5$-$C_{12}$-Cycloalkyl, Phenyl, $C_7$-$C_9$-Phenylalkyl oder eine Gruppe der Formel IV darstellt und
$n_5$ eine Zahl von 1 bis 50 ist;

die Komponente h) mindestens eine Verbindung der Formel X ist,

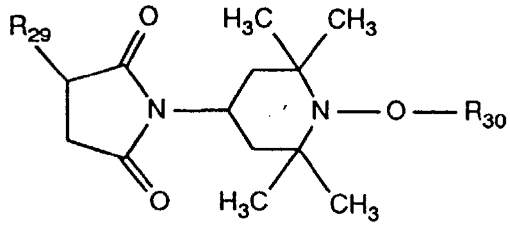

(X)

worin

$R_{29}$ $C_1$-$C_{24}$-Alkyl ist und
$R_{30}$ eine der für $R_1$ angegebenen Bedeutungen besitzt;

die Komponente i) mindestens eine Verbindung der Formel XI ist,

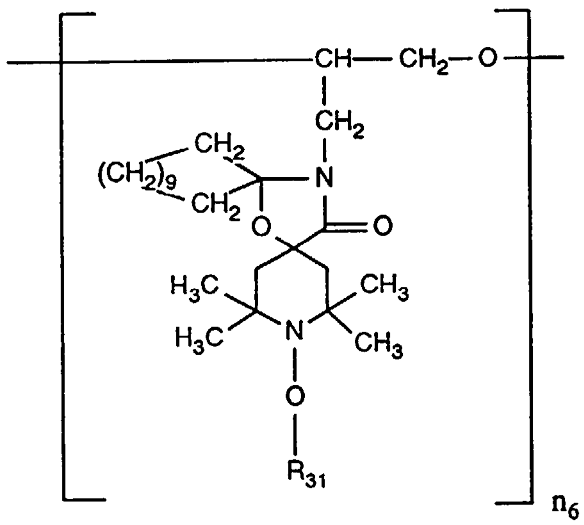

(XI)

worin

$R_{31}$ eine der für $R_1$ angegebenen Bedeutungen hat und
$n_6$ eine Zahl von 2 bis 50 ist;

die Komponente j) mindestens eine Verbindung der Formel XII ist,

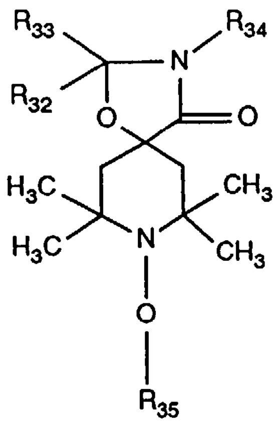

(XII)

worin

$R_{32}$ und $R_{33}$ zusammen $C_2$-$C_{14}$-Alkylen bilden,
$R_{34}$ Wasserstoff oder eine Gruppe -$Z_1$-COO-$Z_2$ bedeutet, $Z_1$ $C_2$-$C_{14}$-Alkylen ist und $Z_2$ $C_1$-$C_{24}$-Alkyl bedeutet und
$R_{35}$ eine der für $R_1$ angegebenen Bedeutungen hat;

die Komponente k) mindestens eine Verbindung der Formel XIII ist,

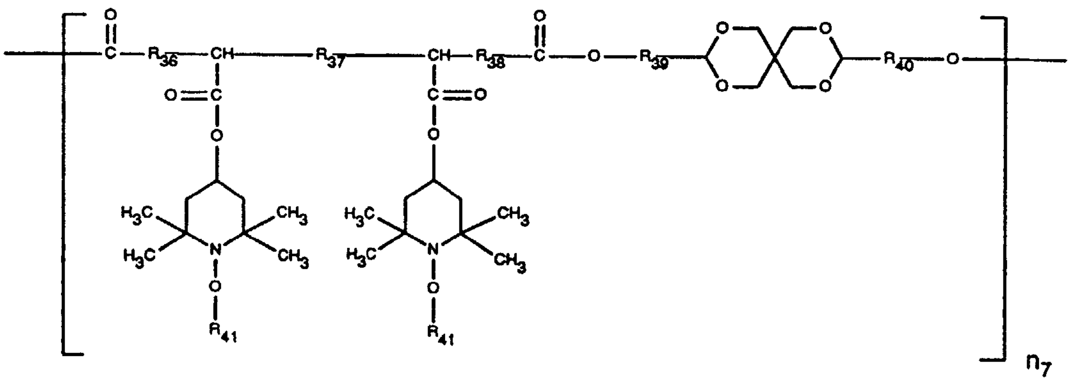

(XIII)

worin

$R_{36}$, $R_{37}$, $R_{38}$, $R_{39}$ und $R_{40}$ unabhängig voneinander eine direkte Bindung oder $C_1$-$C_{10}$-Alkylen sind,
$R_{41}$ eine der für $R_1$ angegebenen Bedeutungen besitzt und
$n_7$ eine Zahl von 1 bis 50 darstellt;

die Komponente 1) mindestens eine Verbindung der Formel XIV ist,

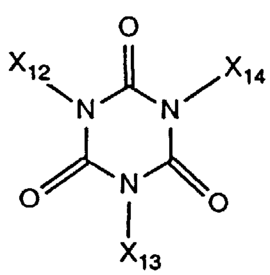

(XIV)

worin

$X_{12}$, $X_{13}$ und $X_{14}$ unabhängig voneinander eine Gruppe der Formel XV darstellen,

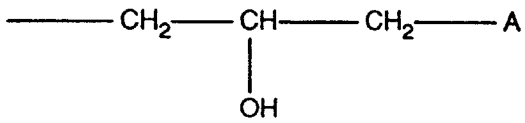

(XV)

worin A eine Gruppe der Formel III bedeutet.

Beispiele für Alkyl mit bis zu 30 Kohlenstoffatomen sind Methyl, Ethyl, Propyl, Isopropyl, n-Butyl, sec-Butyl, Isobutyl, tert-Butyl, 2-Ethylbutyl, n-Pentyl, Isopentyl, 1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl, 1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl, Eicosyl, Docosyl und Triacontyl. Eine der bevorzugten Bedeutungen von $R_{23}$ und $R_{27}$ ist $C_1$-$C_{25}$-Alkyl, insbesondere $C_{15}$-$C_{25}$-Alkyl, z.B. Hexadecyl und $C_{18}$-$C_{22}$-Alkyl. Eine der bevorzugten Bedeutungen von $R_{25}$ ist $C_1$-$C_{25}$-Alkyl, insbesondere Octadecyl. Eine der bevorzugten Bedeutungen von $R_8$ und $R_{19}$ ist $C_1$-$C_4$-Alkyl, insbesondere n-Butyl.

Beispiele für $C_5$-$C_{12}$-Cycloalkyl sind Cyclopentyl, Cyclohexyl, Cycloheptyl, Cyclooctyl und Cyclododecyl. $C_5$-$C_8$-Cycloalkyl, insbesondere Cyclohexyl ist bevorzugt

Durch $C_1$-$C_4$-Alkyl substituiertes $C_5$-$C_{12}$-Cycloalkyl bedeutet zum Beispiel Methylcyclohexyl oder Dimethylcyclohexyl.

Durch -OH und/oder $C_1$-$C_{10}$-Alkyl substituiertes Phenyl bedeutet zum Beispiel Methylphenyl, Dimethylphenyl, Trimethylphenyl, tert-Butylphenyl oder 3,5-Di-tert-butyl-4-hydroxyphenyl.

Beispiele für $C_7$-$C_9$-Phenylalkyl sind Benzyl und Phenylethyl.

Am Phenylrest durch -OH und/oder durch Alkyl mit bis zu 10 Kohlenstoffatomen substituiertes $C_7$-$C_9$-Phenylalkyl bedeutet zum Beispiel Methylbenzyl, Dimethylbenzyl, Trimethylbenzyl, tert-Butylbenzyl oder 3,5-Di-tert-butyl-4-hydroxybenzyl.

Beispiele für $C_3$-$C_6$-Alkenyl sind Allyl, 2-Methallyl, Butenyl, Pentenyl und Hexenyl. Allyl ist bevorzugt. Das Kohlenstoffatom in der Stellung 1 ist bevorzugt gesättigt.

$C_1$-$C_8$-Acyl bedeutet bevorzugt $C_1$-$C_8$-Alkanoyl, $C_3$-$C_8$-Alkenoyl oder Benzoyl. Beispiele sind Formyl, Acetyl, Propionyl, Butyryl, Pentanoyl, Hexanoyl, Octanoyl, Benzoyl, Acryloyl und Crotonoyl.

Beispiele für Alkylen mit bis zu 18 Kohlenstoffatomen sind Methylen, Ethylen, Propylen, Trimethylen, Tetramethylen, Pentamethylen, 2,2-Dimethyltrimethylen, Hexamethylen, Trimethylhexamethylen, Octamethylen und Decamethylen. $R_{12}$ bedeutet bevorzugt Hexamethylen, $R_{36}$ und $R_{38}$ bedeuten bevorzugt Methylen, $R_{39}$ bedeutet bevorzugt 2,2-Dimethylethylen und $R_{40}$ 1,1-Dimethylethylen.

Ein Beispiel für $C_4$-$C_{10}$-Alkantetrayl ist 1,2,3,4-Butantetrayl.

Ein Beispiel für $C_5$-$C_7$-Cycloalkylen ist Cyclohexylen.

Ein Beispiel für $C_1$-$C_4$-Alkylendi($C_5$-$C_7$-cycloalkylen) ist Methylendicyclohexylen.

Bilden die Reste $R_{11}$, $R_{12}$ und $R_{13}$ zusammen mit den Stickstoffatomen, an die sie gebunden sind, einen 5- bis 10-gliedrigen heterocyclischen Ring, so handelt es sich beispielsweise um

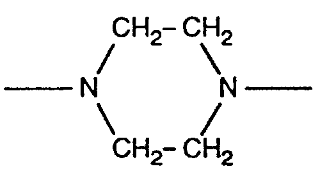 , 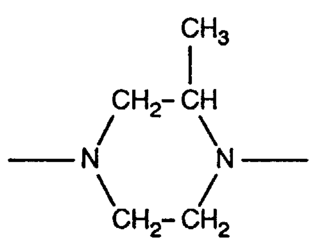 oder 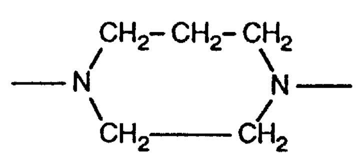 .

Ein 6-gliedriger heterocyclischer Ring ist bevorzugt.

Bilden die Reste $R_{14}$ und $R_{15}$ zusammen mit dem Stickstoffatom, an das sie gebunden sind, einen 5- bis 10-gliedrigen heterocyclischen Ring, so handelt es sich beispielsweise um 1-Pyrrolidyl, Piperidino, Morpholino, 1-Piperazinyl, 4-Methyl-1-piperazinyl, 1-Hexahydroazepinyl, 5,5,7-Trimethyl-1-homopiperazinyl oder 4,5,5,7-Tetramethyl-1-homopiperazinyl. Morpholino ist besonders bevorzugt.

Eine der bevorzugten Bedeutungen von $R_{23}$ und $R_{27}$ ist Phenyl.
$Y_2$ und $R_{37}$ sind bevorzugt eine direkte Bindung.
Eine der bevorzugten Bedeutungen von $Y_1$ und $Y_3$ ist Wasserstoff.

$n_2$ bedeutet bevorzugt 2-25.
$n_3$ bedeutet bevorzugt 1-25, insbesondere 2-20 oder 2-10.
$n_4'$, $n_4''$ und $n_4'''$ bedeuten bevorzugt 2-4.
$n_5$ bedeutet bevorzugt 1-25, insbesondere 1-20 oder 1-10.
$n_6$ bedeutet bevorzugt 2-25 insbesondere 2-20 oder 2-10.
$n_7$ bedeutet bevorzugt 1-25, insbesondere 1-20 oder 1-10.

Die als Komponenten a) bis l) beschriebenen Verbindungen können zum Beispiel nach der unten unter "Beispiel für ein Herstellungsverfahren" angegebenen Methode unter Verwendung der entsprechenden 2,2,6,6-Tetramethylpiperidinderivate (unsubstituierter Stickstoff in den 2,2,6,6-Tetramethyl-4-piperidylgruppen) als Ausgangsverbindungen hergestellt werden. Die 2,2,6,6-Tetramethylpiperidinderivate sind im wesentlichen bekannt (teilweise im Handel erhältlich) und können nach bekannten Verfahren, zum Beispiel wie in US-A-3 640 928, US-A-4 108 829, US-A-3 925 376, US-A-4 086 204, US-A4 331 586, US-A-5 051 458, US-A-4 477 615 und Chemical Abstracts - CAS No. 136 504-96-6, US-A-4 857 595, DD-A-262 439 (Derwent 89-122 983/17, Chemical Abstracts 111:58 964u), WO-A-94/12 544 (Derwent 94-177 274/22), US-A-4 356 307, US-A-4 340 534, US-A-4 408 051, US-A-4 689 416, US-A-4 110 334, US-A-4 529 760 und US-A-5 182 390 (Chemical Abstracts - CAS No. 144 923-25-1) beschrieben, hergestellt werden.
Das zur Komponente f) gehörende 2,2,6,6-Tetramethylpiperidinderivat-Ausgangsprodukt kann in Analogie zu bekannten Verfahren zum Beispiel durch Umsetzung von einem Polyamin der Formel VIIIa mit Cyanursäurechlorid in einem molaren Verhältnis von 1:2 bis 1:4 in Gegenwart von wasserfreiem Lithium-, Natrium- oder Kalium-carbonat in einem organischen Lösungsmittel wie 1,2-Dichlorethan, Toluol, Xylol, Benzol, Dioxan oder tert-Amylalkohol bei einer Temperatur von -20°C bis +10°C, bevorzugt -10°C bis +10°C, insbesondere 0°C bis +10°C, während 2 bis 8 Stunden und anschliessender Reaktion des erhaltenen Produktes mit einem 2,2,6,6-Tetramethyl-4-piperidylamin der Formel VIIIb hergestellt werden. Das molare Verhältnis von 2,2,6,6-Tetramethyl-4-piperidylamin zu eingesetztem Polyamin der Formel VIIIa beträgt beispielsweise 4:1 bis 8:1. Die Menge an 2,2,6,6-Tetramethyl-4-piperidylamin kann auf einmal oder in mehreren Portionen im Abstand von einigen Stunden zugegeben werden.
Bevorzugt beträgt das Verhältnis Polyamin der Formel VIIIa : Cyanursäurechlorid : 2,2,6,6-Tetramethyl-4-piperidylamin der Formel VIIIb 1:3:5 bis 1:3:6.
Folgendes Beispiel gibt eine Möglichkeit für die Herstellung des bevorzugten zur Komponente f) gehörenden 2,2,6,6-Tetramethylpiperidinderivat-Ausgangsprodukts an.

Beispiel: 23,6g (0,128 Mol) Cyanursäurechlorid, 7,43 g (0,0426 Mol)

N,N'-Bis[3-aminopropyl]ethylendiamin und 18 g (0,13 Mol) wasserfreies Kaliumcarbonat werden in 250 ml 1,2-Dichlorethan bei 5°C unter Rühren während 3 Stunden umgesetzt. Die Mischung wird weitere 4 Stunden auf Raumtemperatur erwärmt. 27,2 g (0,128 Mol) N-(2,2,6,6-tetramethyl-4-piperidyl)butylamin werden hinzugegeben und das erhaltene Gemisch 2 Stunden auf 60°C erwärmt. Es werden nochmals 18 g (0,13 Mol) wasserfreies Kaliumcarbonat hinzugegeben und das Gemisch weitere 6 Stunden bei 60°C erwärmt. Das Lösungsmittel wird unter leichtem Vakuum (200 mbar) abdestilliert und durch Xylen ersetzt. 18,2 g (0,085 Mol) N-(2,2,6,6-tetramethyl-4-piperidyl)butylamin und 5,2 g (0,13 Mol) Natriumhydroxid (ground sodium hydroxide) werden hinzugefügt und das Gemisch am Rückfluss 2 Stunden erhitzt und weitere 12 Stunden wird das bei der Reaktion entstehende Wasser durch azeotrope Destillation entfernt. Das Gemisch wird filtriert. Die Lösung wird mit Wasser gewaschen und über $Na_2SO_4$ getrocknet Das Lösungsmittel wird verdunstet und der Rückstand bei 120-130°C im Vakuum (0,1 mbar) getrocknet. Das zur Komponente f) gehörende 2,2,6,6-Tetramethylpiperidinderivat-Ausgangsprodukt wird als farbloses Harz erhalten.
Allgemein kann das zur Komponente f) gehörende 2,2,6,6-Tetramethylpiperidinderivat-Ausgangsprodukt zum Beispiel durch eine Verbindung der Formel VIII-1, VIII-2 oder VIII-3 wiedergegeben werden. Es kann auch als Gemisch dieser drei Verbindungen vorliegen.

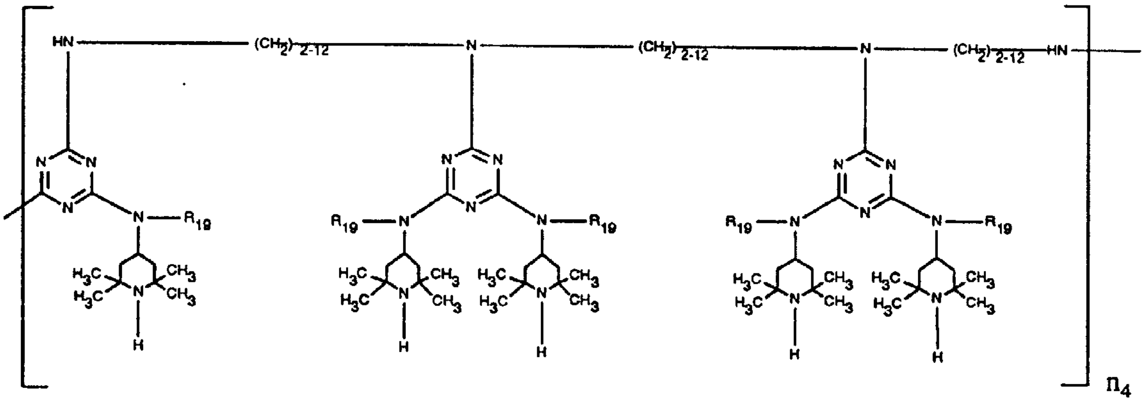

(VIII-1)

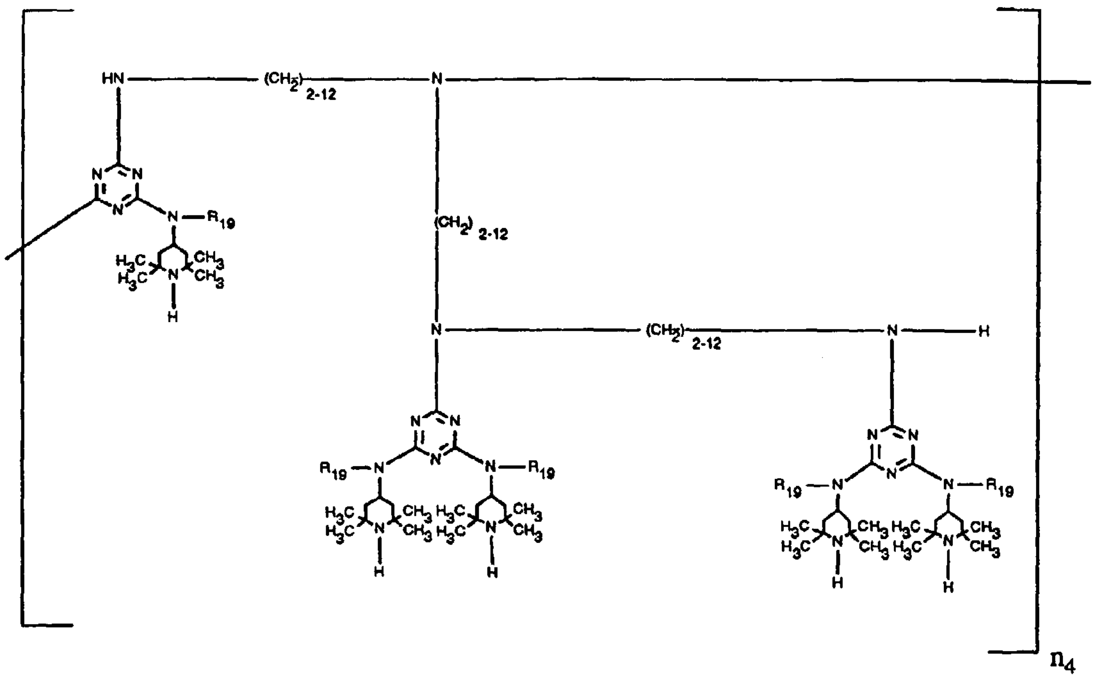

(VIII-2)

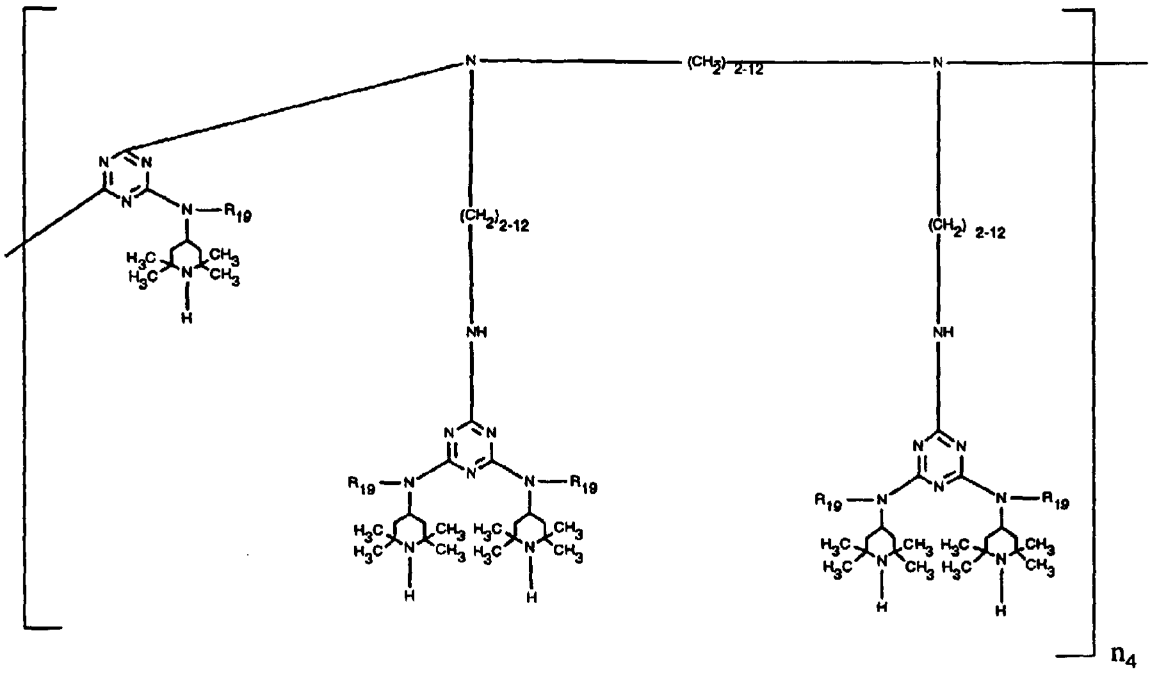

(VIII-3)

Eine bevorzugte Bedeutung der Formel VIII-1 ist

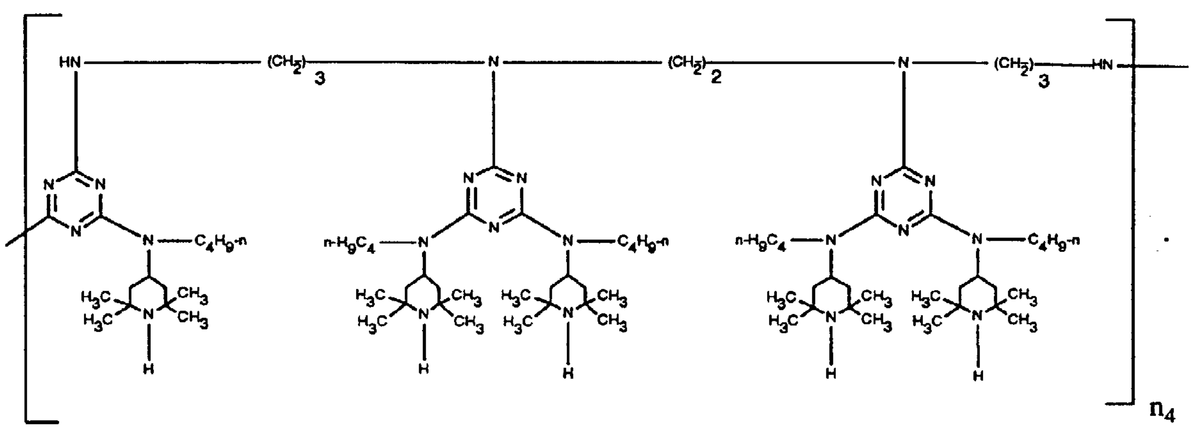

Eine bevorzugte Bedeutung der Formel VIII-2 ist

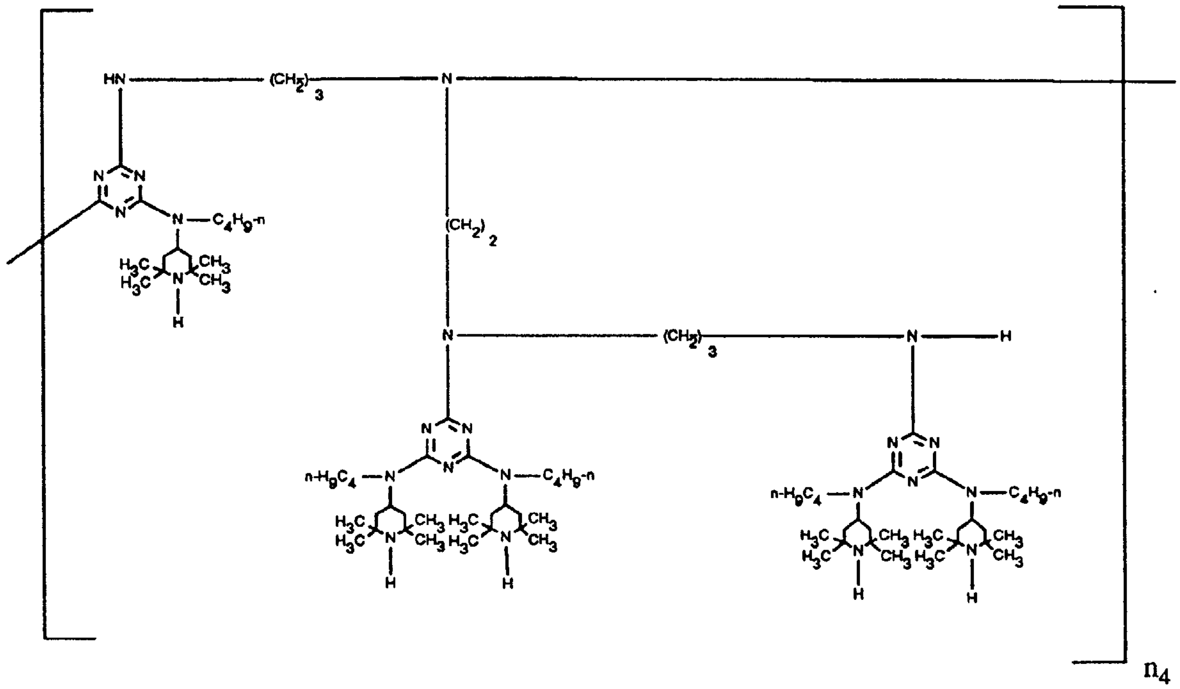

Eine bevorzugte Bedeutung der Formel VIII-3 ist

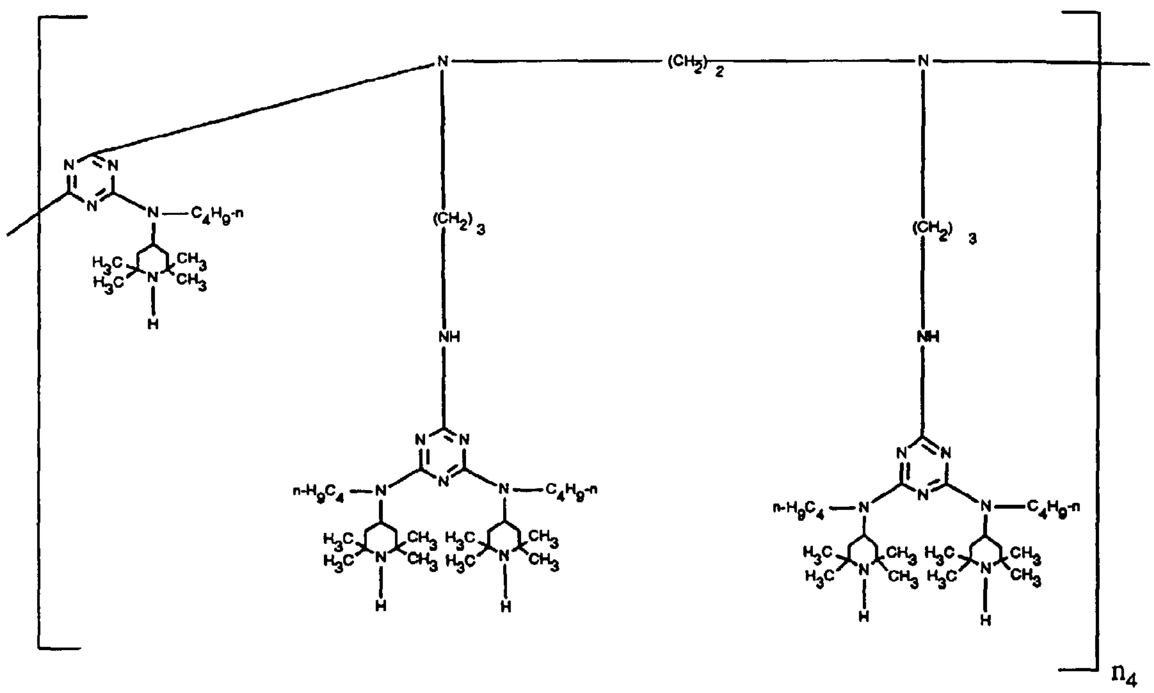

In den oben angegebenen Formeln VIII-1 bis VIII-3 bedeutet $n_4$ bevorzugt 1 bis 20.

Beispiel für ein Herstellungsverfahren

Die als Komponenten a) bis 1) beschriebenen Verbindungen können aus den oben angegebenen 2,2,6,6-Tetramethylpiperidinderivat-Ausgangsprodukten in Analogie zu bekannten Verfahren, zum Beispiel wie in US-A-5 204 473 offenbart, hergestellt werden, indem man das entsprechende 2,2,6,6-Tetramethylpiperidinderivat mit einer geeigneten Peroxyverbindung, wie Wasserstoffperoxid oder tert-Butylhydroperoxid, in Gegenwart eines Metallcarbonyl- oder Metalloxid-Katalysators oxidiert, woran sich die Reduktion des gebildeten Oxyl-Zwischenprodukts zu dem gewünschten N-Hydroxyderivat, vorzugsweise durch katalytische Hydrierung, anschliesst.

Hiernach können die O-Alkylderivate über verschiedene Wege synthetisiert werden. Beispielsweise kann das N-Hydroxyderivat mit Natriumhydrid und halogenierten Kohlenwasserstoffen, wie Ethyljodid, alkyliert werden. N-Methoxy-Varianten können durch Thermolyse einer Chlorbenzollösung des Nitroxylradikals und von Di-tert-butylperoxid hergestellt werden. Das Produkt wird durch Kupplungsreaktion zwischen dem Nitroxylradikal und dem aus der β-Spaltung eines tert-Butoxyradikals erzeugten Methylradikals gebildet

Andere N-Alkoxy-Varianten können durch Kupplung von Nitroxylradikalen mit Kohlenwasserstoffradikalen synthetisiert werden, die bei der thermischen Zersetzung von Di-tert-butylperoxid in Gegenwart von Kohlenwasserstoff-Lösungsmitteln, wie Cyclohexan, Toluol und Ethylbenzol, gebildet werden.

Obgleich diese Verfahrensweisen im Hinblick auf N-Alkoxy-Substituenten beschrieben wurden, versteht es sich, dass sie gleichermassen auf sämtliche $OR_1$-Gruppen anwendbar sind.

So können beispielsweise 1-Cycloalkyloxy-2,2,6,6-tetramethylpiperidin-4-ylderivate durch Umsetzung des entsprechenden 2,2,6,6-Tetramethylpiperidin-4-ylderivats mit tert-Butylhydroperoxid in Gegenwart von $MoO_3$ und einem Cycloalkan hergestellt werden.

Allgemein kann die Komponente f) zum Beispiel auch durch eine Verbindung der Formel VIII-1, VIII-2 oder VIII-3 wiedergegeben werden, worin die Wasserstoffreste an den Stickstoffatomen der 2,2,6,6-Tetramethylpiperidin-4-ylreste durch Gruppen $-OR_{20}$ ersetzt sind. Sie kann auch als Gemisch dieser drei Verbindungen vorliegen.

Das als Komponente f) beschriebene Produkt ist zum Beispiel auch erhältlich durch Umsetzung eines durch Reaktion eines Polyamins der Formel VIIIa mit Cyanursäurechlorid erhaltenen Produktes mit einer Verbindung der Formel VIIId,

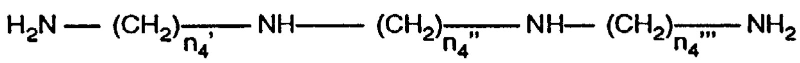

(VIIIa)

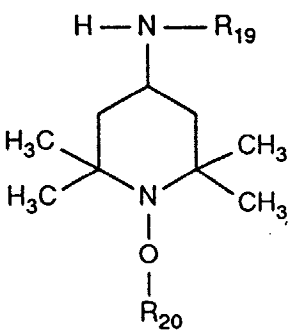

(VIIId)

worin

$n_4'$, $n_4''$ und $n_4'''$ unabhängig voneinander eine Zahl von 2 bis 12 sind,
$R_{19}$ Wasserstoff, $C_1$-$C_{12}$-Alkyl, $C_5$-$C_{12}$-Cycloalkyl, Phenyl oder $C_7$-$C_9$-Phenylalkyl ist und
$R_{20}$ eine der für $R_1$ angegebenen Bedeutungen besitzt.

Die Umsetzung kann beispielsweise in Analogie zu dem in US-A-4 477 615 beschriebenen Herstellungsverfahren erfolgen.

Als Komponente a) wird besonders bevorzugt ®TINUVIN 123 eingesetzt. Als Ausgangsprodukt für die Herstellung einer Verbindung der Komponente a) wird auch bevorzugt ®MARK LA 57 oder ®DASTIB 845, als Ausgangsprodukt für die Herstellung einer Verbindung der Komponente b) eine Vorstufe von ®CHIMASSORB 119 (unsubstituierter Stickstoff in den 2,2,6,6-Tetramethyl-4-piperidylgruppen), als Ausgangsprodukt für die Herstellung einer Verbindung der Komponente d) ®CHIMASSORB 944, ®CYASORB UV 3346 oder ®DASTIB 1082, als Ausgangsprodukt für die Herstellung einer Verbindung der Komponente e) ®UVASIL 299 oder ®UVASIL 125, als Ausgangsprodukt für die Herstellung einer Verbindung der Komponente f) ®UVASORB HA 88, als Ausgangsprodukt für die Herstellung einer Verbindung der Komponente g) ®UVINUL 5050 H, ®LICHTSCHUTZSTOFF UV 31 oder ®LUCHEM HA-B 18, als

Ausgangsprodukt für die Herstellung einer Verbindung der Komponente h) ®LICHTSCHUTZMITTEL S95, als Ausgangsprodukt für die Herstellung einer Verbindung der Komponente i) ®HOSTAVIN N 30, als Ausgangsprodukt für die Herstellung einer Verbindung der Komponente j) ®HOSTAVIN N20 oder ®SANDUVOR 3050 und als Ausgangsprodukt für die Herstellung einer Verbindung der Komponente k) ®MARK LA 68 eingesetzt.

Die Bedeutungen der Endgruppen, die in den Verbindungen der Formeln VI, VII, VIII-1, VIII-2, VIII-3, IX, XI und XIII die freien Valenzen absättigen, sind abhängig von den zur Herstellung benutzten Verfahren. Die Endgruppen können auch nach der Herstellung der Verbindungen noch modifiziert werden.

Erfolgt die Herstellung der Verbindungen der Formel VI durch Umsetzung einer Verbindung der Formel

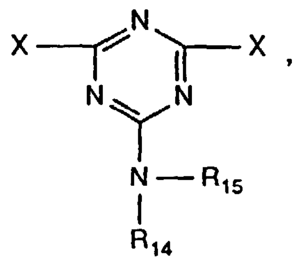

worin X beispielsweise Halogen, insbesondere Chlor, bedeutet und $R_{14}$ und $R_{15}$ die oben angegebenen Definitionen besitzen, mit einer Verbindung der Formel

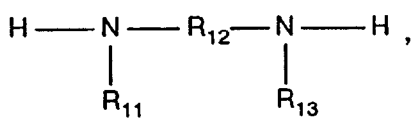

worin $R_{11}$, $R_{12}$ und $R_{13}$ die oben angegebenen Bedeutungen haben, so ist die Endgruppe, die an den Diaminorest gebunden ist, Wasserstoff oder

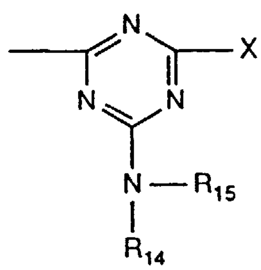

und die Endgruppe, die an den Triazinrest gebunden ist, X oder

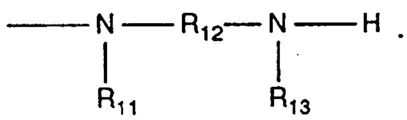

Bedeutet X ein Halogen, so ist es vorteilhaft, dieses nach beendeter Umsetzung z.B. durch -OH oder eine Aminogruppe auszutauschen. Als Beispiele für Aminogruppen seien genannt: Pyrrolidin-1-yl, Morpholino, $-NH_2$, $-N(C_1-C_8\text{-Alkyl})_2$ und $-NR(C_1-C_8\text{-Alkyl})$, worin R Wasserstoff oder eine Gruppe der Formel IV ist.

In den Verbindungen der Formel VII kann die Endgruppe, die an das Siliciumatom gebunden ist, zum Beispiel $(R_{16})_3Si\text{-}O\text{-}$ und die Endgruppe, die an den Sauerstoff gebunden ist, zum Beispiel $-Si(R_{16})_3$ bedeuten.

Die Verbindungen der Formel VII können auch als ringförmige Verbindungen vorliegen, wenn $n_3$ eine Zahl von 3 bis 10 ist, d.h. die in den Strukturformeln dargestellten freien Valenzen bilden dann eine direkte Bindung.

In den Verbindungen der Formel VIII-1, VIII-2 und VIII-3 ist die Endgruppe, die an den Triazinrest gebunden

ist, zum Beispiel Cl oder eine Gruppe

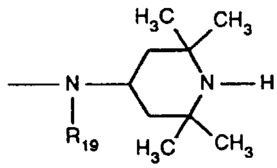

und die Endgruppe, die an den Aminorest gebunden ist, zum Beispiel Wasserstoff oder eine Gruppe

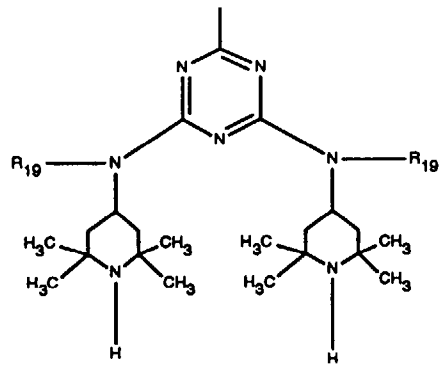

.

In den Verbindungen der Formel IX ist die Endgruppe, die an den 2,5-Dioxopyrrolidinring gebunden ist, z.B. Wasserstoff und die Endgruppe, die an den Rest -C($R_{27}$)($R_{28}$)-gebunden ist, z.B.

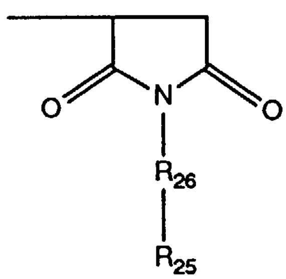

oder

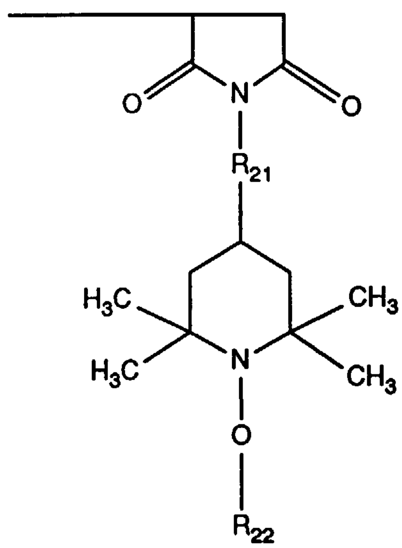

.

In den Verbindungen der Formel XI kann die Endgruppe, die an den Dimethylenrest gebunden ist, z.B. -OH bedeuten und die Endgruppe, die an den Sauerstoff gebunden ist, kann z.B. Wasserstoff sein. Die Endgruppen können auch Polyetherreste darstellen.

In den Verbindungen der Formel XIII ist die Endgruppe, die an den Carbonylrest gebunden ist, z.B.

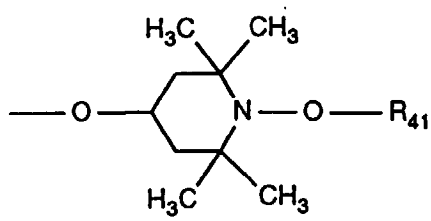

und die Endgruppe, die an den Sauerstoffrest gebunden ist, bedeutet z.B.

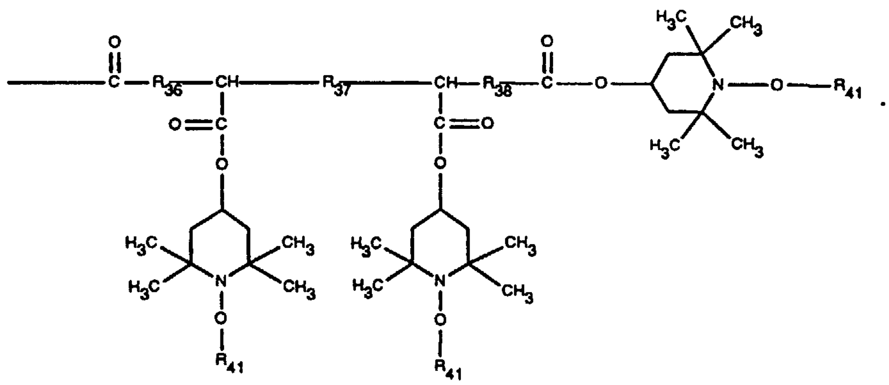

Bevorzugt ist ein Stabilisatorgemisch, worin $R_1$, $R_9$, $R_{10}$, $R_{18}$, $R_{20}$, $R_{22}$, $R_{30}$, $R_{31}$, $R_{35}$ und $R_{41}$ unabhängig voneinander $C_1$-$C_{12}$-Alkyl, $C_5$-$C_8$-Cycloalkyl oder durch Methyl substituiertes $C_5$-$C_8$-Cycloalkyl sind.
Ebenfalls bevorzugt ist ein Stabilisatorgemisch, worin $R_1$, $R_9$, $R_{10}$, $R_{18}$, $R_{20}$, $R_{22}$, $R_{30}$, $R_{31}$, $R_{35}$ und $R_{41}$ unabhängig voneinander Methyl, Octyl oder Cyclohexyl sind.
Folgende Stabilisatorgemische seien als Beispiele genannt:

1. Stabilisatorgemisch enthaltend mindestens eine Verbindung aus der Komponente a) und mindestens eine Verbindung aus der Komponente b), c), d), e), f), g), h), i), j), k) oder l),
2. Stabilisatorgemisch enthaltend mindestens eine Verbindung aus der Komponente b) und mindestens eine Verbindung aus der Komponente c), d), e), f), g), h), i), j), k) oder l),
3. Stabilisatorgemisch enthaltend mindestens eine Verbindung aus der Komponente c) und mindestens eine Verbindung aus der Komponente d), e), f), g), h), i), j), k) oder l),
4. Stabilisatorgemisch enthaltend mindestens eine Verbindung aus der Komponente d) und mindestens eine Verbindung aus der Komponente e), f), g), h), i), j), k) oder l),
5. Stabilisatorgemisch enthaltend mindestens eine Verbindung aus der Komponente e) und mindestens eine Verbindung aus der Komponente f), g), h), i), j), k) oder l),
6. Stabilisatorgemisch enthaltend mindestens eine Verbindung aus der Komponente f) und mindestens eine Verbindung aus der Komponente g), h), i), j), k) oder l),
7. Stabilisatorgemisch enthaltend mindestens eine Verbindung aus der Komponente g) und mindestens eine Verbindung aus der Komponente h), i), j), k) oder l),
8. Stabilisatorgemisch enthaltend mindestens eine Verbindung aus der Komponente h) und mindestens eine Verbindung aus der Komponente i), j), k) oder 1),
9. Stabilisatorgemisch enthaltend mindestens eine Verbindung aus der Komponente i) und mindestens eine Verbindung aus der Komponente j), k) oder l),
10. Stabilisatorgemisch enthaltend mindestens eine Verbindung aus der Komponente j) und mindestens eine Verbindung aus der Komponente k) oder l),
11. Stabilisatorgemisch enthaltend mindestens eine Verbindung aus der Komponente k) und mindestens eine Verbindung aus der Komponente 1),
12. Stabilisatorgemisch enthaltend mindestens zwei verschiedene Verbindungen aus der Komponente a),
13. Stabilisatorgemisch enthaltend mindestens zwei verschiedene Verbindungen aus der Komponente b),
14. Stabilisatorgemisch enthaltend mindestens zwei verschiedene Verbindungen aus der Komponente c),
15. Stabilisatorgemisch enthaltend mindestens zwei verschiedene Verbindungen aus der Komponente d),
16. Stabilisatorgemisch enthaltend mindestens zwei verschiedene Verbindungen aus der Komponente e),

17. Stabilisatorgemisch enthaltend mindestens zwei verschiedene Verbindungen aus der Komponente f),
18. Stabilisatorgemisch enthaltend mindestens zwei verschiedene Verbindungen aus der Komponente g),
19. Stabilisatorgemisch enthaltend mindestens zwei verschiedene Verbindungen aus der Komponente h),
20. Stabilisatorgemisch enthaltend mindestens zwei verschiedene Verbindungen aus der Komponente i),
21. Stabilisatorgemisch enthaltend mindestens zwei verschiedene Verbindungen aus der Komponente j),
22. Stabilisatorgemisch enthaltend mindestens zwei verschiedene Verbindungen aus der Komponente k) und
23. Stabilisatorgemisch enthaltend mindestens zwei verschiedene Verbindungen aus der Komponente 1).

Folgende Stabilisatorgemische sind bevorzugt:

A. Stabilisatorgemisch enthaltend mindestens eine Verbindung aus der Komponente a) und mindestens eine Verbindung aus der Komponente b), c), d), e), f), g), h), i), j), k) oder 1),
B. Stabilisatorgemisch enthaltend mindestens eine Verbindung aus der Komponente a) und mindestens eine Verbindung aus der Komponente b), c), d), e), f), g), h) oder j),
C. Stabilisatorgemisch enthaltend mindestens eine Verbindung aus der Komponente b) und mindestens eine Verbindung aus der Komponente d), e), f), g) oder k) und
D. Stabilisatorgemisch enthaltend mindestens eine Verbindung aus der Komponente c) und mindestens eine Verbindung aus der Komponente a), b), d), e), f), g), h) oder j).

Bevorzugt ist auch ein Stabilisatorgemisch,

worin $n_1$ 1, 2 oder 4 ist,
wenn $n_1$ 1 ist, $R_2$ $C_{10}$-$C_{20}$-Alkyl darstellt,
wenn $n_1$ 2 ist, $R_2$ $C_6$-$C_{10}$-Alkylen bedeutet und
wenn $n_1$ 4 ist, $R_2$ Butantetrayl darstellt;

$R_3$ und $R_7$ unabhängig voneinander Wasserstoff oder $C_1$-$C_4$-Alkyl darstellen,
$R_4$, $R_5$ und $R_6$ unabhängig voneinander $C_2$-$C_6$-Alkylen sind,
$R_8$ Wasserstoff, $C_1$-$C_6$-Alkyl, $C_5$-$C_8$-Cycloalkyl, durch Methyl substituiertes $C_5$-$C_8$-Cycloalkyl, Phenyl, $C_7$-$C_9$-Phenylalkyl oder eine Gruppe der Formel IV bedeutet;

$R_{11}$, $R_{13}$, $R_{14}$ und $R_{15}$ unabhängig voneinander Wasserstoff, $C_1$-$C_8$-Alkyl, $C_5$-$C_8$-Cycloalkyl, durch Methyl substituiertes $C_5$-$C_8$-Cycloalkyl, Phenyl, $C_7$-$C_9$-Phenylalkyl oder eine Gruppe der Formel IV bedeuten oder die Reste $R_{14}$ und $R_{15}$ zusammen mit dem Stickstoffatom, an das sie gebunden sind, einen 6-gliedrigen heterocyclischen Ring bilden,
$R_{12}$ $C_2$-$C_{10}$-Alkylen ist und
$n_2$ eine Zahl von 2 bis 25 ist;

$R_{16}$ $C_1$-$C_4$-Alkyl, $C_5$-$C_8$-Cycloalkyl oder Phenyl ist,
$R_{17}$ $C_3$-$C_6$-Alkylen darstellt und
$n_3$ eine Zahl von 1 bis 25 ist;

$n_4'$, $n_4''$ und $n_4'''$ unabhängig voneinander eine Zahl von 2 bis 4 sind und
$R_{19}$ $C_1$-$C_4$-Alkyl bedeutet;

$R_{21}$ und $R_{26}$ unabhängig voneinander eine direkte Bindung oder eine Gruppe $-N(Y_1)-CO-Y_2-CO-N(Y_3)-$ bedeuten,
$Y_1$ und $Y_3$ unabhängig voneinander Wasserstoff oder $C_1$-$C_4$-Alkyl sind, $Y_2$ eine direkte Bindung ist,
$R_{23}$ und $R_{27}$ $C_1$-$C_{25}$-Alkyl oder Phenyl sind,
$R_{24}$ und $R_{28}$ Wasserstoff oder $C_1$-$C_4$-Alkyl bedeuten,
$R_{25}$ $C_1$-$C_{25}$-Alkyl oder eine Gruppe der Formel IV ist und

$n_5$ eine Zahl von 1 bis 25 ist;

$R_{29}$ $C_8$-$C_{15}$-Alkyl ist;

$n_6$ eine Zahl von 2 bis 25 ist;

$R_{32}$ und $R_{33}$ zusammen $C_8$-$C_{14}$-Alkylen bilden,

$R_{34}$ Wasserstoff oder eine Gruppe $-Z_1-COO-Z_2$ bedeutet, $Z_1$ $C_2$-$C_6$-Alkylen ist und $Z_2$ $C_8$-$C_{15}$-Alkyl bedeutet;

$R_{36}$, $R_{38}$, $R_{39}$ und $R_{40}$ unabhängig voneinander $C_1$-$C_4$-Alkylen sind,
$R_{37}$ eine direkte Bindung ist und
$n_7$ eine Zahl von 1 bis 25 darstellt.

Besonders bevorzugt ist ein Stabilisatorgemisch, worin

die Komponente a) mindestens eine Verbindung der Formel a-I-1, a-I-2 oder a-I-3 ist,

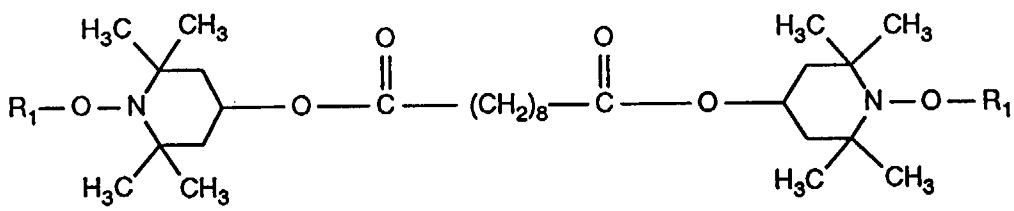

(a-I-1)

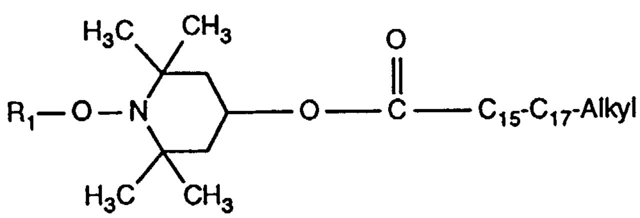

(a-I-2)

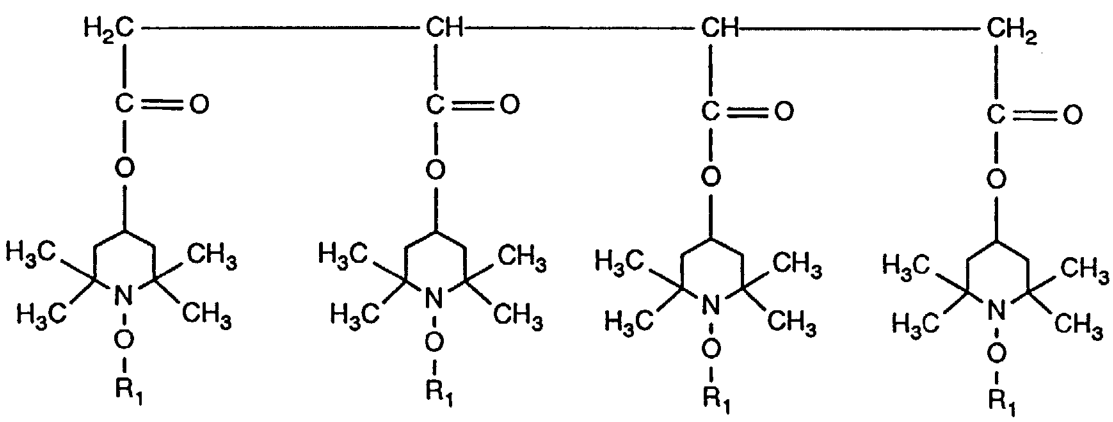

(a-I-3)

wobei

$R_1$ Methyl, Octyl oder Cyclohexyl bedeutet;

die Komponente b) mindestens eine Verbindung der Formel b-II ist,

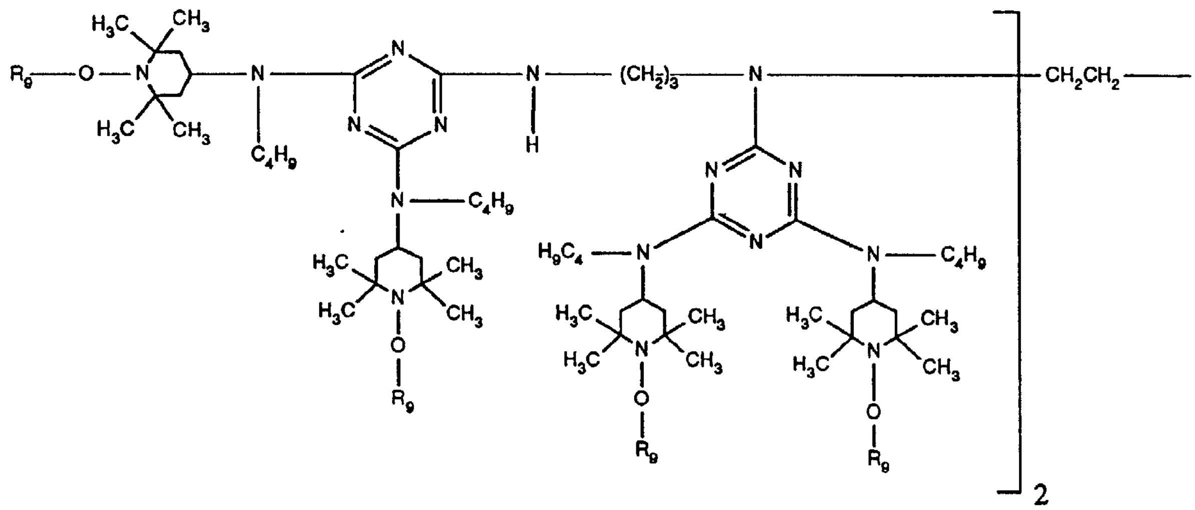

(b-II)

wobei

$R_9$ eine der für $R_1$ angegebenen Bedeutungen hat;

die Komponente c) mindestens eine Verbindung der Formel c-V ist,

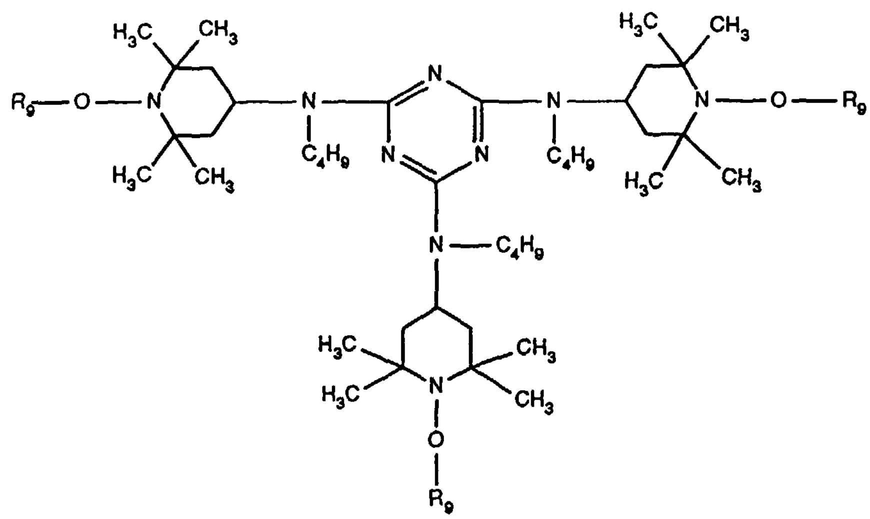

(c-V)

wobei $R_9$ die oben angegebene Bedeutung besitzt;
die Komponente d) mindestens eine Verbindung der Formel d-VI-1, d-VI-2 oder d-VI-3 ist,

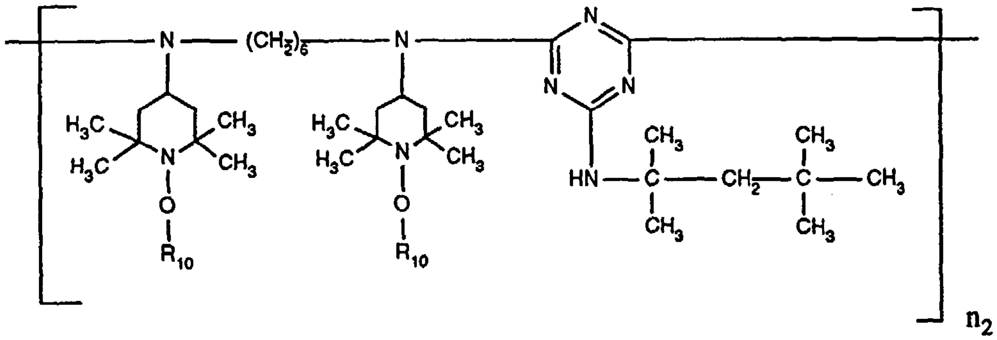

(d-VI-1)

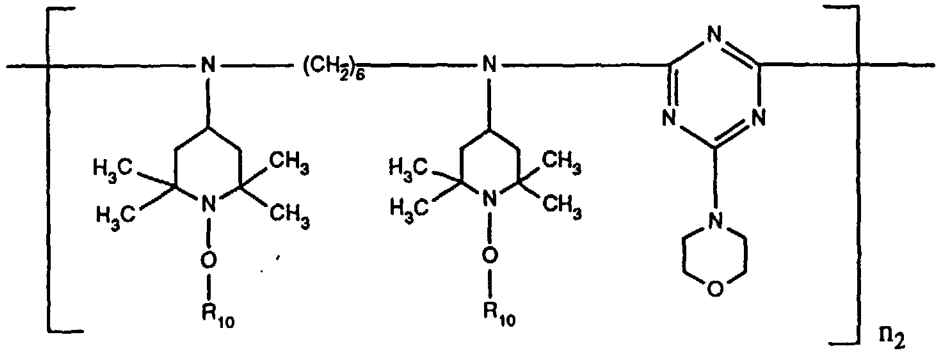

(d-VI-2)

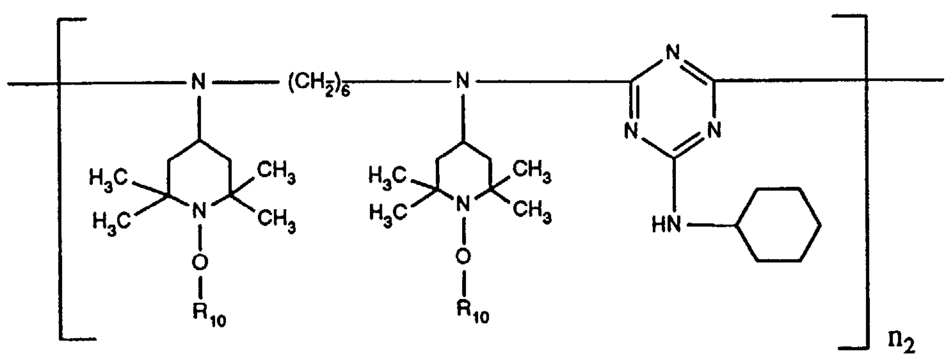

(d-VI-3)

wobei $R_{10}$ eine der für $R_1$ angegebenen Bedeutungen besitzt und $n_2$ eine Zahl von 2 bis 25 ist; die Komponente e) mindestens eine Verbindung der Formel e-VII ist,

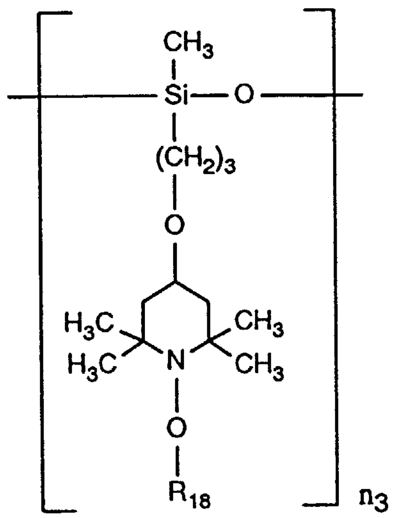

(e-VII)

worin $R_{18}$ eine der für $R_1$ angegebenen Bedeutungen besitzt und $n_3$ eine Zahl von 1 bis 25 ist; die Komponente f) ein Produkt bedeutet, erhältlich durch Umsetzung eines durch Reaktion eines Polyamins der Formel

$$H_2N-(CH_2)_3-NH-(CH_2)_2-NH-(CH_2)_3-NH_2$$

mit Cyanursäurechlorid erhaltenen Produktes mit einer Verbindung der Formel

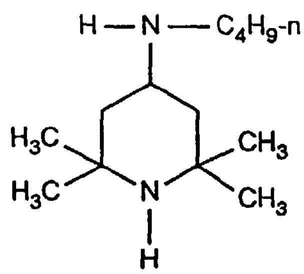

zu einem 2,2,6,6-Tetramethyl-4-piperidylgruppen enthaltenden Triazinderivat und anschliessender Umsetzung der im Triazinderivat enthaltenen 2,2,6,6-Tetramethyl-4-piperidylgruppen zu Gruppen der Formel

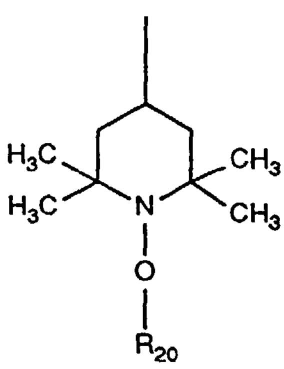

,

wobei

$R_{20}$ eine der für $R_1$ angegebenen Bedeutungen besitzt;

die Komponente g) mindestens eine Verbindung der Formel g-IX-1, g-IX-2 oder g-IX-3 ist,

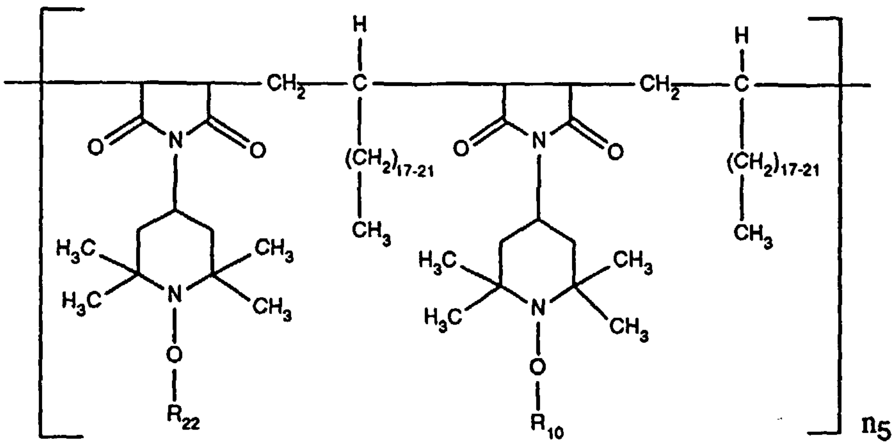

(g-IX-1)

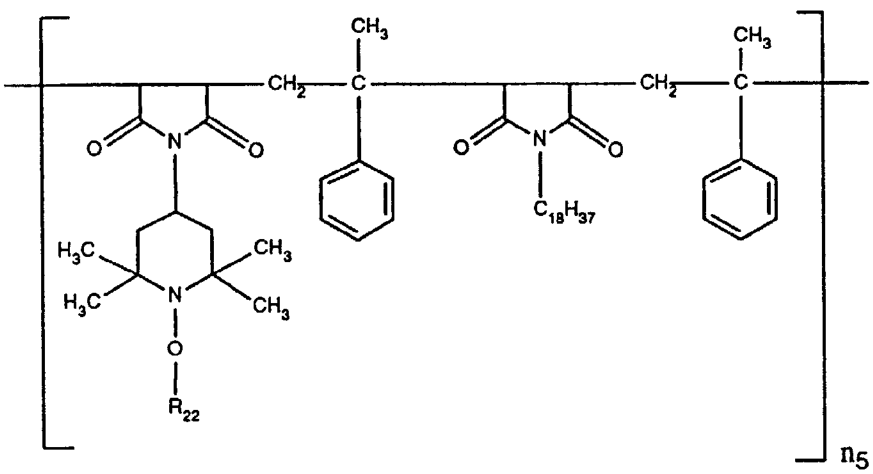

(g-IX-2)

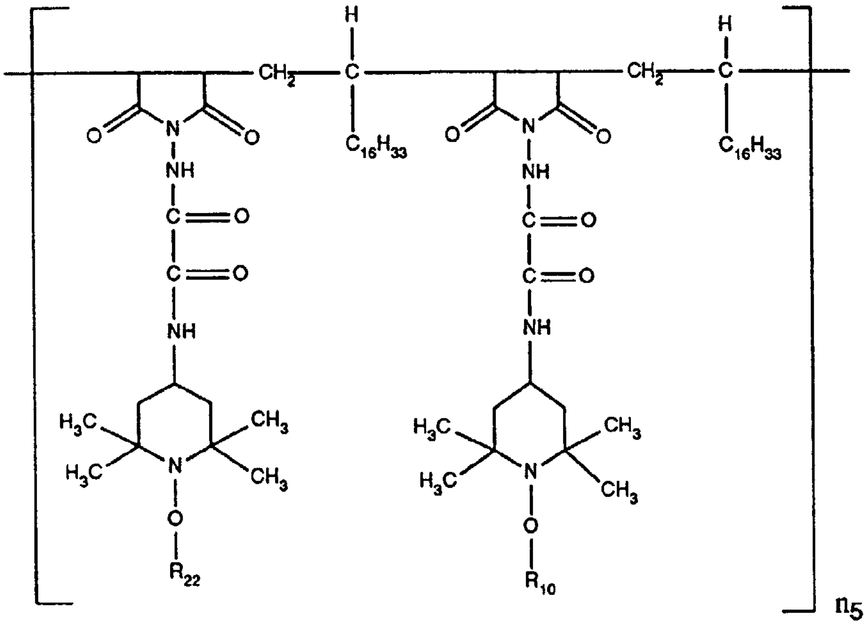

(g-IX-3)

wobei

$R_{10}$ und $R_{22}$ eine der für $R_1$ angegebenen Bedeutungen besitzen und $n_5$ eine Zahl von 1 bis 25 ist;

die Komponente h) mindestens eine Verbindung der Formel h-X ist,

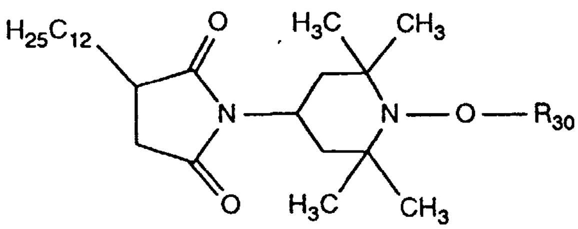

(h-X)

wobei

$R_{30}$ eine der für $R_1$ angegebenen Bedeutungen hat;

die Komponente i) mindestens eine Verbindung der Formel XI ist, worin $R_{31}$ eine der für $R_1$ angegebenen Bedeutungen besitzt und $n_6$ eine Zahl von 2 bis 25 ist;
die Komponente j) mindestens eine Verbindung der Formel j-XII-1 oder j-XII-2 ist,

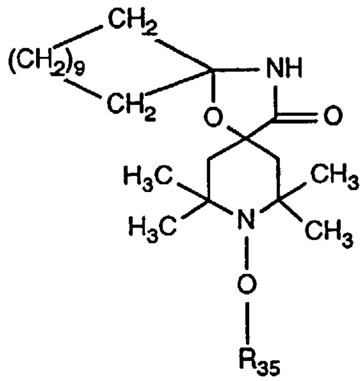

(j-XII-1)

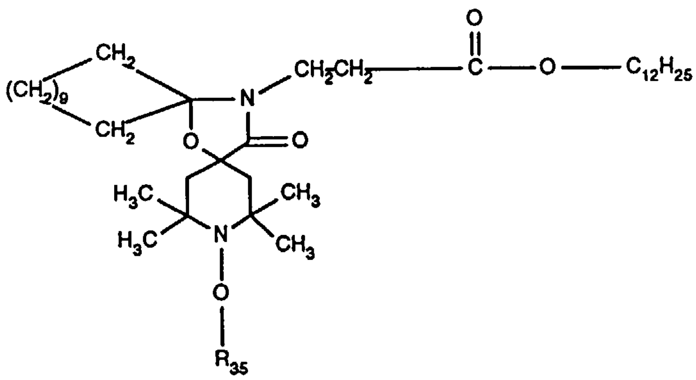

(j-XII-2)

wobei

$R_{35}$ eine der für $R_1$ angegebenen Bedeutungen besitzt;

die Komponente k) mindestens eine Verbindung der Formel k-XIII ist,

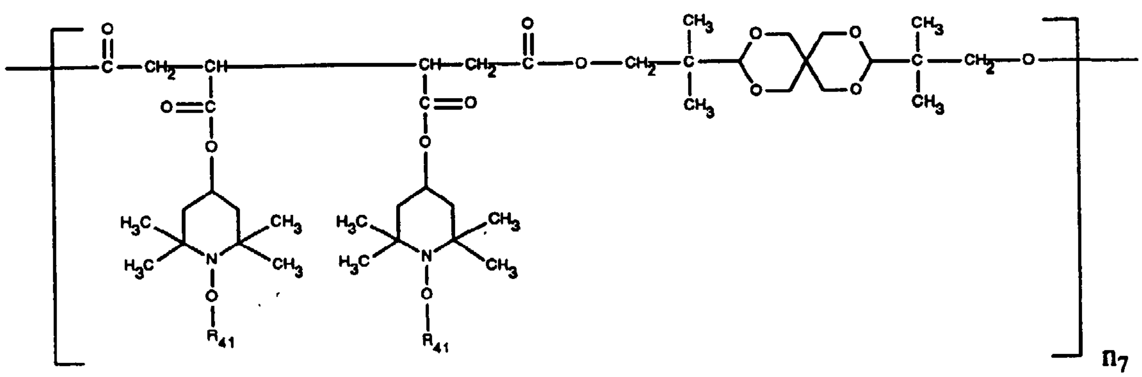

(k-XIII)

wobei

$R_{41}$ eine der für $R_1$ angegebenen Bedeutungen besitzt und $n_7$ eine Zahl von 1 bis 25 darstellt;

die Komponente 1) mindestens eine Verbindung der Formel I-XIV ist,

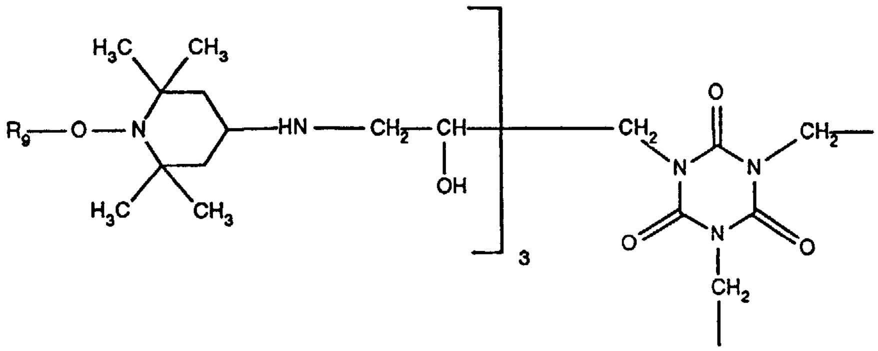

(1-XIV)

wobei $R_9$ eine der für $R_1$ angegebenen Bedeutungen besitzt.

Von besonderem Interesse sind folgende Stabilisatorsysteme:

a-1) Stabilisatorgemisch enthaltend mindestens eine Verbindung der Formel a-I-1 und mindestens eine Verbindung der Formel d-VI-1, worin $R_1$ und $R_{10}$ unabhängig voneinander z.B. Methyl, Octyl oder Cyclohexyl sind und $R_1$ bevorzugt Octyl bedeutet,
a-2) Stabilisatorgemisch enthaltend mindestens eine Verbindung der Formel a-I-1 und mindestens eine Verbindung der Formel b-II, worin $R_1$ und $R_9$ unabhängig voneinander z.B. Methyl, Octyl oder Cyclohexyl sind und $R_1$ bevorzugt Octyl und $R_9$ bevorzugt Cyclohexyl bedeuten,
a-3) Stabilisatorgemisch enthaltend mindestens eine Verbindung der Formel a-I-1 und mindestens eine durch die Komponente f) charakterisierte Verbindung, wobei $R_1$ und $R_{20}$ unabhängig voneinander z.B. Methyl, Octyl oder Cyclohexyl sind und $R_1$ bevorzugt Octyl bedeutet,
a-4) Stabilisatorgemisch enthaltend mindestens eine Verbindung der Formel a-I-1 und mindestens eine Verbindung der Formel d-VI-2, worin $R_1$ und $R_{10}$ unabhängig voneinander z.B. Methyl, Octyl oder Cyclohexyl sind und $R_1$ bevorzugt Octyl bedeutet,
a-5) Stabilisatorgemisch enthaltend mindestens eine Verbindung der Formel a-I-1 und mindestens eine Verbindung der Formel c-V, worin $R_1$ und $R_9$ unabhängig voneinander z.B. Methyl, Octyl oder Cyclohexyl sind und $R_1$ bevorzugt Octyl und $R_9$ bevorzugt Methyl oder Cyclohexyl bedeuten,
a-6) Stabilisatorgemisch enthaltend mindestens eine Verbindung der Formel a-I-1 und mindestens eine Verbindung der Formel e-VII, worin $R_1$ und $R_{18}$ unabhängig voneinander z.B. Methyl, Octyl oder Cyclohexyl sind und $R_1$ bevorzugt Octyl bedeutet,
a-7) Stabilisatorgemisch enthaltend mindestens eine Verbindung der Formel a-I-1 und mindestens eine Verbindung der Formel g-IX-1, worin $R_1$ und $R_{22}$ unabhängig voneinander z.B. Methyl, Octyl oder Cyclohexyl sind und $R_1$ bevorzugt Octyl bedeutet,

b-1) Stabilisatorgemisch enthaltend mindestens eine Verbindung der Formel c-V und mindestens eine Verbindung der Formel d-VI-1, worin $R_9$ und $R_{10}$ unabhängig voneinander z.B. Methyl, Octyl oder Cyclohexyl sind und $R_9$ bevorzugt Methyl oder Cyclohexyl bedeutet,
b-2) Stabilisatorgemisch enthaltend mindestens eine Verbindung der Formel c-V und mindestens eine Verbindung der Formel b-II, worin $R_9$ z.B. Methyl, Octyl oder Cyclohexyl ist und in der Formel c-V bevorzugt Methyl oder Cyclohexyl und in der Formel b-II bevorzugt Cyclohexyl bedeutet,
b-3) Stabilisatorgemisch enthaltend mindestens eine Verbindung der Formel c-V und mindestens eine durch die Komponente f) charakterisierte Verbindung, wobei $R_9$ und $R_{20}$ unabhängig voneinander z.B. Methyl, Octyl oder Cyclohexyl sind und $R_9$ bevorzugt Methyl oder Cyclohexyl bedeutet,
b-4) Stabilisatorgemisch enthaltend mindestens eine Verbindung der Formel c-V und mindestens eine Verbindung der Formel d-VI-2, worin $R_9$ und $R_{10}$ unabhängig voneinander z.B. Methyl, Octyl oder Cyclohexyl sind und $R_9$ bevorzugt Methyl oder Cyclohexyl bedeutet,
b-5) Stabilisatorgemisch enthaltend mindestens eine Verbindung der Formel c-V und mindestens eine Verbindung der Formel e-VII, worin $R_9$ und $R_{18}$ unabhängig voneinander z.B. Methyl, Octyl oder Cyclohexyl sind und $R_9$ bevorzugt Methyl oder Cyclohexyl bedeutet,
b-6) Stabilisatorgemisch enthaltend mindestens eine Verbindung der Formel c-V und mindestens eine Verbindung der Formel g-IX-1, worin $R_9$ und $R_{22}$ unabhängig voneinander z.B. Methyl, Octyl oder Cyclohexyl sind und $R_9$ bevorzugt Methyl oder Cyclohexyl bedeutet,
c-1) Stabilisatorgemisch enthaltend mindestens eine Verbindung der Formel b-II und mindestens eine Verbindung

der Formel a-I-3, worin $R_1$ und $R_9$ unabhängig voneinander z.B. Methyl, Octyl oder Cyclohexyl sind und $R_9$ bevorzugt Cyclohexyl ist,

c-2) Stabilisatorgemisch enthaltend mindestens eine Verbindung der Formel b-II und mindestens eine Verbindung der Formel j-XII-1, worin $R_9$ und $R_{35}$ unabhängig voneinander z.B. Methyl, Octyl oder Cyclohexyl sind und $R_9$ bevorzugt Cyclohexyl ist,

c-3) Stabilisatorgemisch enthaltend mindestens eine Verbindung der Formel b-II und mindestens eine Verbindung der Formel h-X, worin $R_9$ und $R_{30}$ unabhängig voneinander z.B. Methyl, Octyl oder Cyclohexyl sind und $R_9$ bevorzugt Cyclohexyl ist und

c-4) Stabilisatorgemisch enthaltend mindestens eine Verbindung der Formel b-II und mindestens eine Verbindung der Formel a-I-2, worin $R_1$ und $R_9$ unabhängig voneinander z.B. Methyl, Octyl oder Cyclohexyl sind und $R_9$ bevorzugt Cyclohexyl ist

In den oben erwähnten Stabilisatorsystemen liegen die beiden Verbindungen besonders bevorzugt in einem Gewichtsverhältnis von 1:4 bis 4:1 vor.

Das erfindungsgemässe Stabilisatorgemisch eignet sich zum Stabilisieren von organischen Materialien gegen thermischen, oxidativen oder lichtinduzierten Abbau. Beispiele für derartige Materialien sind:

1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).

Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:

a) radikalisch (gewöhnlich bei hohem Druck und hoher Temperatur).

b) mittels Katalysator, wobei der Katalysator gewöhnlich ein oder mehrere Metalle der Gruppe IVb, Vb, VIb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder $\pi$- oder $\sigma$-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.

4. Kohlenwasserstoffharze (z.B. $C_5$-$C_9$) inklusive hydrierte Modifikationen davon (z.B. Klebrigmacherharze) und Mischungen von Polyalkylenen und Stärke.

5. Polystyrol, Poly-(p-methylstyrol), Poly-($\alpha$-methylstyrol).

6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethem, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide, Polyetherimide, Polyesterimide, Polyhydantoine und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z.B. von Epoxyacrylaten,

Urethan-acrylaten oder Polyester-acrylaten.

25. Alkydharze, Polyesterharze und Acrylatharze, die mit Melaminharzen, Harnstoffharzen, Isocyanaten, Isocyanuraten, Polyisocyanaten oder Epoxidharzen vernetzt sind.

26. Vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern wie z.B. Anhydriden oder Aminen mit oder ohne Beschleunigern vernetzt werden.

27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermo-PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

29. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.

30. Wässrige Emulsionen natürlicher oder synthetischer Kautschuke, wie z.B. Naturkautschuk-Latex oder Latices von carboxylierten Styrol-Butadien-Copolymeren.

Ein weiterer Gegenstand der Erfindung ist daher eine Zusammensetzung enthaltend ein gegen oxidativen, thermischen oder lichtinduzierten Abbau empfindliches organisches Material und ein erfindungsgemässes Stabilisatorgemisch.

Bei dem organischen Material handelt es sich vorzugsweise um synthetische Polymere, insbesondere solche aus den oben angegebenen Gruppen. Polyolefine sind bevorzugt und Polyethylen, Polypropylen und deren Copolymere sind besonders bevorzugt.

Die beiden Verbindungen des erfindungsgemässen Stabilisatorsystems können einzeln oder miteinander vermischt dem zu stabilisierenden Material zugesetzt werden. Dabei kann die Gesamtmenge der Verbindungen 0,01 bis 5%, bevorzugt 0,05 bis 3 %, insbesondere 0,05 bis 2 % oder 0,05 bis 1 %, bezogen auf das Gesamtgewicht des zu stabilisierenden Materials, betragen.

Das Gewichtsverhältnis der beiden Verbindungen beträgt bevorzugt 10:1 bis 1:10, beispielsweise 1:5 bis 5: 1 oder 1:4 bis 4:1.

Die Einarbeitung des erfindungsgemässen Stabilisatorgemisches bzw. der Einzelverbindungen in das organische Material kann nach bekannten Methoden erfolgen, beispielsweise vor oder während der Formgebung oder durch Aufbringen der gelösten oder dispergierten Verbindungen auf das organische Material, gegebenenfalls unter nachträglichem Verdunsten des Lösungsmittels. Die einzelnen Verbindungen des erfindungsgemässen Stabilisatorgemisches können als Pulver, Granulat oder auch in Form eines Masterbatches, der diese beispielsweise in einer Konzentration von 2,5 bis 25 Gew.-% enthält, den zu stabilisierenden Materialien zugesetzt werden.

Falls gewünscht, können die Verbindungen des erfindungsgemässen Stabilisatorsystems vor der Einarbeitung in der Schmelze miteinander vermischt werden (melt-blending).

Das erfindungsgemässe Stabilisatorsystem oder dessen Verbindungen können vor oder während der Polymerisation oder vor der Vernetzung zugegeben werden.

Die so stabilisierten Materialien können in verschiedenster Form angewendet werden, z.B. als Folien, Fasern, Bändchen, Formmassen, Profile oder als Bindemittel für Lacke, Klebstoffe oder Kitte.

Die stabilisierten organischen Materialien der Erfindung können zusätzlich auch verschiedene herkömmliche Additive enthalten, wie beispielsweise:

1. Antioxidantien

1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.

1.2. Alkylthiomethylphenole, z.B. 2,4-Di-octylthiomethyl-6-tert-butylphenol, 2,4-Di-octylthiomethyl-6-methyl-

phenol, 2,4-Di-octylthiomethyl-6-ethylphenol, 2,6-Di-dodecylthiomethyl-4-nonylphenol. 1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.

1.4. Tocopherole, z.B. α-Tocopherol, β-Tocopherol, γ-Tocopherol, δ-Tocopherol und Mischungen davon (Vitamin E).

1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis (3,6-di-sec.-aniylphenol), 4,4'-Bis(2,6-dimethyl-4-hydroxyphenyl)-disulfid.

1.6. Alkyliden-Bisphenole, z.B. 2,2'-Methylen-bis(6-tert-butyl-4-methylphenol), 2,2'-Methylen-bis(6-tert-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(α-methylbenzyl)4-nonylphenol] 2,2'-Methylen-bis[6-(α,α-dimethylbenzyl)-4-nonylphenol], 4,4'-Methylen-bis (2,6-di-tert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy2-methylphenyl)-butan, 1,1-Bis(5-tert-butyl-4-hydroxy-2-methyl-phenyl)-3-n-dodecylmercaptobutan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1-Bis(3,5-dimethyl-2-hydroxyphenyl)-butan, 2,2-Bis(3,5-di-tert-butyl-Shydroxyphenyl)-propan, 2,2-Bis(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.

1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-di-tert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.

1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Didodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.

1.9. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)-phenol.

1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris (3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.

1.11. Benzylphosphonate, z.B. Dimethyl-2,5-di-tert -butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.

1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.

1.13. Ester der β-(3,5-Di-tert-butyl-4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol,

1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.14. Esterder β-(5-tert-Butyl-4-hydroxy-3-methylphenyl)-propionsäure mit ein-oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris (hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha2,6,7-trioxabicyclo-[2.2.2] -octan.

1.15. Ester der β-(3,5-Dicyclohexyl-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.16. Ester der 3,5-Di-tert-butyl-4-hvdroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.17. Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis(3,5-di-tert-butyl-4-hydroxyphenylpropionyl)-trimethyl N,N'-Bis(3,5-di-tert-butyl-4-hydroxyphenylpropionyl)-hydrazin.

1.18. Ascorbinsäure (Vitamin C).

1.19. Aminische Antioxidantien, wie z.B. N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(naphthyl-2)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylaminophenol, 4-Dodecanoylamino-phenol, 4-Octadecanoylamino-phenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethylpiperidin-4-on, 2,2,6,6-Tetramethylpiperidin-4-ol.

2. UV-Absorber und Lichtschutzmittel

2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl- 2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, Mischung aus 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl) phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylenbis[4-(1,1,3,3-tetramethylbutyl)-6-benzouiazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; $[R-CH_2CH_2-COO(CH_2)_3\frac{1}{2}$ mit R = 3'-tert-Butyl-4'-hydroxy-5'-2H-benzotriazol-2-yl-phenyl.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis(2,2,6,6-tetramethyl-piperidin-4-yl)-sebacat, Bis(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis(2,2,6,6-Tetramethyl-4-piperidyl)-hexamethylendiamin und 4-tert-Octylamino-2,6-dichlor- 1,3,5-5-triazin, Tris(2,2,6,6-tetramethyl-4-piperidyl)-nitrilotriacetat, Tetrakis (2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl- 1,3,8-triazaspiro[4.5]decan-2,4-dion, Bis(1-octyloxy-2,2,6,6-tetramethylpiperidyl)-sebacat, Bis(1-octyloxy-2,2,6 ,6-tetramethylpiperidyl)-succinat, Kondensationsprodukt aus N,N'-Bis(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis (3-aminopropylamino)-äthan, 8-Acetyl-3-dodecyl-7,7,9,9-tetramethyl- 1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)pyrrolidin-2,5-dion, Gemisch von 4-Hexadecyloxy- und 4-Stearyloxy-2,2,6,6-tetramethylpiperidin, Kondenstionsprodukt aus N,N'-Bis(2,2,6,6-tetramethyl-4-piperidyl)-hexamethylendiamin und 4-Cyclohexylamino-2,6-dichlor-1,3,5-triazin, 1,3,5-triazin, Kondensationsprodukt aus 1,2-Bis(3-aminopropylamino)-ethan und 2,4,6-trichlor-1,3,5-triazin sowie 4-Butylamino2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl- 1-oxa-3,8-diaza-4-oxospiro[4,5]decan und Epichlorhydrin.

2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.

2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin,2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis-(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)1,3,5-triazin, 2-(2-Hydroxy-4-hexyloxy)phenyl-4,6-diphenyl-1,3,5-triazin, 2-(2-Hydroxy4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin.

3. Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, -triazol, Bis(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.

4. Phosphite und Phosphonite, wie z.B. Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-Isooctyloxy-2,4,8,10-tetra-tert-butyl-12H-dibenz[d,g]- 1,3,2-dioxaphosphocin, 6-Fluor-2,4,8,10-tetra-tert-butyl-12-methyl-dibenz[d,g]-1,3,2-dioxaphosphocin, Bis(2,4-di-tert-butyl-6-methylphenyl)-methylphosphit, Bis(2,4-di-tert-butyl-6-methylphenyl)-ethylphosphit.

5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.

6. Nitrone wie z.B. N-Benzyl-alpha-phenyl-nitron, N-Ethyl-alpha-methyl-nitron, N-Octyl-alpha-heptyl-nitron, N-Lauryl-alpha-undecyl-nitron, N-Tetradecyl-alpha-tridecylnitron, N-Hexadecyl-alpha-pentadecyl-nitron, N-Octadecyl-alpha-heptadecyl-nitron, N-Hexadecyl-alpha-heptadecyl-nitron, N-Ocatadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.

7. Thiosynergisten wie z.B. Thiodipropionsäure-di-laurylester oder Thiodipropionsäuredi-stearylester.

8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.

9. Polyamidstabilisatoren, wie z.B. Kupfersalze in Kombination mit Jodiden und/oder Phosphorverbindungen und Salze des zweiwertigen Mangans.

10. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

11. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("Ionomere").

12. Füllstoffe und Verstärkungsmittel, wie z.B. Calciumcarbonat, Silikate, Glasfasern, Glaskugeln, Asbest, Talk, Kaolin, Glimmer, Bariumsulfat, Metalloxide und -hydroxide, Ruß, Graphit, Holzmehl und Mehle oder Fasern anderer Naturprodukte, synthetische Fasern.

13. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.

14. Benzofuranone bzw. Indolinone, wie z.B. in US-A-4 325 863, US-A-4 338 244,

US-A-5 175 312, US-A-5 216 052, US-A-5 252 643, DE-A-4 316 611, DE-A-4 316 622, DE-A4 316 876, EP-A-0 589 839 oder EP-A-0 591 102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]-benzofuran-2-on, 3,3'-Bis[5,7-di-tert-butyl-3-(4-[2-hydroxyethoxy]phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on.

Das Gewichtsverhältnis von erfindungsgemässem Stabilisatorgemisch zu den herkömmlichen Additiven kann beispielsweise 1:0,5 bis 1:5 betragen.

Ein weiterer Gegenstand der Erfindung ist die Verwendung des erfindungsgemässen Stabilisatorgemisches zum Stabilisieren von organischem Material gegen oxidativen, thermischen oder lichtinduzierten Abbau.
Die mit dem erfindungsgemässem Stabilisatorsystem stabilisierten organischen Materialien zeichnen sich nicht nur durch eine wesentlich verbesserte Lichtbeständigkeit sondern auch zum Teil durch eine verbesserte thermische Beständigkeit aus.
Die folgenden Beispiele erläutern die Erfindung weiter. Alle Prozentangaben beziehen sich auf das Gewicht, sofern nichts anderes angegeben ist.

Beispiel A: Herstellung der Verbindung der Formel

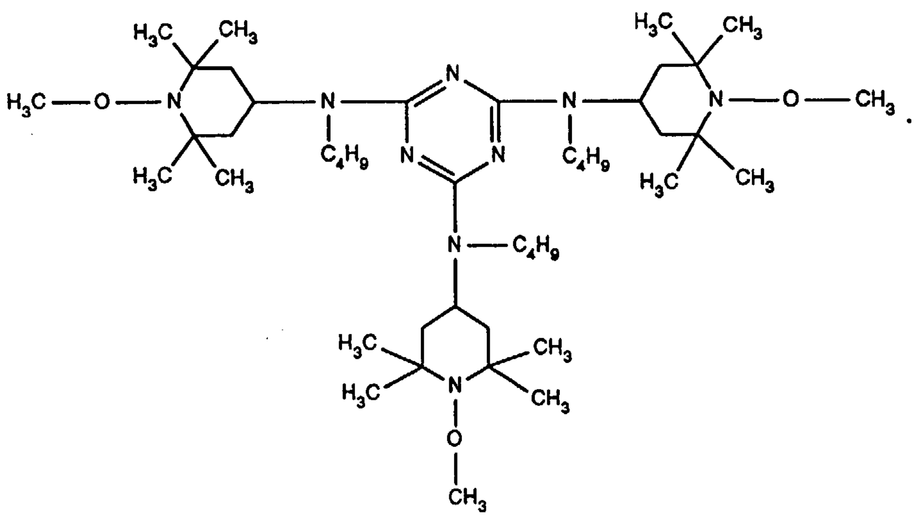

Eine Lösung von 23,6 g (0,098 Mol) 4-n-Butylamino-1-methoxy-2,2,6,6-tetramethylpiperidin in 25 ml Xylen wird tropfenweise zu einer Lösung von 4,09 g (0,0217 Mol) Cyanursäurechlorid in 50 ml Xylen und 6,2 g (0,098 Mol) pulverförmiges KOH gegeben. Das Reaktionsgemisch wird 23 Stunden am Rückfluss erhitzt Anschliessend werden die Feststoffe durch Filtration entfernt und das Filtrat unter vermindertem Druck konzentriert. Das erhaltene Rohprodukt wird durch Kristallisation (Ethanol) gereinigt und es werden 14,3 g (82 % der Theorie) des oben angegebenen Produkts als weisses Pulver erhalten. Der Schmelzpunkt beträgt 151-153°C.

| Elementaranalyse für $C_{45}H_{87}N_9O_3$ | | | |
|---|---|---|---|
| Berechnet: | C, 67,4; | H, 10,9; | N, 15,7 |
| Gefunden: | C, 67,4; | H, 11,3; | N, 15,7 |

Beispiel B: Herstellung der Verbindung der Formel

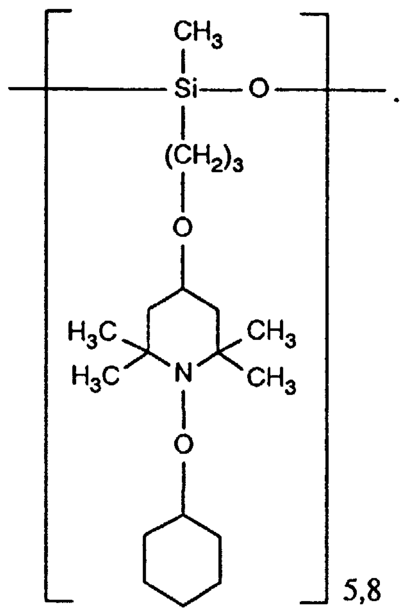

Zu einer Lösung von 24,0 g der Verbindung der Formel

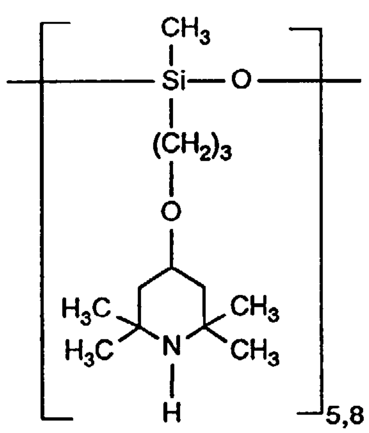

in 200 ml Cyclohexan werden 0,5 g $MoO_3$ gegeben. Die Lösung wird unter Rückfluss erhitzt und 20 ml tert-Butylhydroperoxid (90%) werden innerhalb von 15 Minuten zugegeben. Nach Erhitzen des Reaktionsgemisches unter Rückfluss für 12 Stunden wird der Katalysator durch Filtration entfernt und weitere 0,5 g $MoO_3$ werden zu dem Filtrat gegeben, gefolgt von 20 ml 90 %-igem tert-Butylhydroperoxid. Nach weiterem 12stündigen Erhitzen unter Rückfluss ist die rote Farbe verschwunden. Das Reaktionsgemisch wird mit 5 %-iger wässriger $Na_2SO_3$-Lösung gewaschen bis kein überschüssiges Hydroperoxid mehr vorhanden ist. Die Reaktionslösung wird mit Wasser und Salzlösung gewaschen, über $MgSO_4$ getrocknet und verdunstet Es werden 15 g der oben angegebenen Verbindung als klares viskoses Harz ohne Kristalle erhalten. Die NMR- und MS-Daten stimmen mit der angegebenen Struktur überein.

Beispiel C: Herstellung der Verbindung der Formel

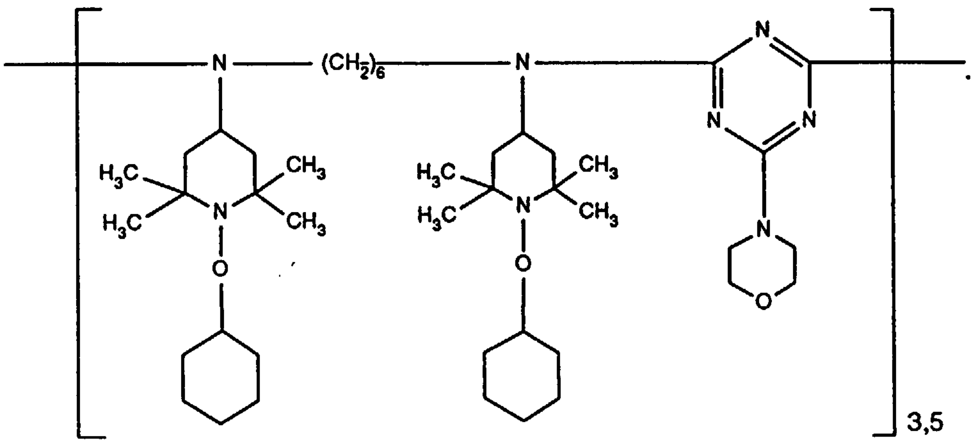

Die Herstellung erfolgt in Analogie zu dem im Beispiel B beschriebenen Verfahren, wobei 31,87 g der Verbindung der Formel

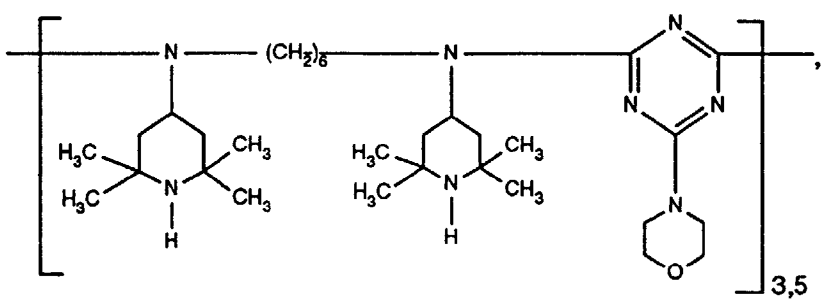

1,0 g $MoO_3$ und 40 ml 90 %-iges tert-Butylhydroperoxid in 600 ml Cyclohexan eingesetzt werden. Es werden 22,2 g der oben angegebenen Verbindung als weisser, glasiger Feststoff erhalten. Der Schmelzpunkt beträgt 135°C. Die NMR- and MS-Daten stimmen mit der angegebenen Struktur überein.

Beispiel D: Herstellung der Verbindung der Formel

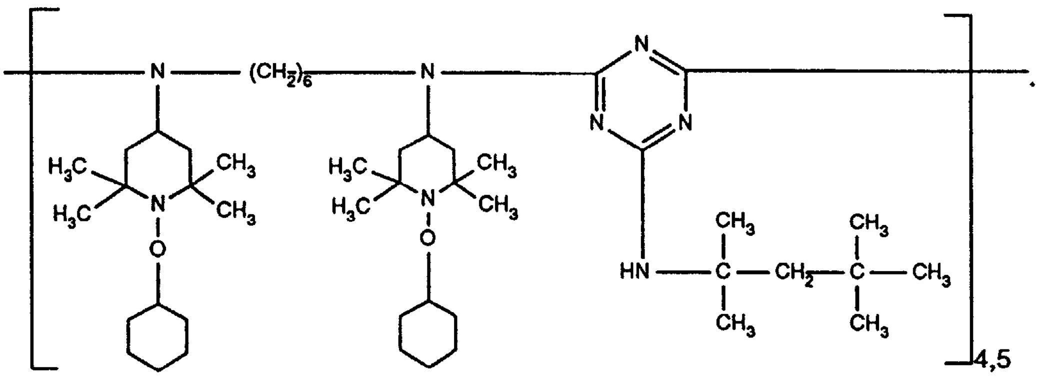

Die Herstellung erfolgt in Analogie zu dem im Beispiel B beschriebenen Verfahren, wobei 25,1 g der Verbindung der Formel

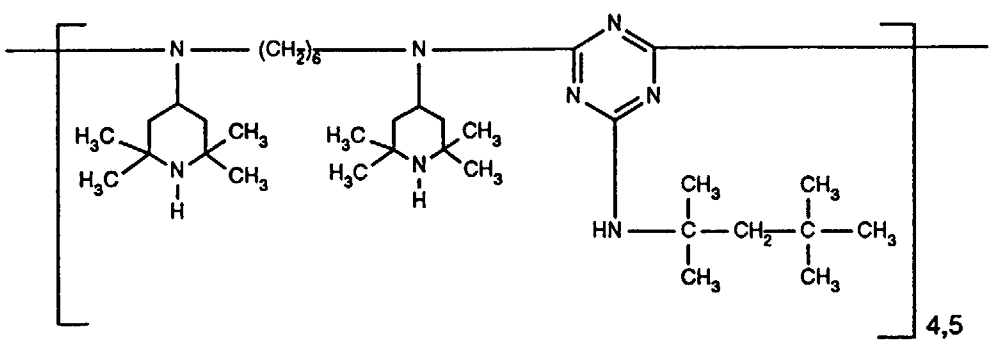

2,0 g $MoO_3$ und 25 ml 90 %-iges tert-Butylhydroperoxid in 500 ml Cyclohexan eingesetzt werden. Es werden 36,5 g der oben angegebenen Verbindung als hellgelber, glasiger Feststoff erhalten. Der Schmelzpunkt beträgt 105-125°C. Die NMR- und MS-Daten stimmen mit der angegebenen Struktur überein.

Beispiel E:

Die Herstellung erfolgt in Analogie zu dem im Beispiel B beschriebenen Verfahren, wobei 25,8 g ®UVASORB HA 88 [eine Verbindung erhältlich durch Umsetzung eines durch Reaktion eines Polyamins der Formel

$$H_2N-(CH_2)_3-NH-(CH_2)_2-NH-(CH_2)_3-NH_2$$

mit Cyanursäurechlorid erhaltenen Produktes mit einer Verbindung der Formel

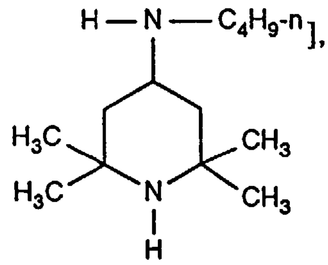

2,0 g $MoO_3$ und 40 ml 70 %-iges tert-Butylhydroperoxid in 500 ml Cyclohexan eingesetzt werden. Es werden 47,7 g einer entsprechenden Verbindung erhalten, welche nun anstelle von 2,2,6,6-Tetramethylpiperidin-4-ylgruppen 1-Cyclohexyloxy-2,2,6,6-tetramethylpiperidin-4-ylgruppen enthält. Die Verbindung liegt als hellgelbes Harz mit einigen weissen Kristallen vor. Der Schmelzpunkt beträgt 135-145°C. Die Sinterung liegt bei 112°C. Die NMR- and MS-Daten stimmen mit der angegebenen Struktur überein.

Beispiel F: Herstellung der Verbindung der Formel

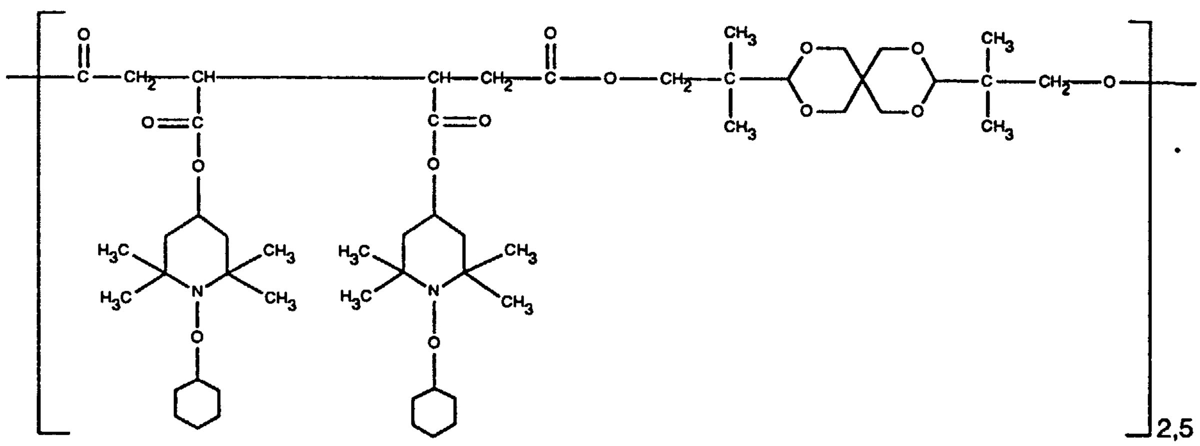

11,0 g (14,5 mMol bezogen auf die wiederkehrende Einheit) der Verbindung der Formel

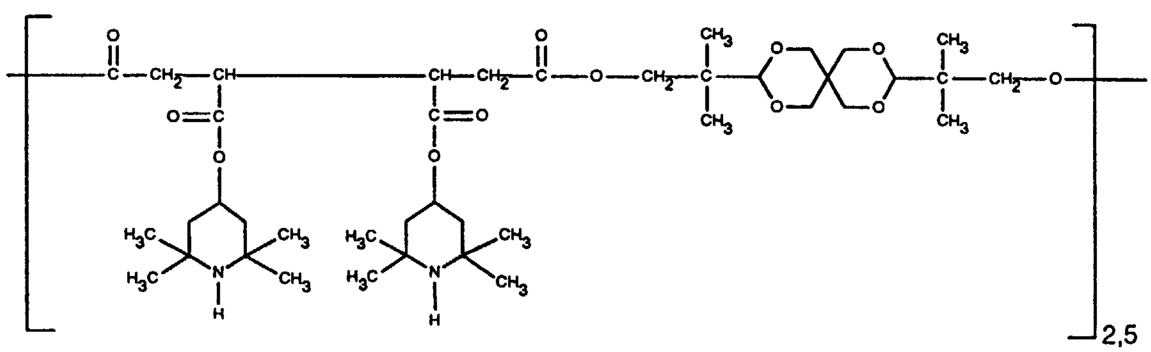

werden in 200 ml Cyclohexan gelöst. 0,1 g $MoO_3$ werden zugegeben und die Mischung wird am Rückfluss erhitzt. 10 g (77,5 mMol) einer 70%-igen (% Gewicht/Gewicht) wässrigen tert-Butylhydroperoxid-Lösung werden bei 80°C langsam zugetropft. Das sich bei der Reaktion bildende Wasser/tert-Butanol Gemisch wird azeotropisch abdestilliert. Die Mischung wird dann 14 Stunden am Rückfluss erhitzt, auf 20-30°C abgekühlt, zu Kohlepulver gegeben und filtriert.

Die Lösung wird zweimal mit 10%-iger (% Gewicht/Gewicht) wässriger $Na_2SO_3$ und mit Wasser gewaschen. Die organische Phase wird unter $Na_2SO_4$ getrocknet, filtriert und bei 80°C/24 mbar verdunstet. Der erhaltene Rückstand ist ein weisses Pulver und hat einen Schmelzpunkt von 104-108°C. Die NMR ($^1H$, $^{13}C$) Analyse stimmt mit der oben angegebenen Struktur überein.

Beispiel G: Herstellung der Verbindung der Formel

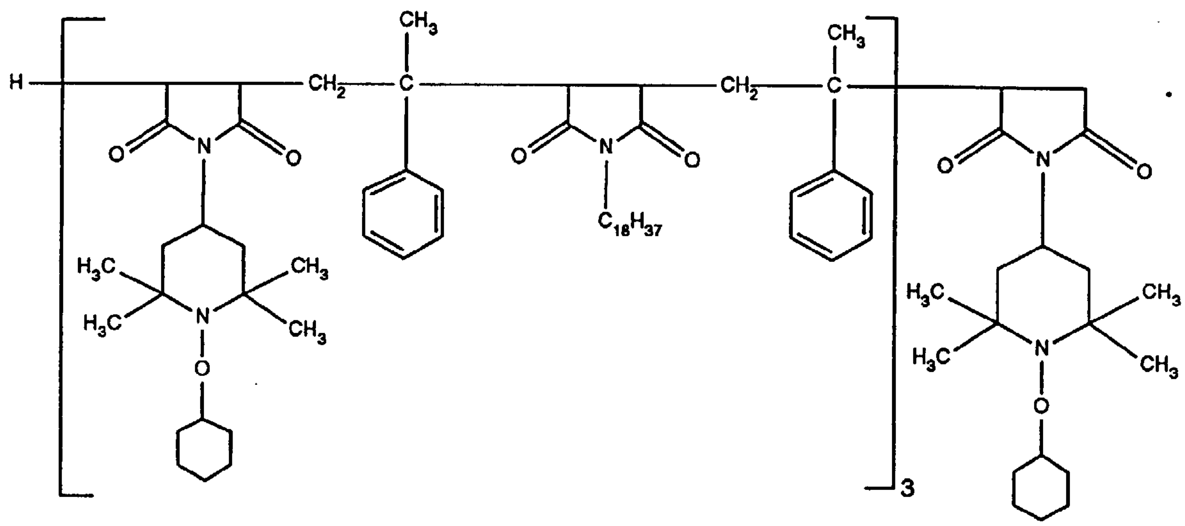

Die Herstellung erfolgt in Analogie zu dem im Beispiel F beschriebenen Verfahren. 11 g (10,3 mMol bezogen auf die wiederkehrende Einheit) der Verbindung der Formel

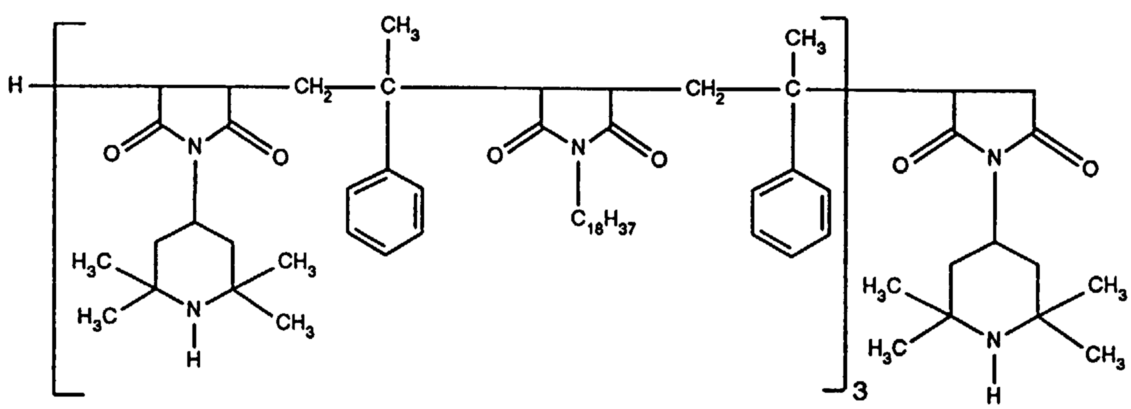

werden mit 10 g einer 10 %-igen (% Gewicht/Gewicht) tert-Butylhydroperoxid-Lösung in Cyclohexan in Gegenwart von 0,1 g $MoO_3$ umgesetzt. Nach dem Verdunsten wird ein weisser Feststoff mit einem Schmelzpunkt von 135-139°C erhalten. Die NMR ($^1H$, $^{13}C$) Analyse stimmt mit der oben angegebenen Struktur überein.

Beispiel H: Herstellung der Verbindung der Formel

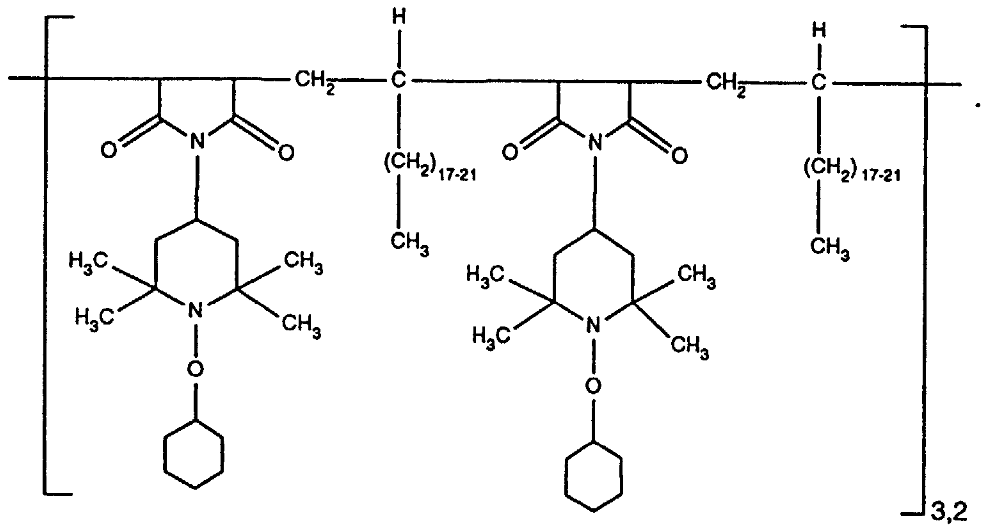

Die Herstellung erfolgt in Analogie zu dem im Beispiel F beschriebenen Verfahren. 19 g (30,8 mMol bezogen auf die wiederkehrende Einheit) der Verbindung der Formel

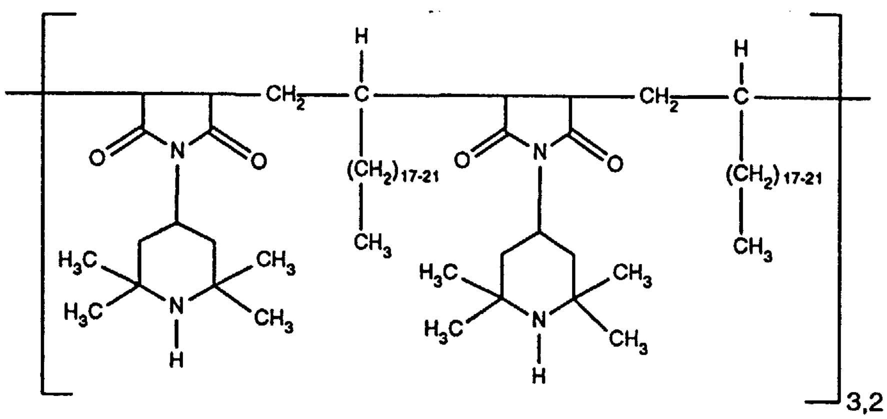

werden mit 6,6 g einer 70 %-igen (% Gewicht/Gewicht) wässrigen tert-Butylhydroperoxid-Lösung in Cyclohexan in Gegenwart von 0,5 g $MoO_3$ umgesetzt. Nach dem Verdunsten wird ein gelber Feststoff mit einem Schmelzpunkt von 80-87°C erhalten. Die NMR ($^1H$, $^{13}C$) Analyse stimmt mit der oben angegebenen Struktur überein.

Beispiel I: Herstellung der Verbindung der Formel

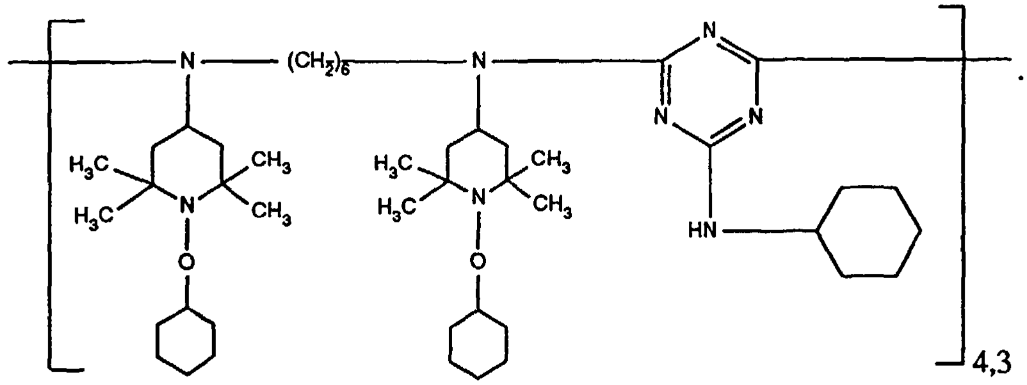

Die Herstellung erfolgt in Analogie zu dem im Beispiel F beschriebenen Verfahren. 30 g (39,2 mMol bezogen auf die wiederkehrende Einheit) der Verbindung der Formel

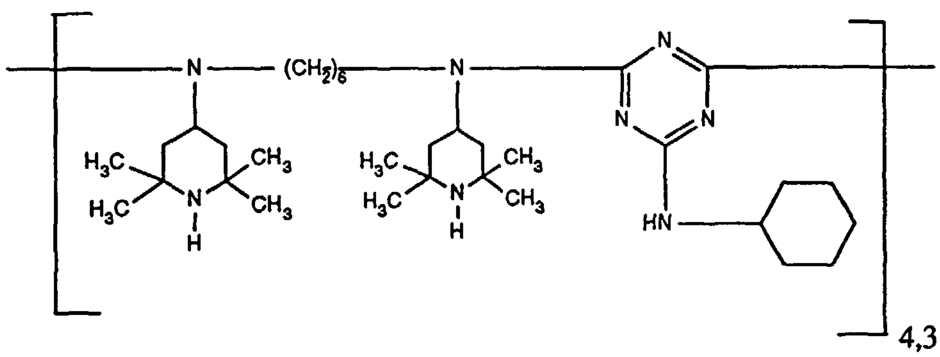

werden mit 15,2 g einer 70 %-igen (% Gewicht/Gewicht) wässrigen tert-Butylhydroperoxid-Lösung in Cyclohexan in der Gegenwart von 0,8 g $MoO_3$ umgesetzt. Nach dem Verdunsten wird ein gelber Feststoff mit einem Schmelzpunkt von 72-77°C erhalten. Die NMR ($^1H$, $^{13}C$) Analyse stimmt mit der oben angegebenen Struktur überein.

**Die in den Beispielen 1 bis 3 verwendeten Lichtschutzmittel:** (Es wird jeweils der mittlere Polymerisationsgrad angegeben.)

Lichtschutzmittel a-1 (US-A-5 204 473, Beispiel 58):

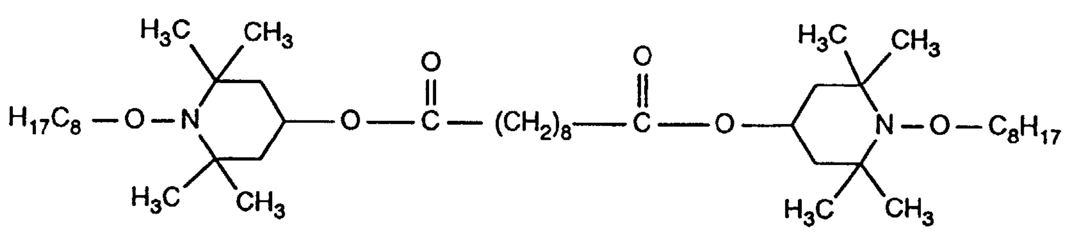

Lichtschutzmittel a-2 (US-A-5 204 473, Beispiel 4):

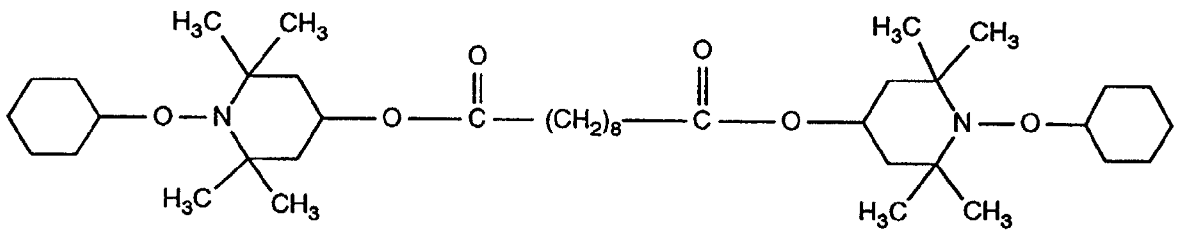

Lichtschutzmittel b-1 (US-A-5 204 473, Beispiel 62):

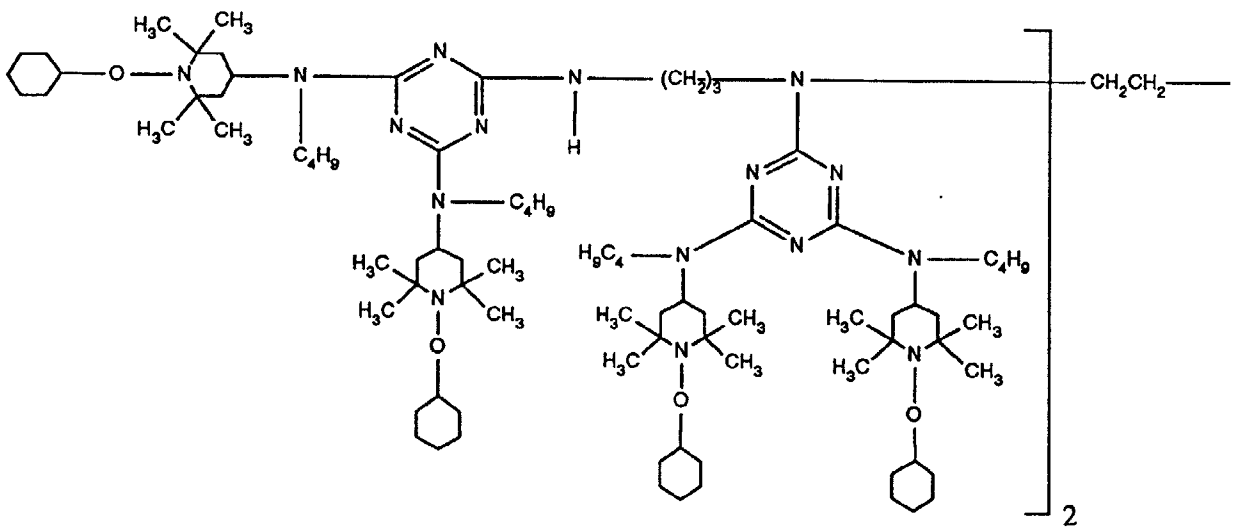

Lichtschutzmittel c-1(Beispiel A):

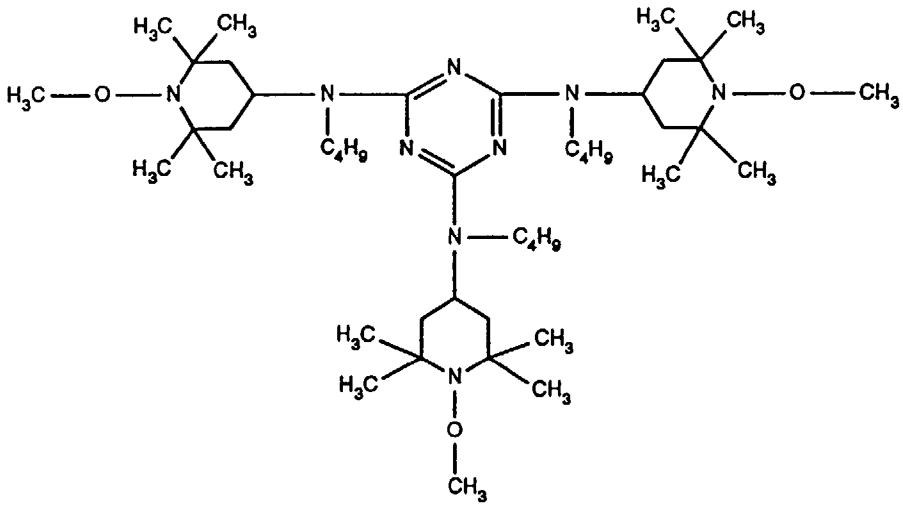

Lichtschutzmittel c-2 (US-A-5 204 473, Beispiel 63):

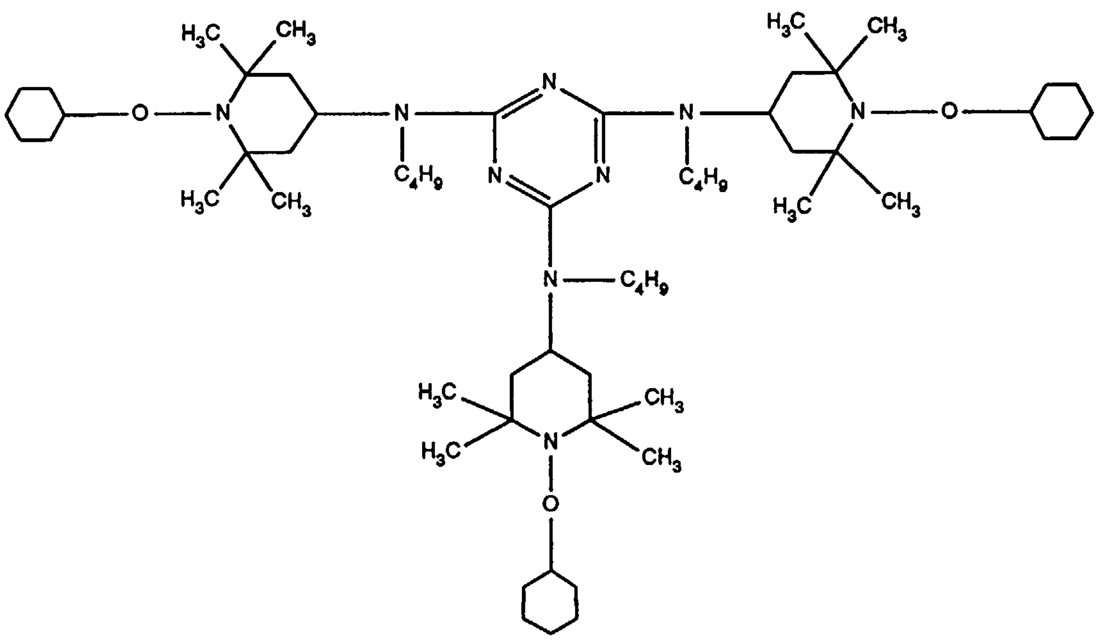

Lichtschutzmittel d-1 beispiel D):

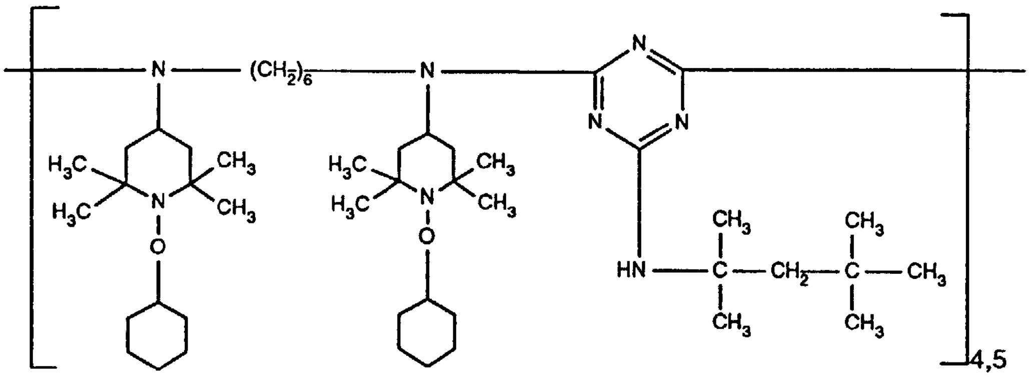

Lichtschutzmittel d-2 (Beispiel C):

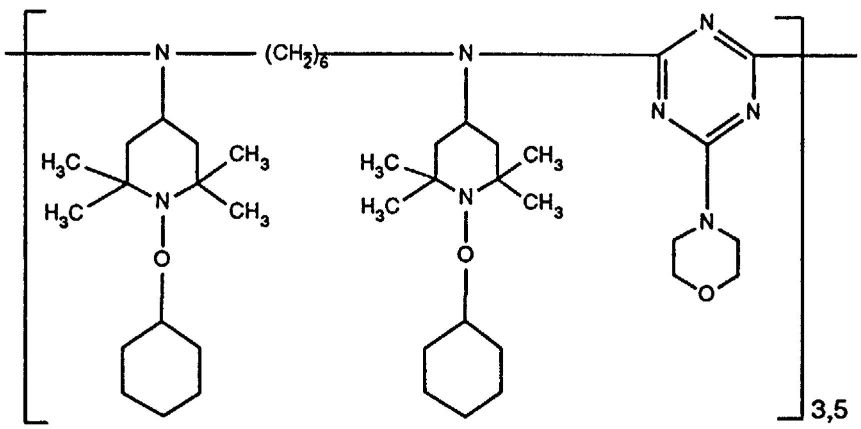

Lichtschutzmittel e-1 (Beispiel B):

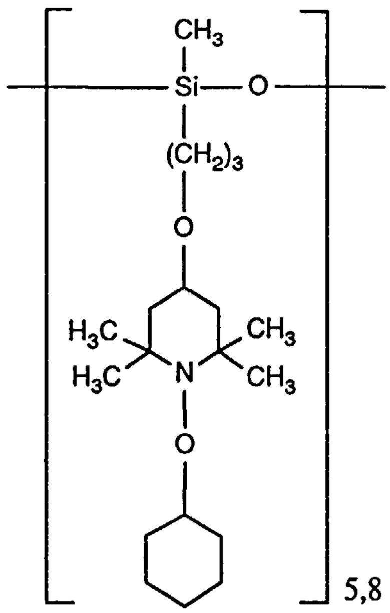

Lichtschutzmittel f-1 (Beispiel E):

®UVASORB HA 88 enthaltend anstelle von 2,2,6,6-Tetramethylpiperidin-4-ylgruppen 1-Cyclohexyloxy-2,2,6,6-tetramethylpiperidin-4-ylgruppen.

Lichtschutzmittel g-2 (Beispiel G):

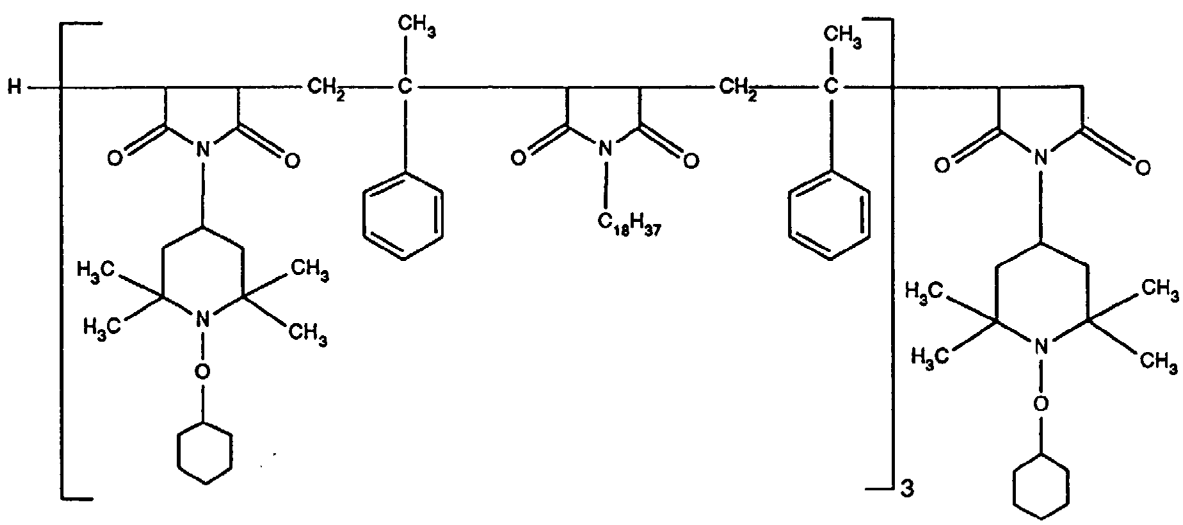

Lichtschutzmittel k-1 (Beispiel F):

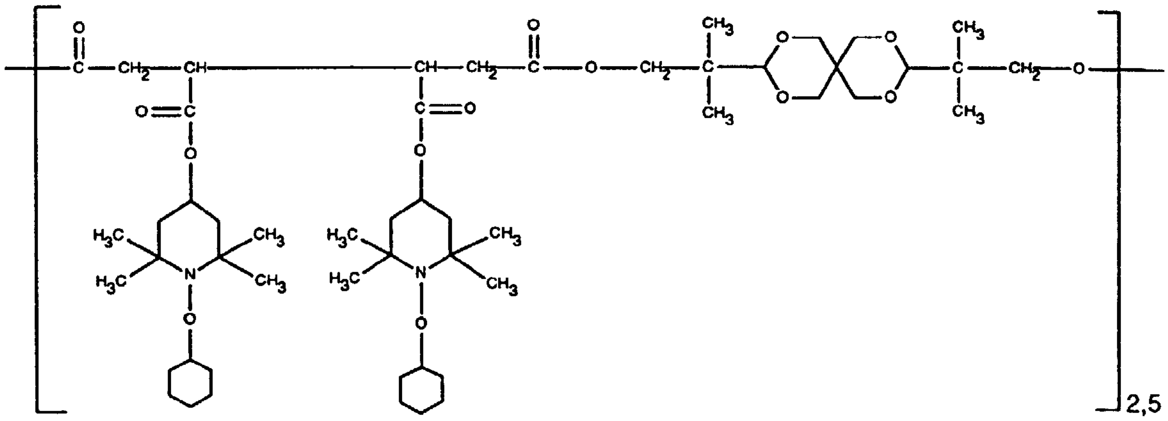

Beispiel 1: Lichtschutzwirkung in Polypropylenfolien.

100 Teile Polypropylen-Blockcopolymer-Pulver werden mit 0,05 Teilen Pentaerythrityl-tetrakis[3-(3,5-di-tert-butyl-4-hydroxyphenyl)propionat], 0,10 Teilen Tris[2,4-di-tert-butylphenyl] phosphit, 0,1 Teil Ca-Stearat und den in Tabelle 1 angegebenen Mengen an Lichtschutzmitteln in einem Brabenderplastographen bei 200°C während 10 Minuten homogenisiert. Die so erhaltene Masse wird möglichst rasch dem Kneter entnommen und in einer Kniehebelpresse zu einer 2-3 mm dicken Platte gepresst. Ein Teil des erhaltenen Rohpresslings wird ausgeschnitten und zwischen zwei Hochglanz-Hartaluminiumfolien mit einer hydraulischen Laborpresse während 6 Minuten bei 260°C zu einer 0,5 mm dicken Folie gepresst, die unverzüglich in einer wassergekühlten Presse abgekühlt wird. Aus dieser 0,5 mm Folie werden nun Abschnitte von je 55 mm x 9 mm gestanzt und in einem SEPAP 12.24 belichtet. In regelmässigen Zeitabständen werden diese Prüflinge aus dem Belichtungsapparat entnommen und in einem IR-Spektrophotometer auf ihren Carbonylgehalt geprüft. Die Zunahme der Carbonylextinktion bei der Belichtung ist ein Mass für den photooxidativen Abbau des Polymeren und ist erfahrungsgemäss mit dem Abfall der mechanischen Eigenschaften verbunden. Als Mass für die Schutzwirkung gilt daher die Zeit ($T_{0,2\ gemessen}$) bis zum Erreichen einer Carbonylextinktion von 0,2. Die Ergebnisse werden in Tabelle 1 zusammengefasst.

Der synergistische Effekt wird durch einen Vergleich der berechneten mit den gemessenen $T_{0,2}$-Werten bestimmt. Die $T_{0,2}$- Werte werden nach dem Additivitätsgesetz (B. Ranby and J.F. Rabek, Photodegradation, Photooxidation and Photostabilization of Polymers, Principles and Applications, a Wiley-Interscience Publication, 1975, Seiten 418-422) gemäss folgender Gleichung berechnet:

$$T_{0,2\ berechnet} = \frac{T_{0,2}\text{-Lichtschutzmittel 1} + T_{0,2}\text{-Lichtschutzmittel 2}}{2}$$

Es liegt ein synergistischer Effekt für das betreffende Gemisch vor, wenn $T_{0,2\ gemessen} > T_{0,2\ berechnet}$ ist.

$T_{0,2\ berechnet}$ wird ebenfalls in Tabelle 1 angegeben.

Tabelle 1:

| Lichtschutzwirkung in Polypropylenfolien. | | |
|---|---|---|
| Lichtschutzmittel | $T_{0,2\ gemessen}$ in Stunden | $T_{0,2\ berechnet}$ in Stunden |
| Ohne (Kontrolle) | 58 | |
| 0,1 % a-1 | 450 | |
| 0,1 % b-1 | 360 | |

Tabelle 1: (fortgesetzt)

| Lichtschutzwirkung in Polypropylenfolien. | | |
|---|---|---|
| Lichtschutzmittel | $T_{0,2\ gemessen}$ in Stunden | $T_{0,2\ berechnet}$ in Stunden |
| 0,1 % c-2 | 575 | |
| 0,05 % a-1 und 0,05 % b-1 | 540 | 405 |
| 0,05 % a-1 und 0,05 % c-2 | 615 | 512 |

Beispiel 2: Lichtschutzwirkung in Polypropylen-Blockcopolymer-Folien.

100 Teile Polypropylen-Bockcopolymer-Pulver werden mit 0,05 Teilen Pentaerythrityltetrakis-[3-(3,5-di-tert-butyl-4-hydroxyphenyl)-propionat], 0,10 Teilen Tris-(2,4-di-tert-butylphenyl)-phosphit, 0,1 Teilen Ca-Stearat und den in den Tabellen 2a und 2b angegebenen Teilen Lichtschutzmittel im Brabenderplastographen bei 200°C während 10 Minuten homogenisiert. Die so erhaltene Masse wird möglichst rasch dem Kneter entnommen und in einer Kniehebelpresse zu einer 2-3 mm dicken Platte gepresst. Ein Teil des erhaltenen Rohpresslings wird ausgeschnitten und zwischen zwei Hochglanz-Hartaluminiumfolien mit einer hydraulischen Laborpresse während 6 Minuten bei 260°C zu einer 0,5 mm dicken Folie gepresst, die unverzüglich in einer wassergekühlten Presse abgekühlt wird. Aus dieser 0,5 mm Folie werden nun Abschnitte von je 60 mm x 25 mm gestanzt und in einem WEATHER-OMETER Ci 65 (Schwarztafeltemperatur 63 +/- 2°C, keine Beregnung) belichtet. In regelmässigen Zeitabständen werden diese Prüflinge aus dem Belichtungsapparat entnommen und in einem IR-Spektrophotometer auf ihren Carbonylgehalt geprüft. Die Zunahme der Carbonylextinktion bei der Belichtung ist ein Mass für den photooxidativen Abbau des Polymeren und ist erfahrungsgemäss mit einem Abfall der mechanischen Eigenschaften verbunden.
Die Zeit ($T_{0,2\ gemessen}$) bis zum Erreichen einer Carbonylextinktion von 0,2 wird in den Tabellen 2a und 2b angegeben.
Der synergistische Effekt kann durch einen Vergleich der berechneten mit den gemessenen $T_{0,2}$-Werten in Analogie zu Beispiel 1 bestimmt werden.

Tabelle 2a:

| Lichtschutzwirkung in Polypropylen-Blockcopolymer-Folien. | | |
|---|---|---|
| Lichtschutzmittel | $T_{0,2\ gemessen}$ in Stunden | $T_{0,2\ berechnet}$ in Stunden |
| ohne | 145 | |
| 0,1 % a-1 | 1155 | |
| 0,1 % a-2 | 2280 | |
| 0,1 % b-1 | 1430 | |
| 0,1 % c-1 | 2880 | |
| 0,1 % c-2 | 1950 | |
| 0,05 % a-1 und 0,05 % b-1 | 2020 | 1292 |
| 0,05 % a-1 und 0,05 % c-1 | 2300 | 2017 |

Tabelle 2a: (fortgesetzt)

| Lichtschutzwirkung in Polypropylen-Blockcopolymer-Folien. | | |
|---|---|---|
| Lichtschutzmittel | $T_{0,2\ gemessen}$ in Stunden | $T_{0,2\ berechnet}$ in Stunden |
| 0,05 % a-1 und 0,05 % c-2 | 1960 | 1552 |
| 0,05 % a-2 und 0,05 % b-1 | 2420 | 1855 |
| 0,05 % b-1 und 0,05 % c-1 | 2360 | 2155 |
| 0,05 % b-1 und 0,05 % c-2 | 1910 | 1690 |
| 0,05 % c-1 und 0,05 % c-2 | 2480 | 2415 |

Tabelle 2b:

| Lichtschutzwirkung in Polypropylen-Blockcopolymer-Folien. | | |
|---|---|---|
| Lichtschutzmittel | $T_{0,2\ gemessen}$ in Stunden | $T_{0,2\ berechnet}$ in Stunden |
| ohne | 145 | |
| 0,2 % a-1 | 2230 | |
| 0,2 % c-2 | 3360 | |
| 0,10 % a-1 und 0,10 % c-2 | 3020 | 2795 |

In einer zweiten Prüfserie werden zusätzliche Kombinationen unter den gleichen Bedingungen wie oben geprüft. Die Ergebnisse sind in Tabelle 3 aufgeführt.

Tabelle 3:

| Lichtschutzwirkung in Polypropylen-Blockcopolymer-Folien. | | |
|---|---|---|
| Lichtschutzmittel | $T_{0,2\ gemessen}$ in Stunden | $T_{0,2\ berechnet}$ in Stunden |
| ohne | 100 | |
| 0,2 % a-1 | 2230 | |
| 0,2 % a-2 | 4040 | |
| 0,2 % b-1 | 1750 | |
| 0,2 % d-1 | 1480 | |
| 0,2 % d-2 | 480 | |
| 0,2 % e-1 | 3180 | |

Tabelle 3: (fortgesetzt)

| Lichtschutzwirkung in Polypropylen-Blockcopolymer-Folien. | | |
|---|---|---|
| Lichtschutzmittel | $T_{0,2\ gemessen}$ in Stunden | $T_{0,2\ berechnet}$ in Stunden |
| 0,2 % f-1 | 1560 | |
| 0,2 % g-2 | 330 | |
| 0,2 % k-1 | 1800 | |
| 0,1 % a-1 und 0,1 % d-1 | 2080 | 1855 |
| 0,1 % a-1 und 0,1 % d-2 | 1880 | 1355 |
| 0,1 % a-1 und 0,1 % e-1 | 3180 | 2705 |
| 0,1 % a-1 und 0,1 % f-1 | 2390 | 1895 |
| 0,1 % a-1 und 0,1 % g-2 | 1480 | 1280 |
| 0,1 % a-1 und 0,1 % k-1 | 2350 | 2015 |
| 0,1 % a-2 und 0,1 % d-1 | 3340 | 2760 |
| 0,1 % a-2 und 0,1 % d-2 | 3280 | 2260 |
| 0,1 % a-2 und 0,1 % e-1 | >4319 | 3610 |
| 0,1 % a-2 und 0,1 % f-1 | 3700 | 2800 |
| 0,1 % a-2 und 0,1 % g-2 | 2380 | 2185 |
| 0,1 % a-2 und 0,1 % k-1 | 3020 | 2920 |
| 0,1 % b-1 und 0,1 % d-1 | 1790 | 1615 |
| 0,1 % b-1 und 0,1 %d-2 | 1520 | 1115 |
| 0,1 % b-1 und 0,1 % e-1 | 3350 | 2465 |

Tabelle 3: (fortgesetzt)

| Lichtschutzwirkung in Polypropylen-Blockcopolymer-Folien. | | |
|---|---|---|
| Lichtschutzmittel | $T_{0,2\ gemessen}$ in Stunden | $T_{0,2\ berechnet}$ in Stunden |
| 0,1 % b-1 und 0,1%k-1 | 2120 | 1775 |

Beispiel 3: Lichtschutzwirkung in Folien aus Polyethylen niederer Dichte.

100 Teile Polyethylenpulver niederer Dichte (Dichte = 0,918 g/cm$^3$) werden mit 0,03 Teilen Octadecyl-3-(3,5-di-tert-butyl-4-hydroxyphenyl)-propionat und den in der Tabelle 4 angegebenen Teilen Lichtschutzmittel im Brabenderplastographen bei 180°C während 10 Minuten homogenisiert. Die so erhaltene Masse wird möglichst rasch dem Kneter entnommen und in einer Presse zu einer 2-3 mm dicken Platte gepresst. Ein Teil des erhaltenen Rohpresslings wird ausgeschnitten und zwischen zwei Hochglanz-Hartaluminiumfolien mit einer hydraulischen Laborpresse während 6 Minuten bei 170°C zu einer 0,2 mm dicken Folie gepresst, die unverzüglich in einer wassergekühlten Presse abgekühlt wird. Aus dieser 0,2 mm Folie werden nun Abschnitte von je 60 mm x 25 mm gestanzt und während 24 Stunden in eine 0,1 N $H_2SO_3$ Lösung getaucht. Dies wird als Simulation des sauren Regens angesehen. Anschliessend werden die Proben in einem WEATHER-OMETER Ci 65 (Schwarztafeltemperatur 63 +/- 2°C, keine Beregnung) belichtet. In regelmässigen Zeitabständen werden diese Prüflinge aus dem Belichtungsapparat entnommen und in einem IR-Spektrophotometer auf ihren Vinylgruppengehalt geprüft. Die Zunahme der Vinylextinktion ( 909 cm$^{-1}$) bei der Belichtung ist ein Mass für den photooxidativen Abbau des Polymeren und ist erfahrungsgemäss mit einem Abfall der mechanischen Eigenschaften verbunden.

Die Ergebnisse sind in der Tabelle 4 aufgeführt.

Der synergistische Effekt kann durch einen Vergleich der gemessenen mit der berechneten Vinylextinktion nach 4106 Stunden bestimmt werden, wobei die Berechnung in Analogie zu Beispiel 1 erfolgt.

Tabelle 4:

| Lichtschutzwirkung in Folien aus Polyethylen niederer Dichte. | | |
|---|---|---|
| Lichtschutzmittel | Vinylextinktion nach 4106 Stunden | Berechnete Vinylextinktion |
| ohne | 0,125 nach 592 Stunden | |
| 0,1 % a-1 | 0,037 | |
| 0,1 % a-2 | 0,023 | |
| 0,1 % b-1 | 0,046 | |
| 0,1 % d-1 | 0,100 | |
| 0,1% d-2 | >0,122 | |
| 0,1 % e-1 | 0,059 | |
| 0,1% f-1 | 0,052 | |
| 0,1 % g-2 | >0,100 | |
| 0,1 % k-1 | 0,037 | |
| 0,05 % a-1 und 0,05 % d-1 | 0,031 | >0,068 |

Tabelle 4: (fortgesetzt)

| Lichtschutzwirkung in Folien aus Polyethylen niederer Dichte. | | |
|---|---|---|
| Lichtschutzmittel | Vinylextinktion nach 4106 Stunden | Berechnete Vinylextinktion |
| 0,05 % a-1 und 0,05 % d-2 | 0,021 | >0,080 |
| 0,05 % a-1 und 0,05 % e-1 | 0,000 | 0,048 |
| 0,05% a-1 und 0,05 % f-1 | 0,025 | 0,045 |
| 0,05 % a-1 und 0,05 % g-2 | 0,024 | >0,068 |
| 0,05 % a-1 und 0,05%k-1 | 0,000 | 0,037 |
| 0,05 % a-2 und 0,05 % d-1 | 0,030 | >0,040 |
| 0,05 % a-2 und 0,05 % d-2 | 0,029 | >0,072 |
| 0,05 % a-2 und 0,05 % e-1 | 0,023 | 0,041 |
| 0,05 % a-2 und 0,05 % f-1 | 0,023 | 0,061 |
| 0,05 % a-2 und 0,05 % g-2 | 0,028 | >0,062 |
| 0,05 % b-1 und 0,05 % d-1 | 0,067 | 0,073 |
| 0,05 % b-1 und 0,05 % d-2 | 0,052 | >0,084 |
| 0,05 % b-1 und 0,05 % e-1 | 0,042 | 0,052 |
| 0,05 % b-1 und 0,05 % f-1 | 0,042 | 0,049 |
| 0,05 % b-1 und 0,05 % g-2 | 0,051 | >0,073 |

**Patentansprüche**

1. Stabilisatorgemisch enthaltend mindestens zwei unterschiedliche Verbindungen aus der Gruppe der Komponenten a), b), c), d), e), f), g), h), i), j), k) und l), wobei

die Komponente a) mindestens eine Verbindung der Formel I ist,

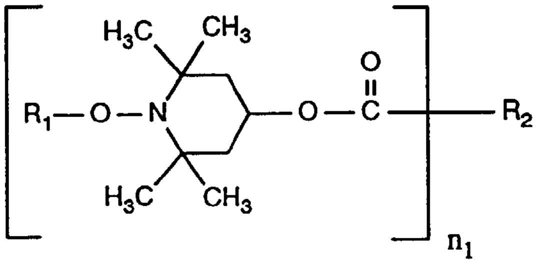

(I)

worin

$R_1$ Wasserstoff, $C_1$-$C_{18}$-Alkyl, $C_5$-$C_{12}$-Cycloalkyl oder durch $C_1$-$C_4$-Alkyl substituiertes $C_5$-$C_{12}$-Cycloalkyl ist,
$n_1$ 1, 2 oder 4 bedeutet,
wenn $n_1$ 1 ist, $R_2$ $C_1$-$C_{25}$-Alkyl darstellt,
wenn $n_1$ 2 ist, $R_2$ $C_1$-$C_{14}$-Alkylen bedeutet und
wenn $n_1$ 4 ist, $R_2$ $C_4$-$C_{10}$-Alkantetrayl darstellt;

die Komponente b) mindestens eine Verbindung der Formel II ist,

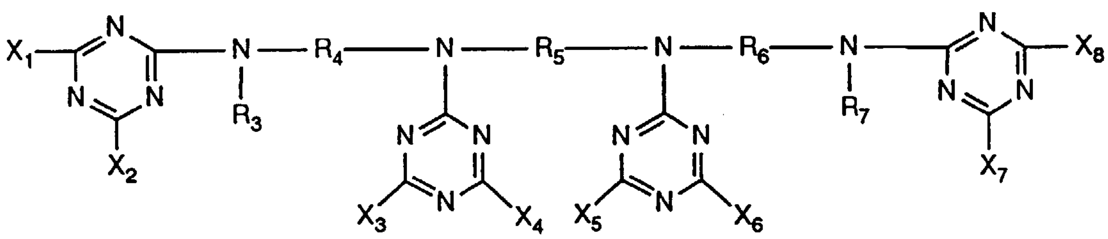

(II)

worin

$R_3$ und $R_7$ unabhängig voneinander Wasserstoff oder $C_1$-$C_{12}$-Alkyl darstellen,
$R_4$, $R_5$ und $R_6$ unabhängig voneinander $C_2$-$C_{10}$-Alkylen sind und
$X_1$, $X_2$, $X_3$, $X_4$, $X_5$, $X_6$, $X_7$ und $X_8$ unabhängig voneinander eine Gruppe der Formel III bedeuten,

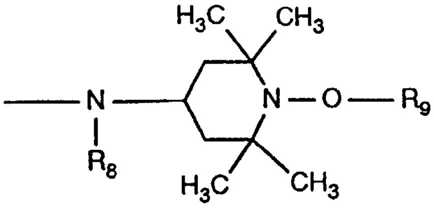

(III)

worin
$R_8$ Wasserstoff, $C_1$-$C_{12}$-Alkyl, $C_5$-$C_{12}$-Cycloalkyl, durch $C_1$-$C_4$-Alkyl substituiertes $C_5$-$C_{12}$-Cycloalkyl, Phenyl, durch -OH und/oder $C_1$-$C_{10}$-Alkyl substituiertes Phenyl, $C_7$-$C_9$-Phenylalkyl, am Phenylrest durch -OH und/oder $C_1$-$C_{10}$-Alkyl substituiertes $C_7$-$C_9$-Phenylalkyl oder eine Gruppe der Formel IV bedeutet und

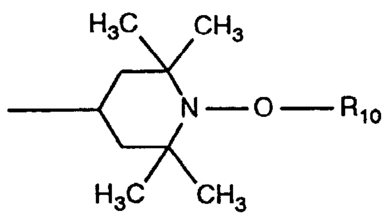

(IV)

$R_9$ und $R_{10}$ unabhängig voneinander eine der für $R_1$ angegebenen Bedeutungen besitzen;

die Komponente c) mindestens eine Verbindung der Formel V ist,

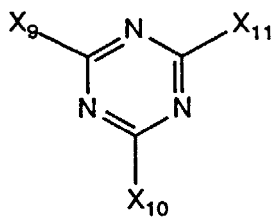

(V)

worin

$X_9$, $X_{10}$ und $X_{11}$ unabhängig voneinander eine Gruppe der Formel III bedeuten;

die Komponente d) mindestens eine Verbindung der Formel VI ist,

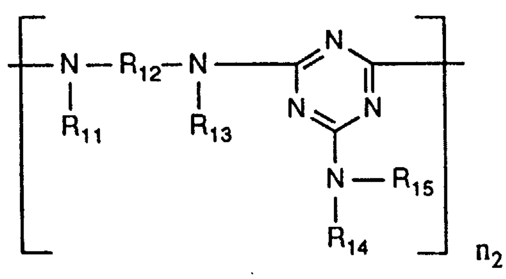

(VI)

worin

$R_{11}$, $R_{13}$, $R_{14}$ und $R_{15}$ unabhängig voneinander Wasserstoff, $C_1$-$C_{12}$-Alkyl, $C_5$-$C_{12}$-Cycloalkyl, durch $C_1$-$C_4$-Alkyl substituiertes $C_5$-$C_{12}$-Cycloalkyl, Phenyl, durch -OH und/oder $C_1$-$C_{10}$-Alkyl substituiertes Phenyl, $C_7$-$C_9$-Phenylalkyl, am Phenylrest durch -OH und/oder $C_1$-$C_{10}$-Alkyl substituiertes $C_7$-$C_9$-Phenylalkyl oder eine Gruppe der Formel IV bedeuten,
$R_{12}$ $C_2$-$C_{18}$-Alkylen, $C_5$-$C_7$-Cycloalkylen oder $C_1$-$C_4$-Alkylendi($C_5$-$C_7$-cycloalkylen) ist oder
die Reste $R_{11}$, $R_{12}$ und $R_{13}$ zusammen mit den Stickstoffatomen, an die sie gebunden sind, einen 5- bis 10-gliedrigen heterocyclischen Ring bilden oder
$R_{14}$ und $R_{15}$ zusammen mit dem Stickstoffatom, an das sie gebunden sind, einen 5- bis 10-gliedrigen heterocyclischen Ring bilden,
$n_2$ eine Zahl von 2 bis 50 ist und

mindestens einer der Reste $R_{11}$, $R_{13}$, $R_{14}$ und $R_{15}$ eine Gruppe der Formel IV darstellt;

die Komponente e) mindestens eine Verbindung der Formel VII ist,

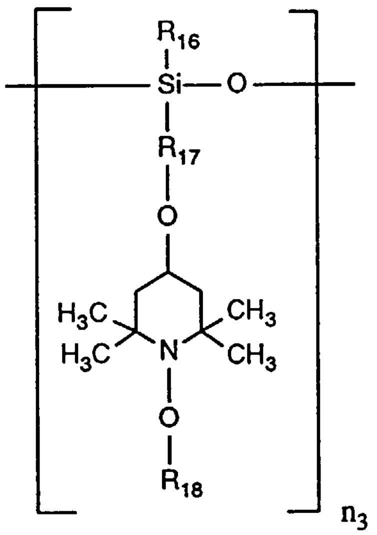

(VII)

worin

$R_{16}$ $C_1$-$C_{10}$-Alkyl, $C_5$-$C_{12}$-Cycloalkyl, durch $C_1$-$C_4$-Alkyl substituiertes $C_5$-$C_{12}$-Cycloalkyl, Phenyl oder durch $C_1$-$C_{10}$-Alkyl substituiertes Phenyl ist,
$R_{17}$ $C_3$-$C_{10}$-Alkylen darstellt,
$R_{18}$ eine der für $R_1$ angegebenen Bedeutungen besitzt und
$n_3$ eine Zahl von 1 bis 50 bedeutet;

die Komponente f) ein Produkt bedeutet, erhältlich durch Umsetzung eines durch Reaktion eines Polyamins der Formel VIIIa mit Cyanursäurechlorid erhaltenen Produktes mit einer Verbindung der Formel VIIIb zu einem 2,2,6,6-Tetramethyl-4-piperidylgruppen enthaltenden Triazinderivat und anschliessender Umsetzung der im Triazinderivat enthaltenen 2,2,6,6-Tetramethyl-4-piperidylgruppen zu Gruppen der Formel VIIIc,

$$H_2N-(CH_2)_{n_4'}-NH-(CH_2)_{n_4''}-NH-(CH_2)_{n_4'''}-NH_2 \quad \text{(VIIIa)}$$

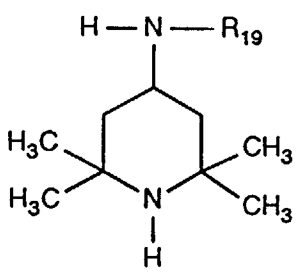

(VIIIb)

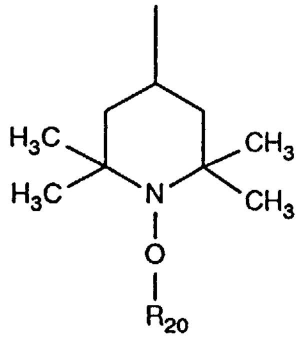

(VIIIc)

worin

$n_4'$, $n_4''$ und $n_4'''$ unabhängig voneinander eine Zahl von 2 bis 12 sind,
$R_{19}$ Wasserstoff, $C_1$-$C_{12}$-Alkyl, $C_5$-$C_{12}$-Cycloalkyl, Phenyl oder $C_7$-$C_9$-Phenylalkyl ist und
$R_{20}$ eine der für $R_1$ angegebenen Bedeutungen besitzt;

die Komponente g) mindestens eine Verbindung der Formel IX ist,

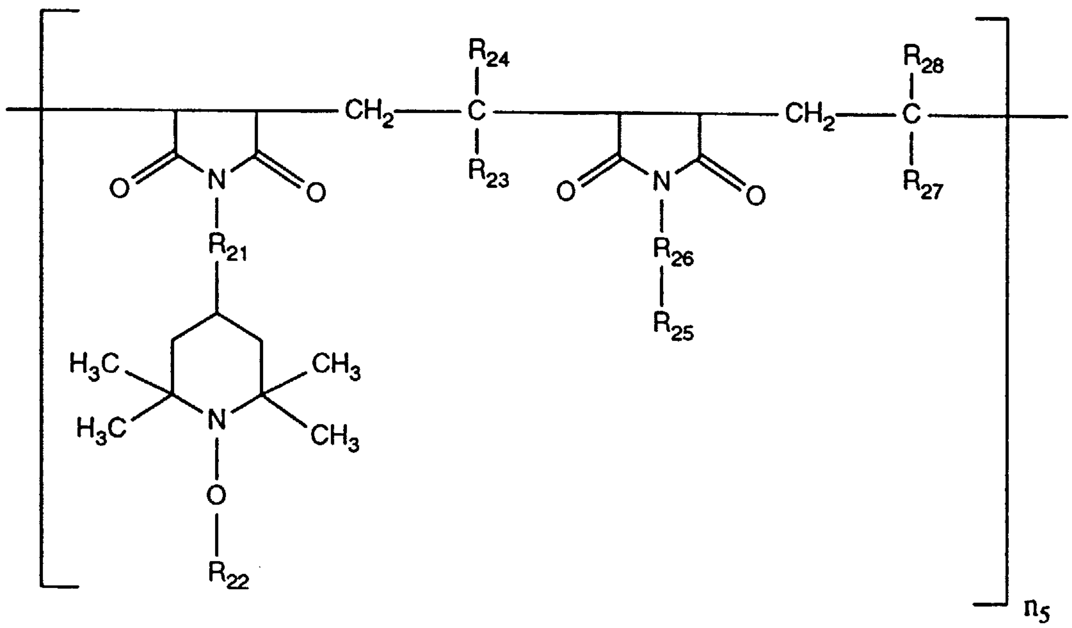

(IX)

worin

$R_{21}$ und $R_{26}$ unabhängig voneinander eine direkte Bindung oder eine Gruppe $-N(Y_1)-CO-Y_2-CO-N(Y_3)-$ bedeuten, $Y_1$ und $Y_3$ unabhängig voneinander Wasserstoff, $C_1$-$C_8$-Alkyl, $C_5$-$C_{12}$-Cycloalkyl, Phenyl, $C_7$-$C_9$-Phenylalkyl oder eine Gruppe der Formel IV sind, $Y_2$ eine direkte Bindung oder $C_1$-$C_4$-Alkylen darstellt,
$R_{22}$ eine der für $R_1$ angegebenen Bedeutungen besitzt,
$R_{23}$, $R_{24}$, $R_{27}$ und $R_{28}$ unabhängig voneinander Wasserstoff, $C_1$-$C_{30}$-Alkyl, $C_5$-$C_{12}$-Cycloalkyl oder Phenyl bedeuten,
$R_{25}$ Wasserstoff, $C_1$-$C_{30}$-Alkyl, $C_5$-$C_{12}$-Cycloalkyl, Phenyl, $C_7$-$C_9$-Phenylalkyl oder eine Gruppe der Formel IV darstellt und
$n_5$ eine Zahl von 1 bis 50 ist;

die Komponente h) mindestens eine Verbindung der Formel X ist,

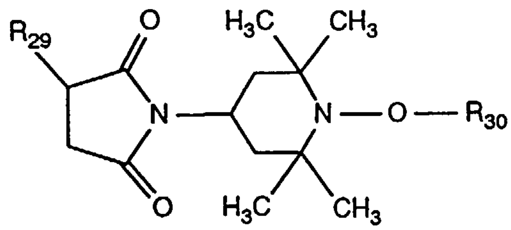

(X)

worin

$R_{29}$ $C_1$-$C_{24}$-Alkyl ist und
$R_{30}$ eine der für $R_1$ angegebenen Bedeutungen besitzt;

die Komponente i) mindestens eine Verbindung der Formel XI ist,

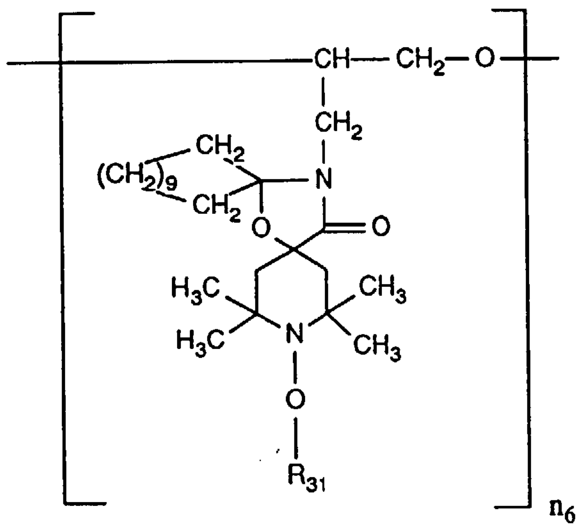

(XI)

worin

$R_{31}$ eine der für $R_1$ angegebenen Bedeutungen hat und
$n_6$ eine Zahl von 2 bis 50 ist;

die Komponente j) mindestens eine Verbindung der Formel XII ist,

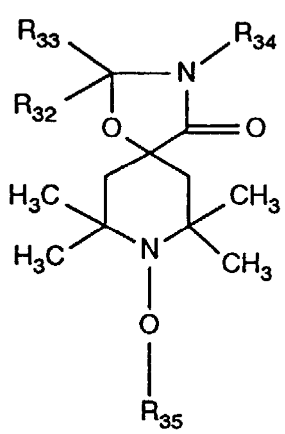

(XII)

worin

$R_{32}$ und $R_{33}$ zusammen $C_2$-$C_{14}$-Alkylen bilden,
$R_{34}$ Wasserstoff oder eine Gruppe -$Z_1$-COO-$Z_2$ bedeutet, $Z_1$ $C_2$-$C_{14}$-Alkylen ist und $Z_2$ $C_1$-$C_{24}$-Alkyl bedeutet und
$R_{35}$ eine der für $R_1$ angegebenen Bedeutungen hat;

die Komponente k) mindestens eine Verbindung der Formel XIII ist,

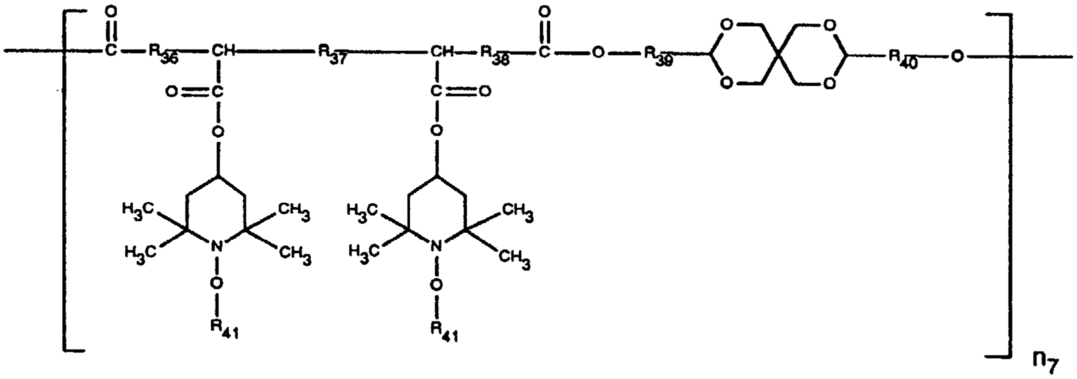

(XIII)

worin

$R_{36}$, $R_{37}$, $R_{38}$, $R_{39}$ und $R_{40}$ unabhängig voneinander eine direkte Bindung oder $C_1$-$C_{10}$-Alkylen sind,
$R_{41}$ eine der für $R_1$ angegebenen Bedeutungen besitzt und
$n_7$ eine Zahl von 1 bis 50 darstellt;

die Komponente l) mindestens eine Verbindung der Formel XIV ist,

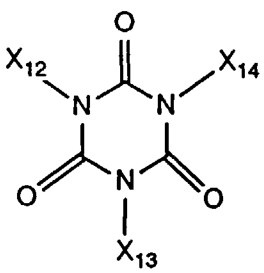

(XIV)

worin

$X_{12}$, $X_{13}$ und $X_{14}$ unabhängig voneinander eine Gruppe der Formel XV darstellen,

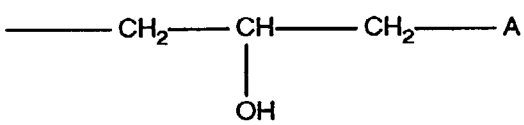

(XV)

worin A eine Gruppe der Formel III bedeutet.

**2.** Stabilisatorgemisch gemäss Anspruch 1, worin $R_1$, $R_9$, $R_{10}$, $R_{18}$, $R_{20}$, $R_{22}$, $R_{30}$, $R_{31}$, $R_{35}$ und $R_{41}$ unabhängig voneinander $C_1$-$C_{12}$-Alkyl, $C_5$-$C_8$-Cycloalkyl oder durch Methyl substituiertes $C_5$-$C_8$-Cycloalkyl sind.

**3.** Stabilisatorgemisch gemäss Anspruch 1, worin $R_1$, $R_9$, $R_{10}$, $R_{18}$, $R_{20}$, $R_{22}$, $R_{30}$, $R_{31}$, $R_{35}$ und $R_{41}$ unabhängig voneinander Methyl, Octyl oder Cyclohexyl sind.

**4.** Stabilisatorgemisch gemäss Anspruch 1, enthaltend mindestens eine Verbindung aus der Komponente a) und mindestens eine Verbindung aus der Komponente b), c), d), e), f), g), h), i), j), k) oder l).

**5.** Stabilisatorgemisch gemäss Anspruch 1, enthaltend mindestens eine Verbindung aus der Komponente a) und mindestens eine Verbindung aus der Komponente b), c), d), e), f), g), h) oder j).

**6.** Stabilisatorgemisch gemäss Anspruch 1, enthaltend mindestens eine Verbindung aus der Komponente b) und mindestens eine Verbindung aus der Komponente d), e), f), g) oder k).

**7.** Stabilisatorgemisch gemäss Anspruch 1, enthaltend mindestens eine Verbindung aus der Komponente c) und mindestens eine Verbindung aus der Komponente a), b), d), e), f), g), h) oder j).

**8.** Stabilisatorgemisch gemäss Anspruch 1,

worin $n_1$ 1, 2 oder 4 ist,
wenn $n_1$ 1 ist, $R_2$ $C_{10}$-$C_{20}$-Alkyl darstellt,
wenn $n_1$ 2 ist, $R_2$ $C_6$-$C_{10}$-Alkylen bedeutet und
wenn $n_1$ 4 ist, $R_2$ Butantetrayl darstellt;

$R_3$ und $R_7$ unabhängig voneinander Wasserstoff oder $C_1$-$C_4$-Alkyl darstellen,
$R_4$, $R_5$ und $R_6$ unabhängig voneinander $C_2$-$C_6$-Alkylen sind,
$R_8$ Wasserstoff, $C_1$-$C_6$-Alkyl, $C_5$-$C_8$-Cycloalkyl, durch Methyl substituiertes $C_5$-$C_8$-Cycloalkyl, Phenyl, $C_7$-$C_9$-Phenylalkyl oder eine Gruppe der Formel IV bedeutet;

$R_{11}$, $R_{13}$, $R_{14}$ und $R_{15}$ unabhängig voneinander Wasserstoff, $C_1$-$C_8$-Alkyl, $C_5$-$C_8$-Cycloalkyl, durch Methyl substituiertes $C_5$-$C_8$-Cycloalkyl, Phenyl, $C_7$-$C_9$-Phenylalkyl oder eine Gruppe der Formel IV bedeuten oder
die Reste $R_{14}$ und $R_{15}$ zusammen mit dem Stickstoffatom, an das sie gebunden sind, einen 6-gliedrigen heterocyclischen Ring bilden,
$R_{12}$ $C_2$-$C_{10}$-Alkylen ist und
$n_2$ eine Zahl von 2 bis 25 ist;

$R_{16}$ $C_1$-$C_4$-Alkyl, $C_5$-$C_8$-Cycloalkyl oder Phenyl ist,
$R_{17}$ $C_3$-$C_6$-Alkylen darstellt und
$n_3$ eine Zahl von 1 bis 25 ist;

$n_4'$, $n_4''$ und $n_4'''$ unabhängig voneinander eine Zahl von 2 bis 4 sind und
$R_{19}$ $C_1$-$C_4$-Alkyl bedeutet;

$R_{21}$ und $R_{26}$ unabhängig voneinander eine direkte Bindung oder eine Gruppe -N($Y_1$)-CO-$Y_2$-CO-N($Y_3$)- bedeuten, $Y_1$ und $Y_3$ unabhängig voneinander Wasserstoff oder $C_1$-$C_4$-Alkyl sind, $Y_2$ eine direkte Bindung ist,
$R_{23}$ und $R_{27}$ $C_1$-$C_{25}$-Alkyl oder Phenyl sind,
$R_{24}$ und $R_{28}$ Wasserstoff oder $C_1$-$C_4$-Alkyl bedeuten,
$R_{25}$ $C_1$-$C_{25}$-Alkyl oder eine Gruppe der Formel IV ist und
$n_5$ eine Zahl von 1 bis 25 ist;

$R_{29}$ $C_8$-$C_{15}$-Alkyl ist;
$n_6$ eine Zahl von 2 bis 25 ist;

$R_{32}$ und $R_{33}$ zusammen $C_8$-$C_{14}$-Alkylen bilden,
$R_{34}$ Wasserstoff oder eine Gruppe -$Z_1$-COO-$Z_2$ bedeutet, $Z_1$ $C_2$-$C_6$-Alkylen ist und $Z_2$ $C_8$-$C_{15}$-Alkyl bedeutet;

$R_{36}$, $R_{38}$, $R_{39}$ und $R_{40}$ unabhängig voneinander $C_1$-$C_4$-Alkylen sind,
$R_{37}$ eine direkte Bindung ist und
$n_7$ eine Zahl von 1 bis 25 darstellt.

**9.** Stabilisatorgemisch gemäss Anspruch 1, worin

die Komponente a) mindestens eine Verbindung der Formel a-I-1, a-I-2 oder a-I-3 ist,

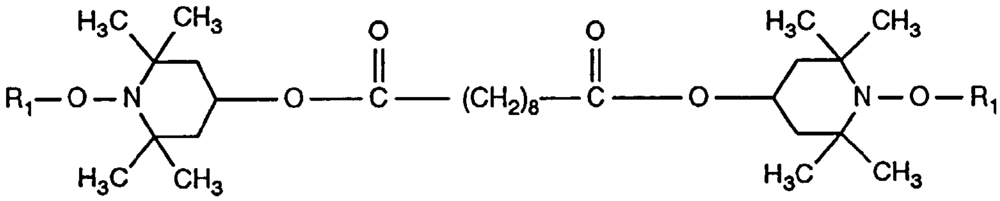

(a-I-1)

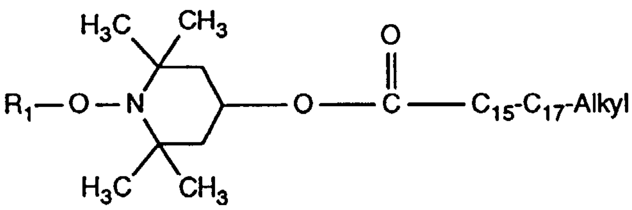

(a-I-2)

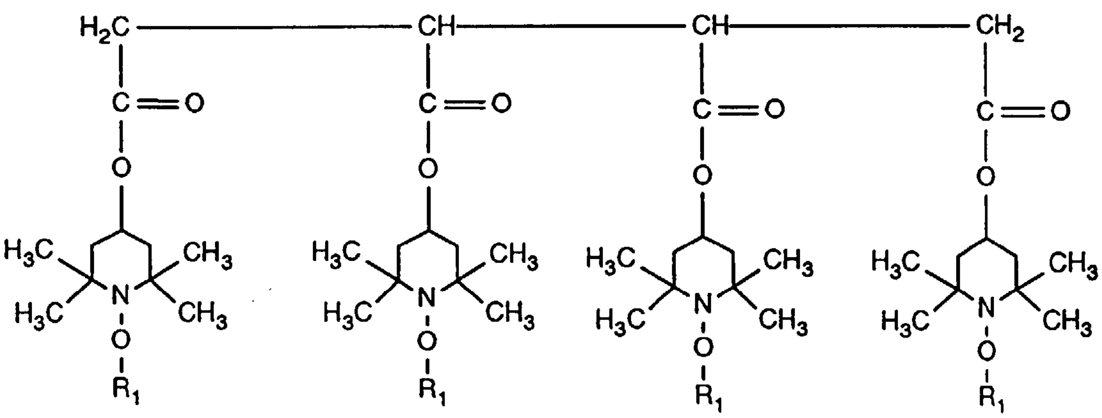

(a-I-3)

wobei

$R_1$ Methyl, Octyl oder Cyclohexyl bedeutet;

die Komponente b) mindestens eine Verbindung der Formel b-II ist,

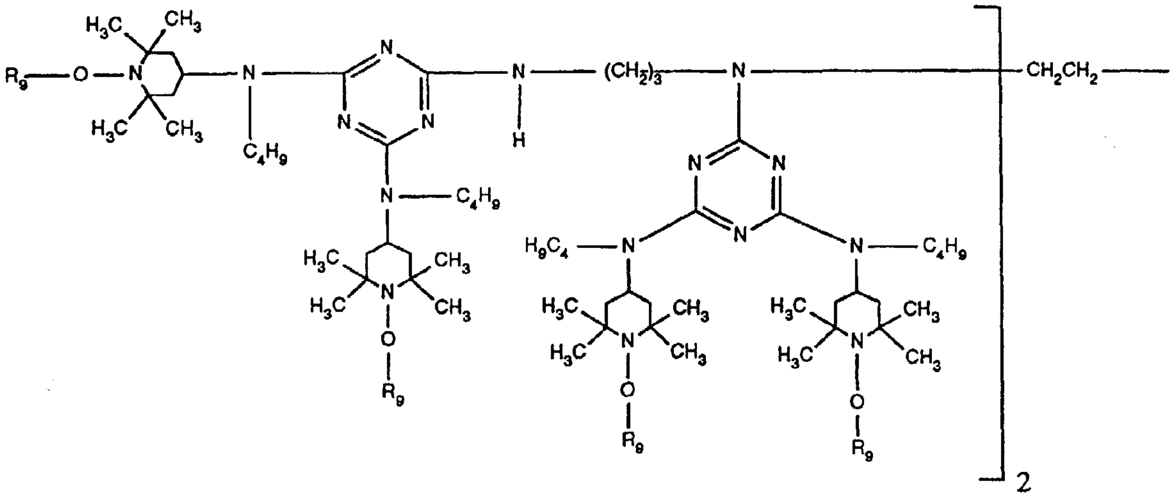

(b-II)

wobei

$R_9$ eine der für $R_1$ angegebenen Bedeutungen hat;

die Komponente c) mindestens eine Verbindung der Formel c-V ist,

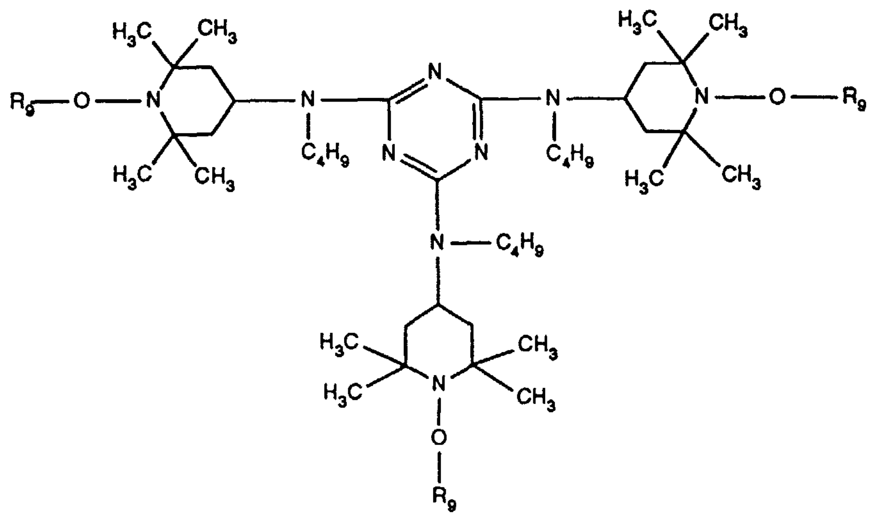

(c-V)

wobei

$R_9$ die oben angegebene Bedeutung besitzt;

die Komponente d) mindestens eine Verbindung der Formel d-VI-1, d-VI-2 oder d-VI-3 ist,

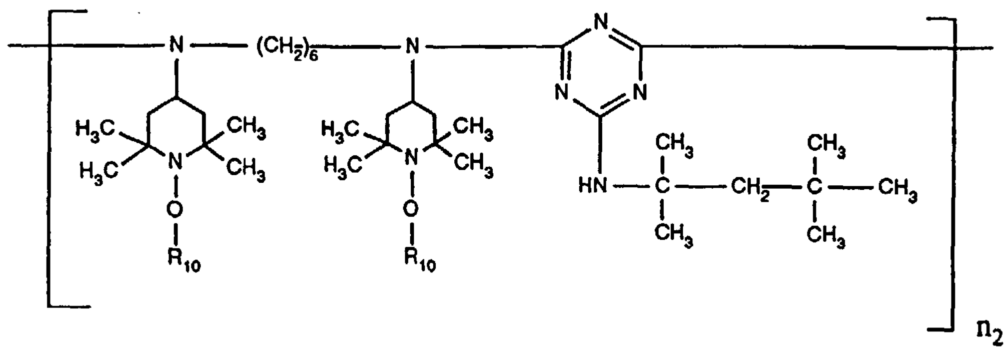

(d-VI-1)

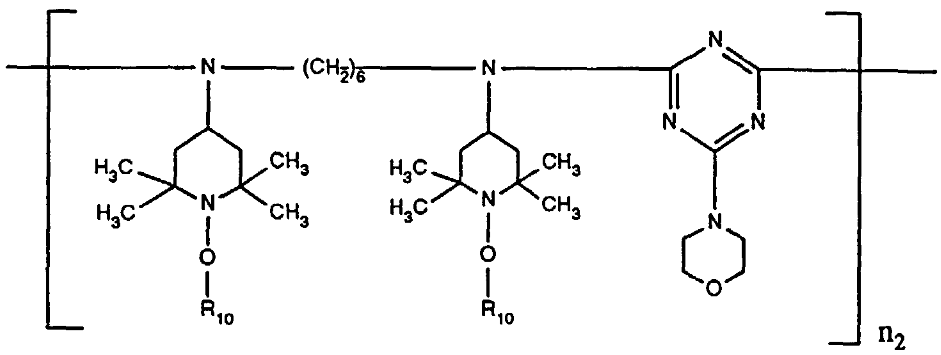

(d-VI-2)

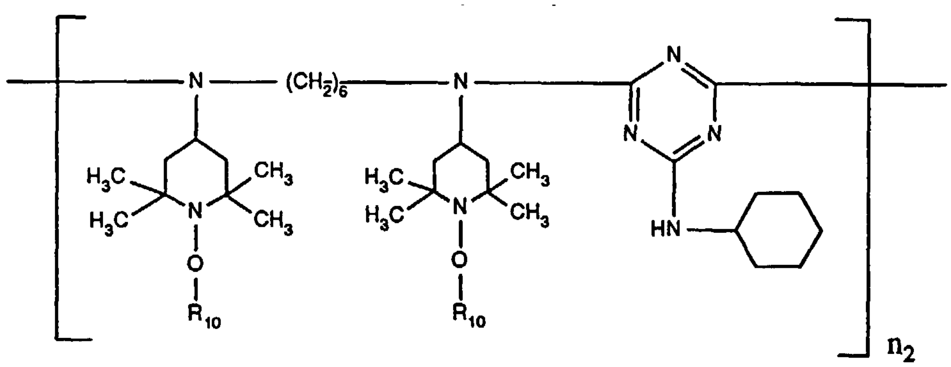

(d-VI-3)

wobei

$R_{10}$ eine der für $R_1$ angegebenen Bedeutungen besitzt und $n_2$ eine Zahl von 2 bis 25 ist;

die Komponente e) mindestens eine Verbindung der Formel e-VII ist,

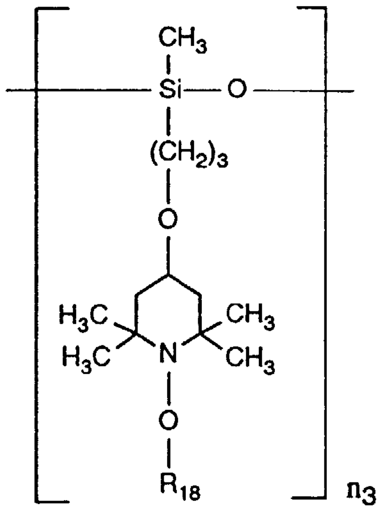

(e-VII)

worin

$R_{18}$ eine der für $R_1$ angegebenen Bedeutungen besitzt und $n_3$ eine Zahl von 1 bis 25 ist;

die Komponente f) ein Produkt bedeutet, erhältlich durch Umsetzung eines durch Reaktion eines Polyamins der Formel

$$H_2N-(CH_2)_3-NH-(CH_2)_2-NH-(CH_2)_3-NH_2$$

mit Cyanursäurechlorid erhaltenen Produktes mit einer Verbindung der Formel

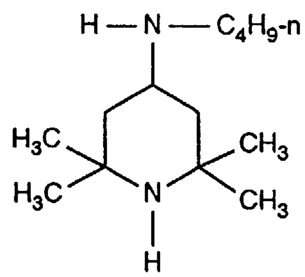

zu einem 2,2,6,6-Tetramethyl-4-piperidylgruppen enthaltenden Triazinderivat und anschliessender Umsetzung der im Triazinderivat enthaltenen 2,2,6,6-Tetramethyl-4-piperidylgruppen zu Gruppen der Formel

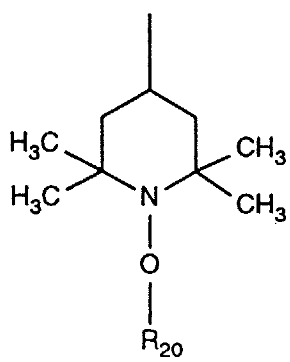

,

wobei

$R_{20}$ eine der für $R_1$ angegebenen Bedeutungen besitzt;

die Komponente g) mindestens eine Verbindung der Formel g-IX-1, g-IX-2 oder g-IX-3 ist,

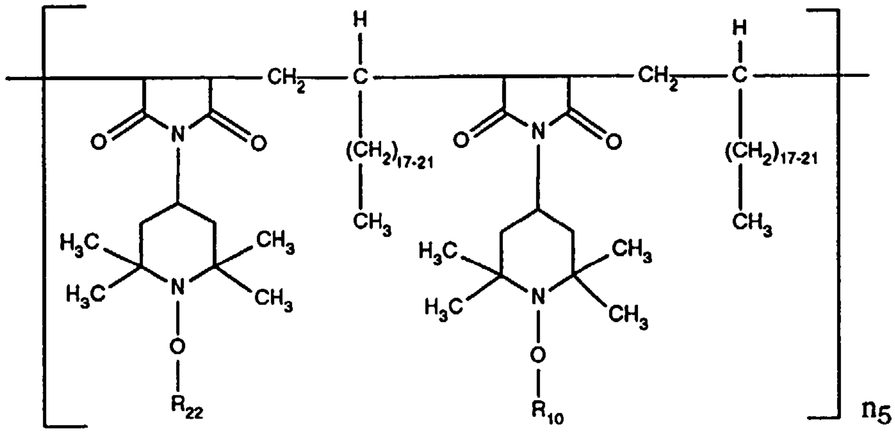

(g-IX-1)

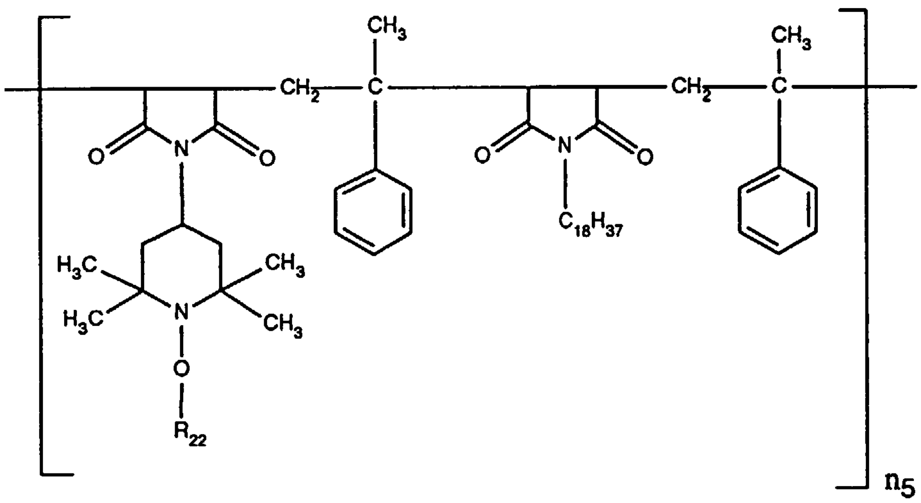

(g-IX-2)

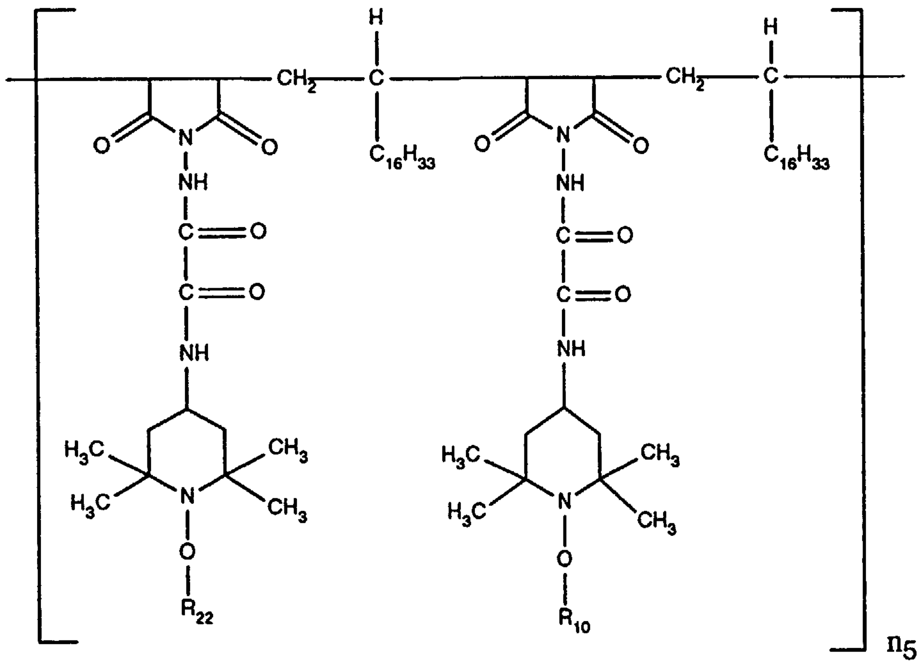

(g-IX-3)

wobei

$R_{10}$ und $R_{22}$ eine der für $R_1$ angegebenen Bedeutungen besitzen und $n_5$ eine Zahl von 1 bis 25 ist;

die Komponente h) mindestens eine Verbindung der Formel h-X ist,

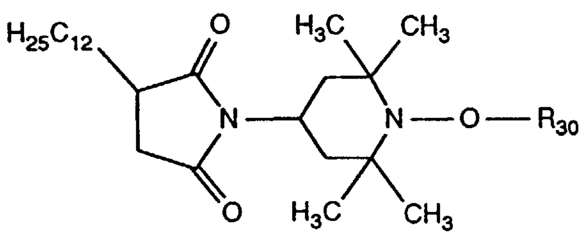

(h-X)

wobei

$R_{30}$ eine der für $R_1$ angegebenen Bedeutungen hat;

die Komponente i) mindestens eine Verbindung der Formel XI ist, worin $R_{31}$ eine der für $R_1$ angegebenen Bedeutungen besitzt und $n_6$ eine Zahl von 2 bis 25 ist;
die Komponente j) mindestens eine Verbindung der Formel j-XII-1 oder j-XII-2 ist,

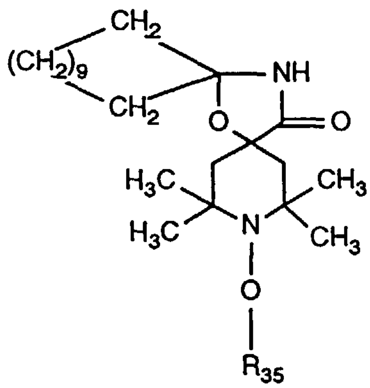

(j-XII-1)

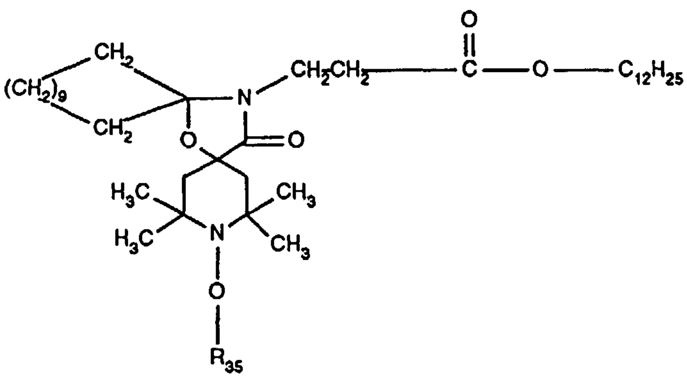

(j-XII-2)

wobei

$R_{35}$ eine der für $R_1$ angegebenen Bedeutungen besitzt;

die Komponente k) mindestens eine Verbindung der Formel k-XIII ist,

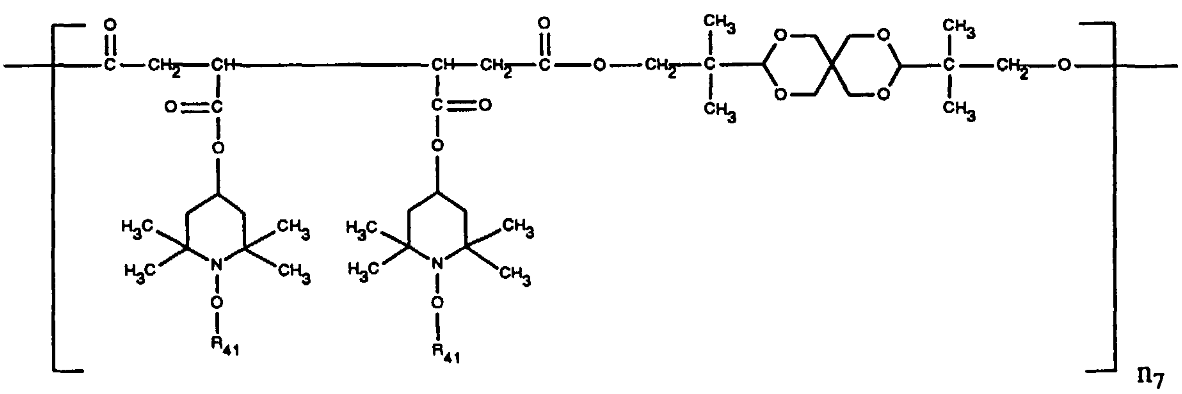

(k-XIII)

wobei

$R_{41}$ eine der für $R_1$ angegebenen Bedeutungen besitzt und $n_7$ eine Zahl von 1 bis 25 darstellt;

die Komponente l) mindestens eine Verbindung der Formel l-XIV ist,

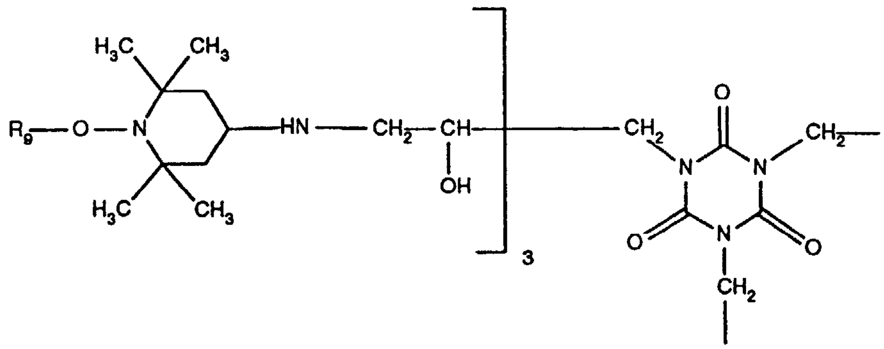

(I-XIV)

wobei

$R_9$ eine der für $R_1$ angegebenen Bedeutungen besitzt.

**10.** Zusammensetzung enthaltend ein gegen oxidativen, thermischen oder lichtinduzierten Abbau empfindliches organisches Material und ein Stabilisatorgemisch gemäss Anspruch 1.

**11.** Zusammensetzung gemäss Anspruch 10, worin das organische Material ein Polyolefin ist.

**12.** Zusammensetzung gemäss Anspruch 10, worin das organische Material Polyethylen, Polypropylen oder ein Copolymer von Polyethylen oder Polypropylen ist.

**13.** Verfahren zum Stabilisieren eines gegen oxidativen, thermischen oder lichtinduzierten Abbau empfindlichen organischen Materials, dadurch gekennzeichnet, dass in das organische Material ein Stabilisatorgemisch gemäss Anspruch 1 eingearbeitet wird.

**Claims**

**1.** A stabilizer mixture comprising at least two different compounds from the group consisting of components a), b), c), d), e), f), g), h), i), j), k) and l), where

component a) is at least one compound of the formula I

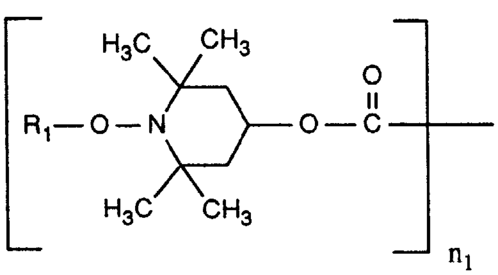

(I)

in which

$R_1$ is hydrogen, $C_1$-$C_{18}$alkyl, $C_5$-$C_{12}$cycloalkyl or $C_1$-$C_4$alkyl-substituted $C_5$-$C_{12}$cycloalkyl,
$n_1$ is 1, 2 or 4,
if $n_1$ is 1, $R_2$ is $C_1$-$C_{25}$alkyl,
if $n_1$ is 2, $R_2$ is $C_1$-$C_{14}$alkylene and
if $n_1$ is 4, $R_2$ is $C_4$-$C_{10}$alkanetetrayl;

component b) is at least one compound of the formula II

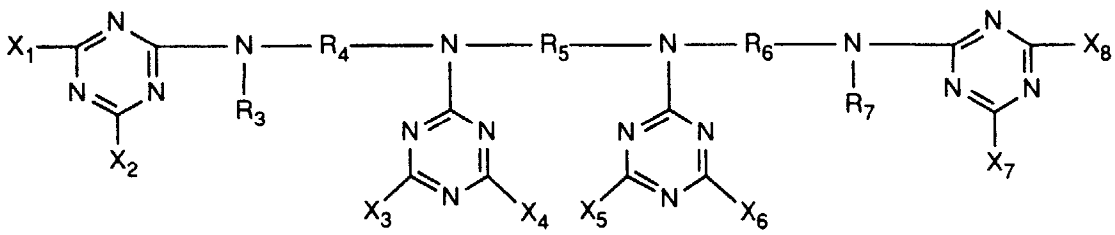

(II)

in which

$R_3$ and $R_7$ independently of one another are hydrogen or $C_1$-$C_{12}$alkyl,
$R_4$, $R_5$ and $R_6$ independently of one another are $C_2$-$C_{10}$alkylene, and
$X_1$, $X_2$, $X_3$, $X_4$, $X_5$, $X_6$, $X_7$ and $X_8$ independently of one another are a group of the formula III

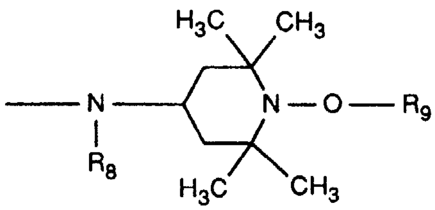

(III)

in which
$R_8$ is hydrogen, $C_1$-$C_{12}$alkyl, $C_5$-$C_{12}$cycloalkyl, $C_1$-$C_4$alkyl-substituted $C_5$-$C_{12}$cycloalkyl, phenyl, -OH- and/or $C_1$-$C_{10}$alkyl-substituted phenyl, $C_7$-$C_9$phenylalkyl, $C_7$-$C_9$phenylalkyl which is substituted on the phenyl radical by -OH and/or $C_1$-$C_{10}$alkyl, or a group of the formula IV

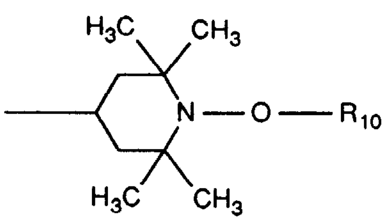

(IV)

and $R_9$ and $R_{10}$ independently of one another are as defined for $R_1$;

component c) is at least one compound of the formula V

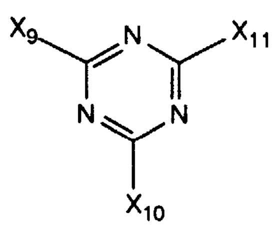

(V)

in which

$X_9$, $X_{10}$ and $X_{11}$ independently of one another are a group of the formula III;

component d) is at least one compound of the formula VI

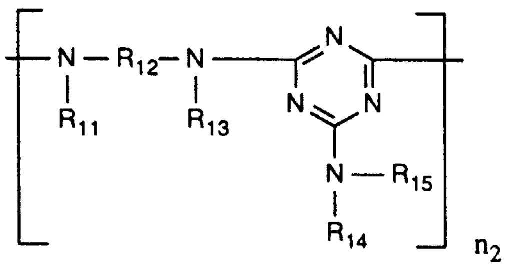

(VI)

in which

$R_{11}$, $R_{13}$, $R_{14}$ and $R_{15}$ independently of one another are hydrogen, $C_1$-$C_{12}$alkyl, $C_5$-$C_{12}$cycloalkyl, $C_1$-$C_4$alkyl-substituted $C_5$-$C_{12}$cycloalkyl, phenyl, -OH- and/or $C_1$-$C_{10}$alkyl-substituted phenyl, $C_7$-$C_9$phenylalkyl, $C_7$-$C_9$phenylalkyl which is substituted on the phenyl radical by -OH and/or $C_1$-$C_{10}$alkyl, or a group of the formula IV,

$R_{12}$ is $C_2$-$C_{18}$alkylene, $C_5$-$C_7$cycloalkylene or $C_1$-$C_4$alkylenedi($C_5$-$C_7$cycloalkylene), or the radicals $R_{11}$, $R_{12}$ and $R_{13}$, together with the nitrogen atoms to which they are attached, form a 5- to 10-membered heterocyclic ring, or

$R_{14}$ and $R_{15}$, together with the nitrogen atom to which they are attached, form a 5- to 10-membered heterocyclic ring,

$n_2$ is a number from 2 to 50, and

at least one of the radicals $R_{11}$, $R_{13}$, $R_{14}$ and $R_{15}$ is a group of the formula IV;

component e) is at least one compound of the formula VII

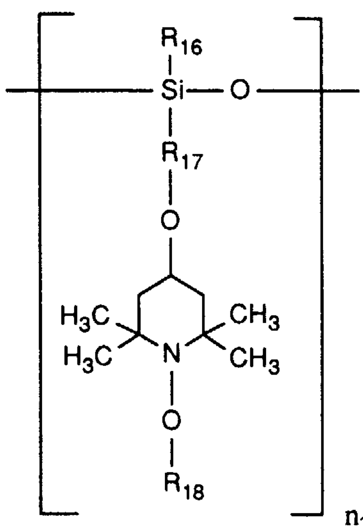

(VII)

in which

$R_{16}$ is $C_1$-$C_{10}$alkyl, $C_5$-$C_{12}$cycloalkyl, $C_1$-$C_4$alkyl-substituted $C_5$-$C_{12}$cycloalkyl, phenyl or $C_1$-$C_{10}$alkyl-substituted phenyl,

$R_{17}$ is $C_3$-$C_{10}$alkylene,

$R_{18}$ is as defined for $R_1$, and

$n_3$ is a number from 1 to 50;

component f) is a product obtainable by reacting a product, obtained by reaction between a polyamine of the formula VIIIa and cyanuric chloride, with a compound of the formula VIIIb to form a triazine derivative which contains 2,2,6,6-tetramethyl-4-piperidyl groups, and then reacting the 2,2,6,6-tetramethyl-4-piperidyl groups present in the triazine derivative to form groups of the formula VIIIc

$$H_2N-(CH_2)_{n_4'}-NH-(CH_2)_{n_4''}-NH-(CH_2)_{n_4'''}-NH_2 \quad \text{(VIIIa)}$$

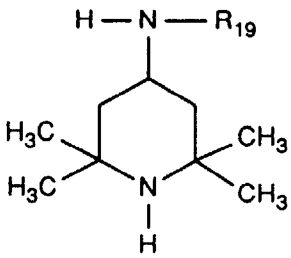

(VIIIb)

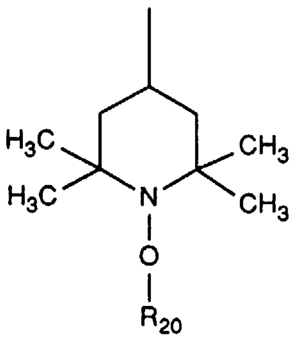

(VIIIc)

in which

$n_4'$, $n_4''$ and $n_4'''$ independently of one another are a number from 2 to 12,
$R_{19}$ is hydrogen, $C_1$-$C_{12}$alkyl, $C_5$-$C_{12}$cycloalkyl, phenyl or $C_7$-$C_9$phenylalkyl, and
$R_{20}$ is as defined for $R_1$;

component g) is at least one compound of the formula IX

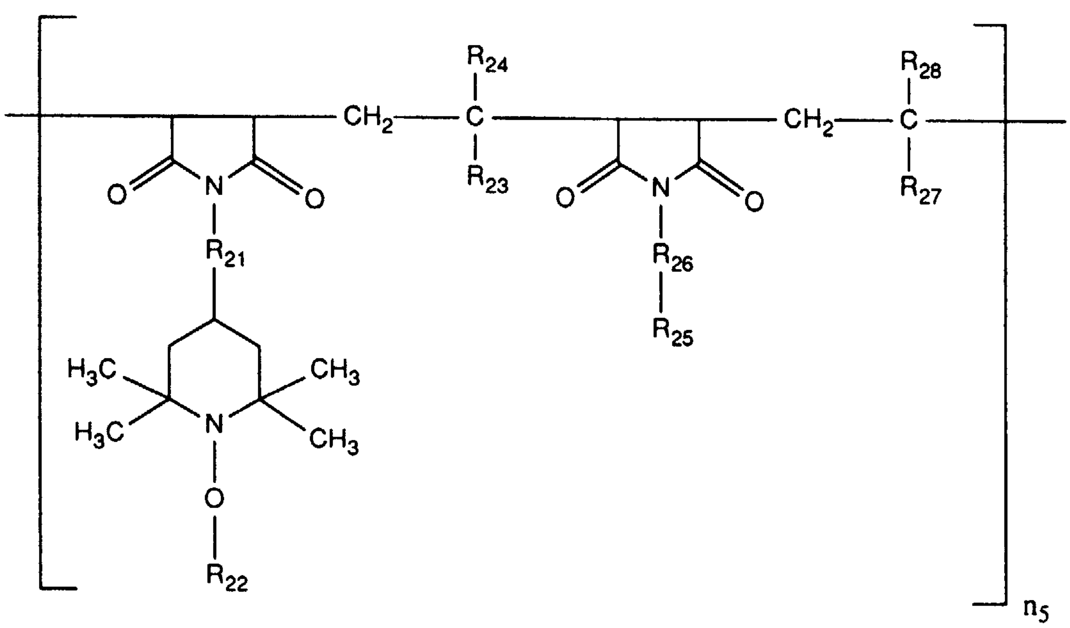

(IX)

in which

$R_{21}$ and $R_{26}$ independently of one another are a direct bond or a group -N($Y_1$)-CO-$Y_2$-CO-N($Y_3$)-, $Y_1$ and $Y_3$ independently of one another are hydrogen,
$C_1$-$C_8$alkyl, $C_5$-$C_{12}$cycloalkyl, phenyl, $C_7$-$C_9$phenylalkyl or a group of the formula IV, $Y_2$ is a direct bond or $C_1$-$C_4$alkylene,
$R_{22}$ is as defined for $R_1$,
$R_{23}$, $R_{24}$, $R_{27}$ and $R_{28}$ independently of one another are hydrogen, $C_1$-$C_{30}$alkyl, $C_5$-$C_{12}$cycloalkyl or phenyl,
$R_{25}$ is hydrogen, $C_1$-$C_{30}$alkyl, $C_5$-$C_{12}$cycloalkyl, phenyl, $C_7$-$C_9$phenylalkyl or a group of the formula IV, and
$n_5$ is a number from 1 to 50;

component h) is at least one compound of the formula X

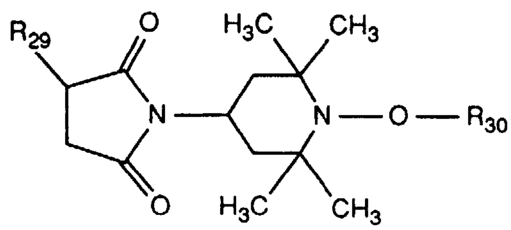

(X)

in which

$R_{29}$ is $C_1$-$C_{24}$alkyl and
$R_{30}$ is as defined for $R_1$;

component i) is at least one compound of the formula XI

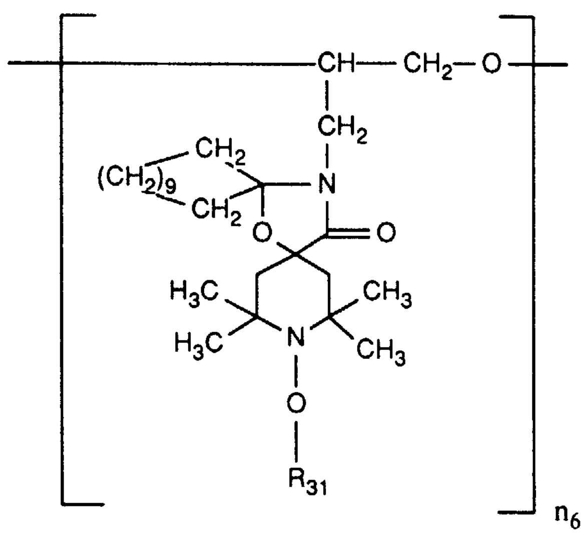

(XI)

in which

$R_{31}$ is as defined for $R_1$ and
$n_6$ is a number from 2 to 50;

component j) is at least one compound of the formula XII

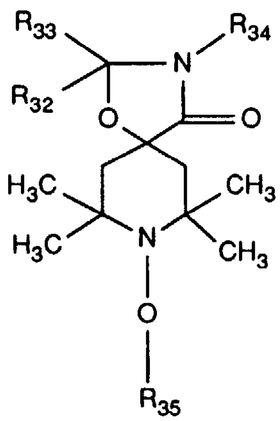

(XII)

in which

$R_{32}$ and $R_{33}$ together form $C_2$-$C_{14}$alkylene,
$R_{34}$ is hydrogen or a group -$Z_1$-COO-$Z_2$, $Z_1$ is $C_2$-$C_{14}$alkylene and $Z_2$ is $C_1$-$C_{24}$alkyl, and
$R_{35}$ is as defined for $R_1$;

component k) is at least one compound of the formula XIII

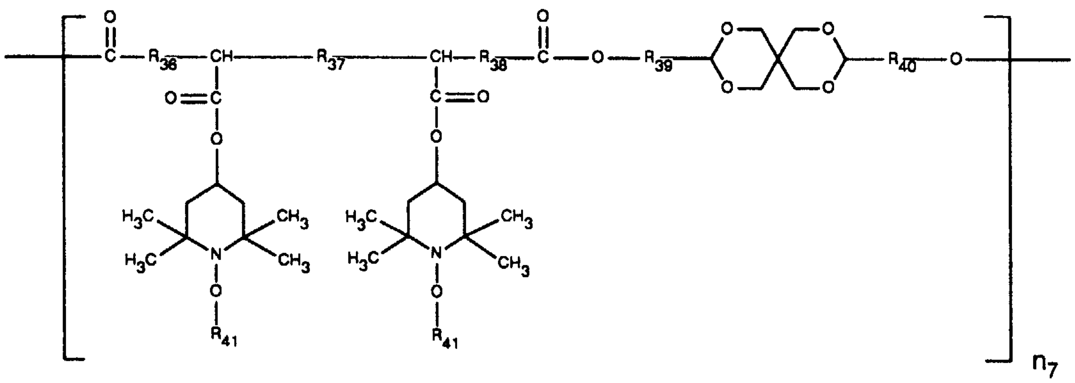

(XIII)

in which

$R_{36}$, $R_{37}$, $R_{38}$, $R_{39}$ and $R_{40}$ independently of one another are a direct bond or $C_1$-$C_{10}$alkylene,
$R_{41}$ is as defined for $R_1$, and
$n_7$ is a number from 1 to 50;

component l) is at least one compound of the formula XIV

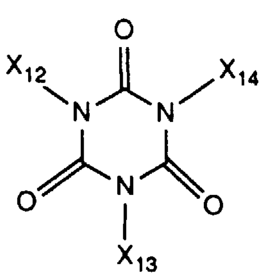

(XIV)

in which

$X_{12}$, $X_{13}$ and $X_{14}$ independently of one another are a group of the formula XV

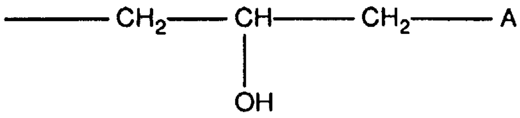

(XV)

in which A is a group of the formula III.

2. A stabilizer mixture according to claim 1, in which $R_1$, $R_9$, $R_{10}$, $R_{18}$, $R_{20}$, $R_{22}$, $R_{30}$, $R_{31}$, $R_{35}$ and $R_{41}$ independently of one another are $C_1$-$C_{12}$alkyl, $C_5$-$C_8$cycloalkyl or methyl-substituted $C_5$-$C_8$cycloalkyl.

3. A stabilizer mixture according to claim 1, in which $R_1$, $R_9$, $R_{10}$, $R_{18}$, $R_{20}$, $R_{22}$, $R_{30}$, $R_{31}$, $R_{35}$ and $R_{41}$ independently of one another are methyl, octyl or cyclohexyl.

4. A stabilizer mixture according to claim 1, comprising at least one compound of component a) and at least one compound of component b), c), d), e), f), g), h), i), j), k) or l).

5. A stabilizer mixture according to claim 1, comprising at least one compound of component a) and at least one compound of component b), c), d), e), f), g), h) or j).

6. A stabilizer mixture according to claim 1, comprising at least one compound of component b) and at least one compound of component d), e), f), g) or k).

7. A stabilizer mixture according to claim 1, comprising at least one compound of component c) and at least one compound of component a), b), d), e), f), g), h) or j).

8. A stabilizer mixture according to claim 1,

in which $n_1$ is 1, 2 or 4,
if $n_1$ is 1, $R_2$ is $C_{10}$-$C_{20}$alkyl,
if $n_1$ is 2, $R_2$ is $C_6$-$C_{10}$alkylene, and
if $n_1$ is 4, $R_2$ is butanetetrayl;

$R_3$ and $R_7$ independently of one another are hydrogen or $C_1$-$C_4$alkyl,
$R_4$, $R_5$ and $R_6$ independently of one another are $C_2$-$C_6$alkylene,
$R_8$ is hydrogen, $C_1$-$C_6$alkyl, $C_5$-$C_8$cycloalkyl, methyl-substituted $C_5$-$C_8$cycloalkyl, phenyl, $C_7$-$C_9$phenylalkyl or a group of the formula IV;
$R_{11}$, $R_{13}$, $R_{14}$ and $R_{15}$ independently of one another are hydrogen, $C_1$-$C_8$alkyl, $C_5$-$C_8$cycloalkyl, methyl-substituted $C_5$-$C_8$cycloalkyl, phenyl, $C_7$-$C_9$phenylalkyl or a group of the formula IV, or the radicals $R_{14}$ and $R_{15}$, together with the nitrogen atom to which they are attached, form a 6-membered heterocyclic ring,
$R_{12}$ is $C_2$-$C_{10}$alkylene, and
$n_2$ is a number from 2 to 25;

$R_{16}$ is $C_1$-$C_4$alkyl, $C_5$-$C_8$cycloalkyl or phenyl,
$R_{17}$ is $C_3$-$C_6$alkylene, and
$n_3$ is a number from 1 to 25;

$n_4'$, $n_4''$ and $n_4'''$ independently of one another are a number from 2 to 4, and
$R_{19}$ is $C_1$-$C_4$alkyl;

$R_{21}$ and $R_{26}$ independently of one another are a direct bond or a group $-N(Y_1)-CO-Y_2-CO-N(Y_3)-$, $Y_1$ and $Y_3$ independently of one another are hydrogen or $C_1$-$C_4$alkyl, $Y_2$ is a direct bond,
$R_{23}$ and $R_{27}$ are $C_1$-$C_{25}$alkyl or phenyl,
$R_{24}$ and $R_{28}$ are hydrogen or $C_1$-$C_4$alkyl,
$R_{25}$ is $C_1$-$C_{25}$alkyl or a group of the formula IV, and
$n_5$ is a number from 1 to 25;

$R_{29}$ is $C_8$-$C_{15}$alkyl;

$n_6$ is a number from 2 to 25;

$R_{32}$ and $R_{33}$ together form $C_8$-$C_{14}$alkylene,
$R_{34}$ is hydrogen or a group -$Z_1$-COO-$Z_2$, $Z_1$ is $C_2$-$C_6$alkylene and $Z_2$ is $C_8$-$C_{15}$alkyl;

$R_{36}$, $R_{38}$, $R_{39}$ and $R_{40}$ independently of one another are $C_1$-$C_4$alkylene,
$R_{37}$ is a direct bond, and
$n_7$ is a number from 1 to 25.

**9.** A stabilizer mixture according to claim 1, wherein

component a) is at least one compound of the formula a-I-1, a-I-2 or a-I-3

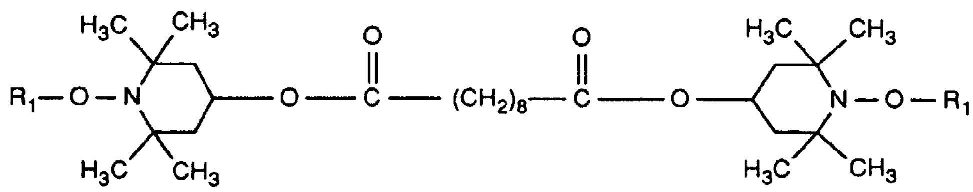

(a-I-1)

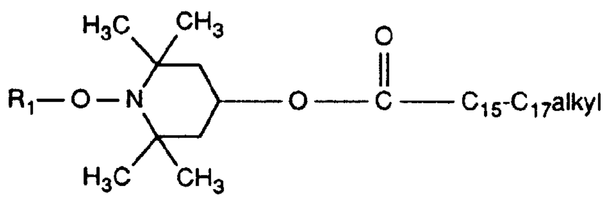

(a-I-2)

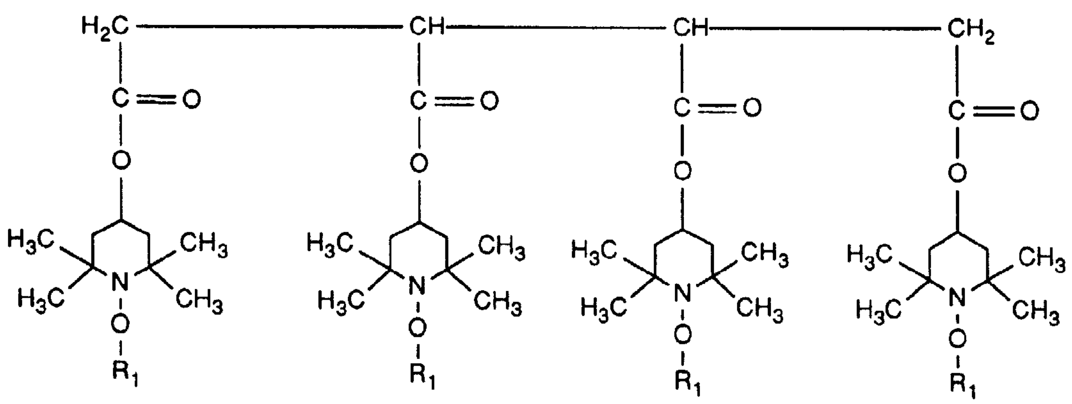

(a-I-3)

in which

$R_1$ is methyl, octyl or cyclohexyl;

component b) is at least one compound of the formula b-II,

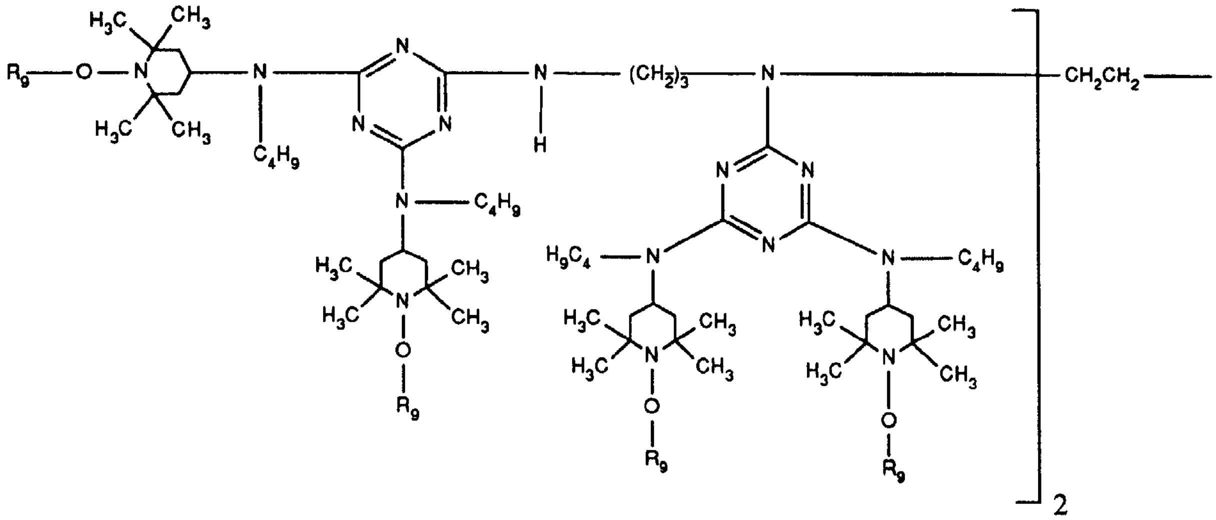

(b-II)

in which

$R_9$ is as defined for $R_1$;

component c) is at least one compound of the formula c-V

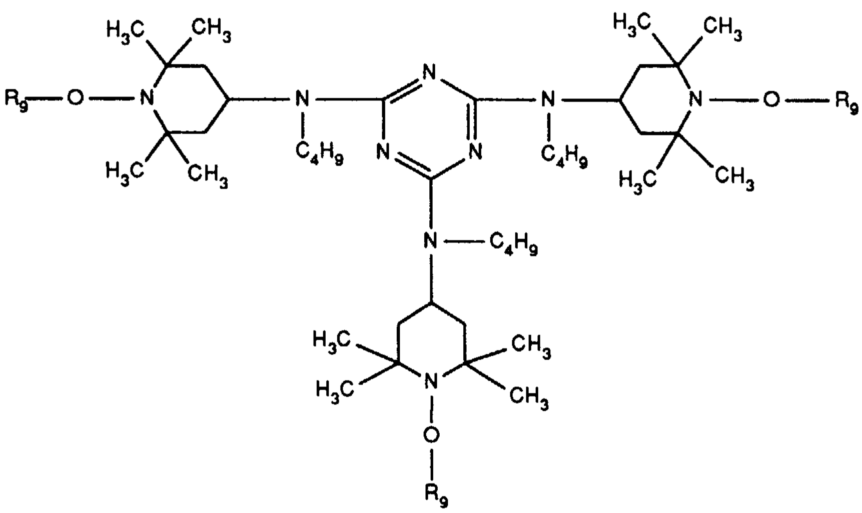

(c-V)

in which

$R_9$ is as defined above;

component d) is at least one compound of the formula d-VI-1, d-VI-2 or d-VI-3

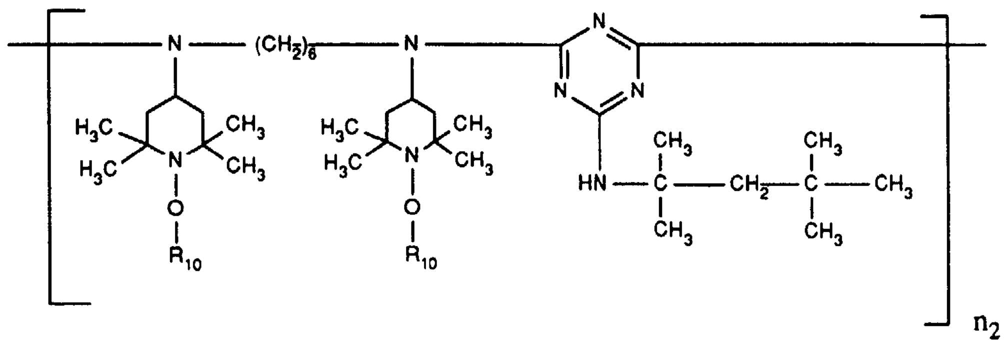

(d-VI-1)

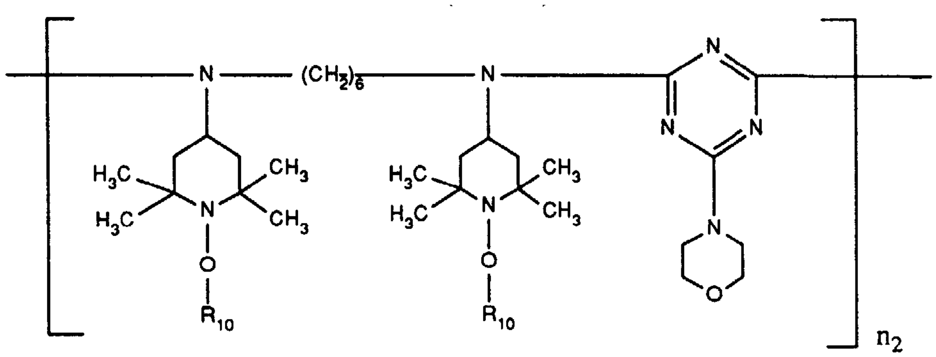

(d-VI-2)

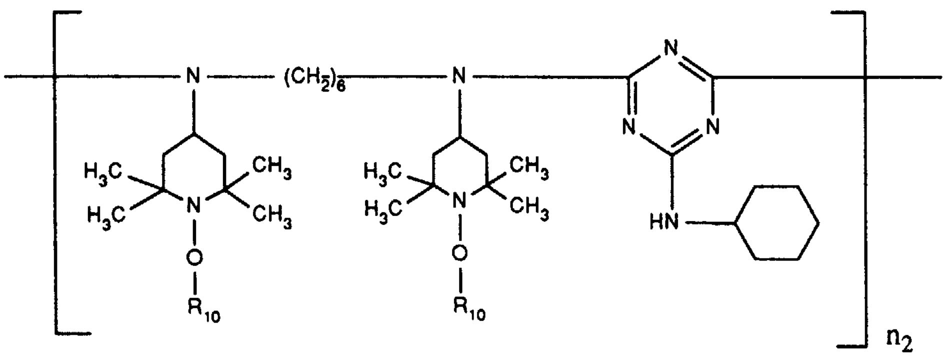

(d-VI-3)

in which

$R_{10}$ is as defined for $R_1$ and $n_2$ is a number from 2 to 25;

component e) is at least one compound of the formula e-VII

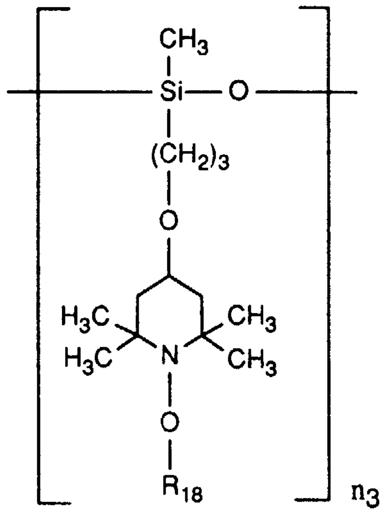

(e-VII)

in which

$R_{18}$ is as defined for $R_1$ and $n_3$ is a number from 1 to 25;

component f) is a product obtainable by reacting a product, obtained by reaction between a polyamine of the formula

$$H_2N-(CH_2)_3-NH-(CH_2)_2-NH-(CH_2)_3-NH_2$$

and cyanuric chloride, with a compound of the formula

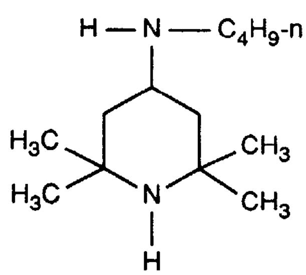

to form a triazine derivative which contains 2,2,6,6-tetramethyl-4-piperidyl groups, and then reacting the 2,2,6,6-tetramethyl-4-piperidyl groups present in the triazine derivative to form groups of the formula

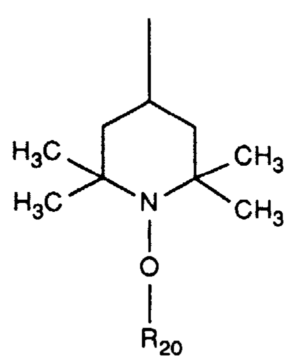

,

in which

$R_{20}$ is as defined for $R_1$;

component g) is at least one compound of the formula g-IX-1, g-IX-2 or g-IX-3

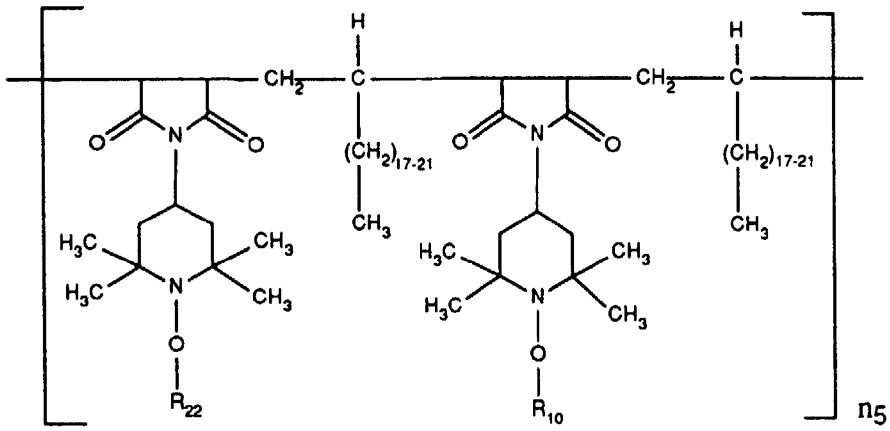

(g-IX-1)

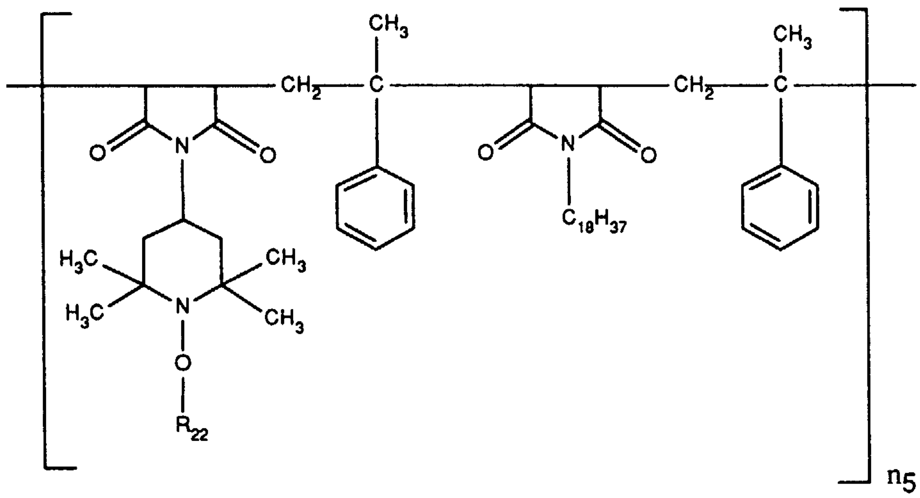

(g-IX-2)

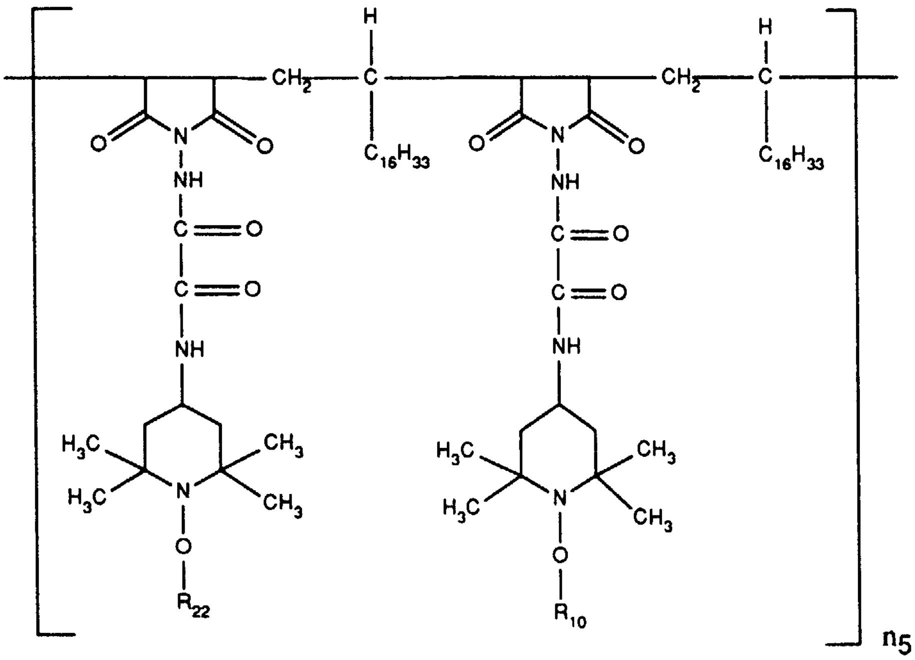

(g-IX-3)

in which

$R_{10}$ and $R_{22}$ are as defined for $R_1$ and $n_5$ is a number from 1 to 25;

component h) is at least one compound of the formula h-X

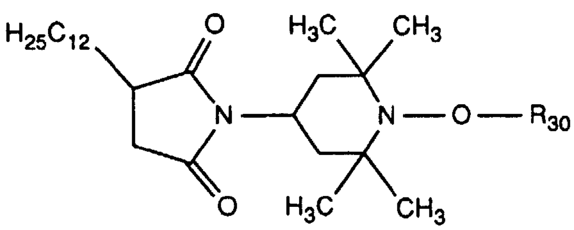

(h-X)

in which

$R_{30}$ is as defined for $R_1$;

component i) is at least one compound of the formula XI in which $R_{31}$ is as defined for $R_1$ and $n_6$ is a number from 2 to 25;

component j) is at least one compound of the formula j-XII-1 or j-XII-2

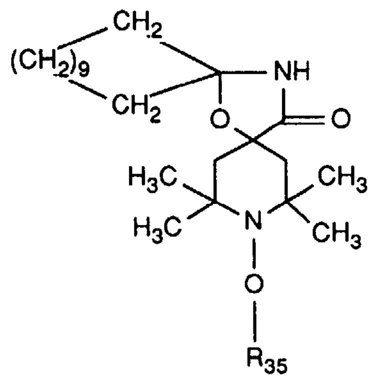

(j-XII-1)

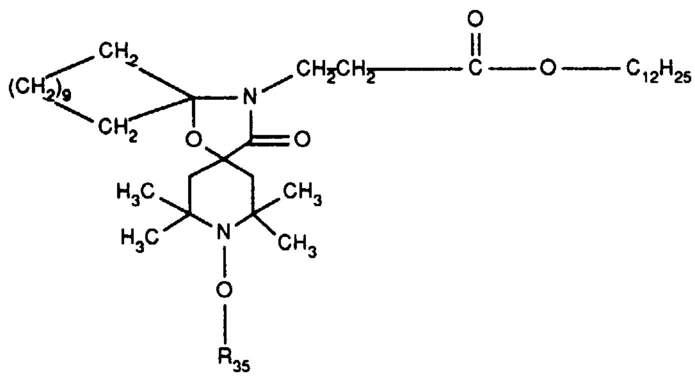

(j-XII-2)

in which

$R_{35}$ is as defined for $R_1$;

component k) is at least one compound of the formula k-XIII

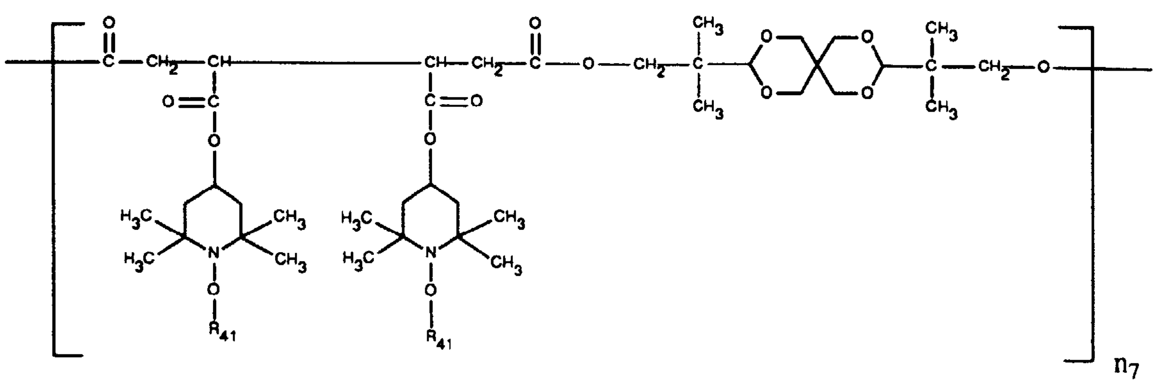

(k-XIII)

in which

$R_{41}$ is as defined for $R_1$ and $n_7$ is a number from 1 to 25;

component l) is at least one compound of the formula l-XIV

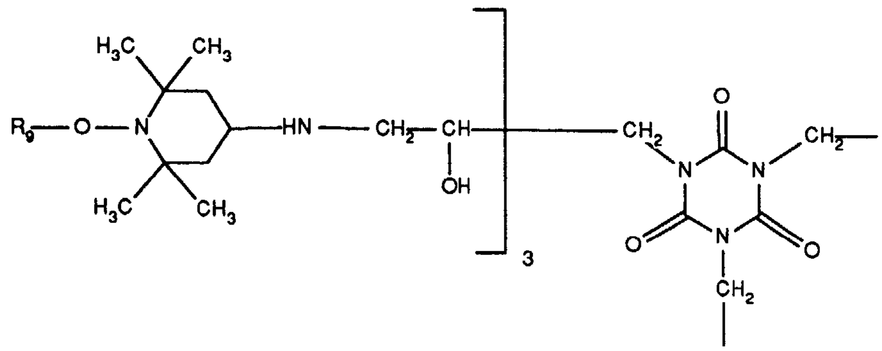

(1-XIV)

in which

$R_9$ is as defined for $R_1$.

**10.** A composition comprising an organic material which is sensitive to oxidative, thermal or light-induced degradation and a stabilizer mixture according to claim 1.

**11.** A composition according to claim 10, wherein the organic material is a polyolefin.

**12.** A composition according to claim 10, wherein the organic material is polyethylene, polypropylene or a copolymer of polyethylene or polypropylene.

**13.** A method of stabilizing an organic material which is sensitive to oxidative, thermal or light-induced degradation, which comprises incorporating into the organic material a stabilizer mixture according to claim 1.

## Revendications

**1.** Mélange de stabilisants contenant au moins deux composés différents du groupe des composants a), b), c), d), e), f), g), h), i), j), k) et 1),

le composant a) étant au moins un composé de formule I

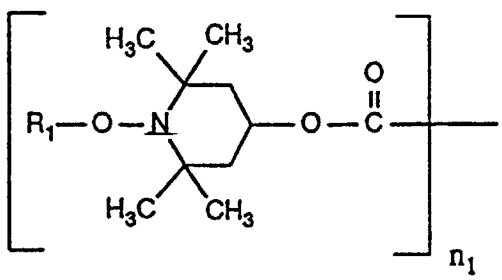

(I)

dans laquelle

$R_1$ représente un atome d'hydrogène, des groupes alkyle en $C_1$-$C_{18}$, cycloalkyle en $C_5$-$C_{12}$ ou cycloalkyle en $C_5$-$C_{12}$ substitué par alkyle en $C_1$-$C_4$,
$n_1$ vaut 1, 2 ou 4

lorsque $n_1$ vaut 1, $R_2$ représente alkyle en $C_1$-$C_{25}$,
lorsque $n_1$ vaut 2, $R_2$ représente alkylène en $C_1$-$C_{14}$ et
lorsque $n_1$ vaut 4, $R_2$ représente alcanetétrayle en $C_4$-$C_{10}$,
le composant b) est au moins un composé de formule II

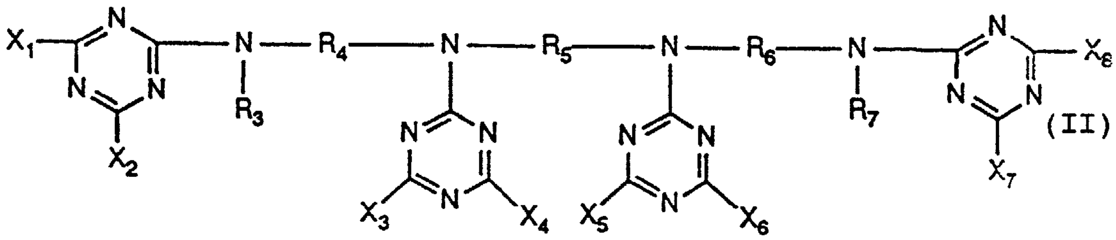

(II)

dans laquelle

| | |
|---|---|
| $R_3$ et $R_7$, | indépendamment l'un de l'autre, représentent un atome d'hydrogène ou un groupe alkyle en $C_1$-$C_{12}$, |
| $R_4$, $R_5$ et $R_6$, | indépendamment l'un de l'autre, représentent un groupe alkylène en $C_2$-$C_{10}$ et |
| $X_1$, $X_2$, $X_3$, $X_4$, $X_5$, $X_6$, $X_7$ et $X_8$, | indépendamment l'un de l'autre, représentent un groupe de formule III |

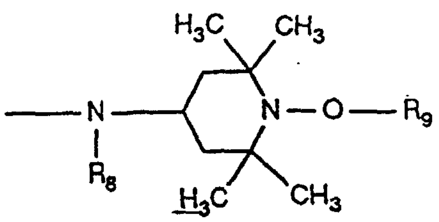

(III)

dans laquelle

| | |
|---|---|
| $R_8$ | représente un atome d'hydrogène, des groupes alkyle en $C_1$-$c_{12}$, cycloalkyle en $C_5$-$C_{12}$, cycloalkyle en $C_5$-$C_{12}$ substitué par alkyle en $C_1$-$C_4$, phényle, phényle substitué par -OH et/ou alkyle en $C_1$-$C_{10}$, phénylalkyle en $C_7$-$C_9$, phénylalkyle en $C_7$-$C_9$ substitué sur le reste phényle par -OH et/ou alkyle en $C_1$-$C_{10}$, ou représente un groupe de formule IV |

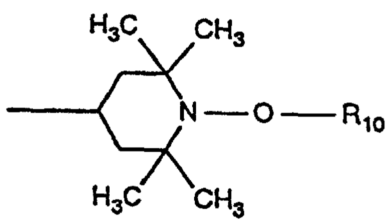

(IV)

| | |
|---|---|
| $R_9$ et et $R_{10}$, | indépendamment l'un de l'autre, possèdent l'une des significations données pour $R_1$ ; |

le composant c) représente au moins un composé de formule V

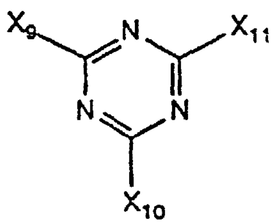

(V)

dans laquelle

$X_9$, $X_{10}$ et $X_{11}$, indépendamment les uns des autres, représentent un groupe de formule III ;

le composant d) représente au moins un composé de formule VI

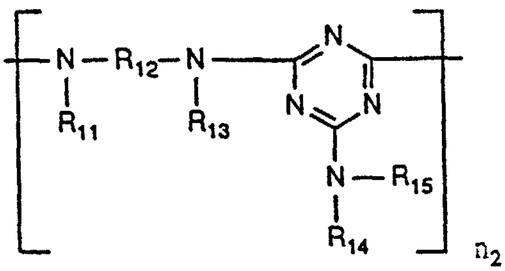

(VI)

dans laquelle

$R_{11}$, $R_{13}$, $R_{14}$ et $R_{15}$, indépendamment les uns des autres, représentent un atome d'hydrogène, des groupes alkyle en $C_1$-$C_{12}$, cycloalkyle en $C_5$-$C_{12}$, cycloalkyle en $C_5$-$C_{12}$ substitué par alkyle en $C_1$-$C_4$, phényle, phényle substitué par -OH et/ou alkyle en $C_1$-$C_{10}$, phénylalkyle en $C_7$-$C_9$, phénylalkyle en $C_7$-$C_9$ substitué sur le reste phényle par -OH et/ou alkyle en $C_1$-$C_{10}$, ou représente un groupe de formule IV,

$R_{12}$ représente des groupes alkylène en $C_2$-$C_{18}$, cycloalkylène en $C_5$-$C_7$ ou (alkylène en $C_1$-$C_4$)-di(cycloalkylène en $C_5$-$C_7$) ou

les restes $R_{11}$, $R_{12}$ et $R_{13}$, ensemble avec l'atome d'azote auquel ils sont liés, forment un hétérocycle de 5 à 10 chaînons, ou

$R_{14}$ et $R_{15}$, ensemble avec l'atome d'azote auquel ils sont liés, forment un hétérocycle de 5 à 10 chaînons,

$n_2$ représente un nombre de 2 à 50 et

au moins l'un des restes $R_{11}$, $R_{13}$, $R_{14}$ et $R_{15}$ représente un groupe de formule IV ;
le composant e) représente au moins un composé de formule VII,

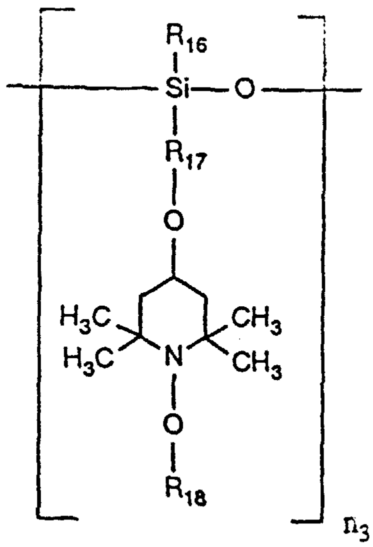

(VII)

dans laquelle

- $R_{16}$ représente des groupes alkyle $C_1$-$C_{10}$, cycloalkyle en $C_5$-$C_{12}$, cycloalkyle en $C_5$-$C_{12}$ substitué par alkyle en $C_1$-$C_4$, phényle ou phényle substitué par alkyle en $C_1$-$C_{10}$,
- $R_{17}$ représente un groupe alkylène en $C_3$-$C_{10}$,
- $R_{18}$ possède une des significations données pour $R_1$ et
- $n_3$ représente un nombre de 1 à 50 ;

le composant f) représente un produit que l'on peut obtenir par réaction d'un produit, obtenu par réaction d'une polyamine de formule VIIIa avec du chlorure de cyanuryle, avec un composé de formule VIIIb pour donner un dérivé de la triazine contenant un groupe 2,2,6,6-tétraméthyl-4-pipéridyle et par réaction ultérieure du groupe 2,2,6,6-tétraméthyl-4-pipéridyle contenu dans le dérivé de la triazine pour donner des groupes de formule VIIIc,

$$H_2N-(CH_2)_{n_4'}-NH-(CH_2)_{n_4''}-NH-(CH_2)_{n_4'''}-NH_2$$ (VIIIa)

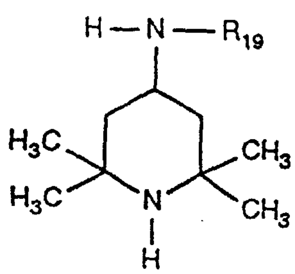

(VIIIb)

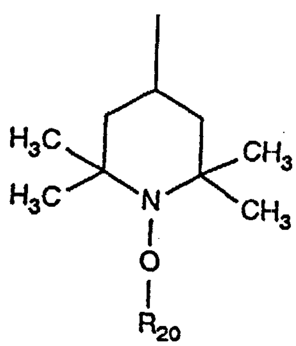

(VIIIc)

dans laquelle

$n_4'$, $n_4''$ et $n_4'''$, indépendamment les uns des autres., représentent un nombre de 2 à 12,

$R_{19}$ représente un atome d'hydrogène, des groupes alkyle en $C_1$-$C_{12}$, cycloalkyle en $C_5$-$C_{12}$, phényle ou phénylalkyle en $C_7$-$C_9$ et

$R_{20}$ possède l'une des significations données pour $R_1$ ;

le composant g) représente au moins un composé de formule IX,

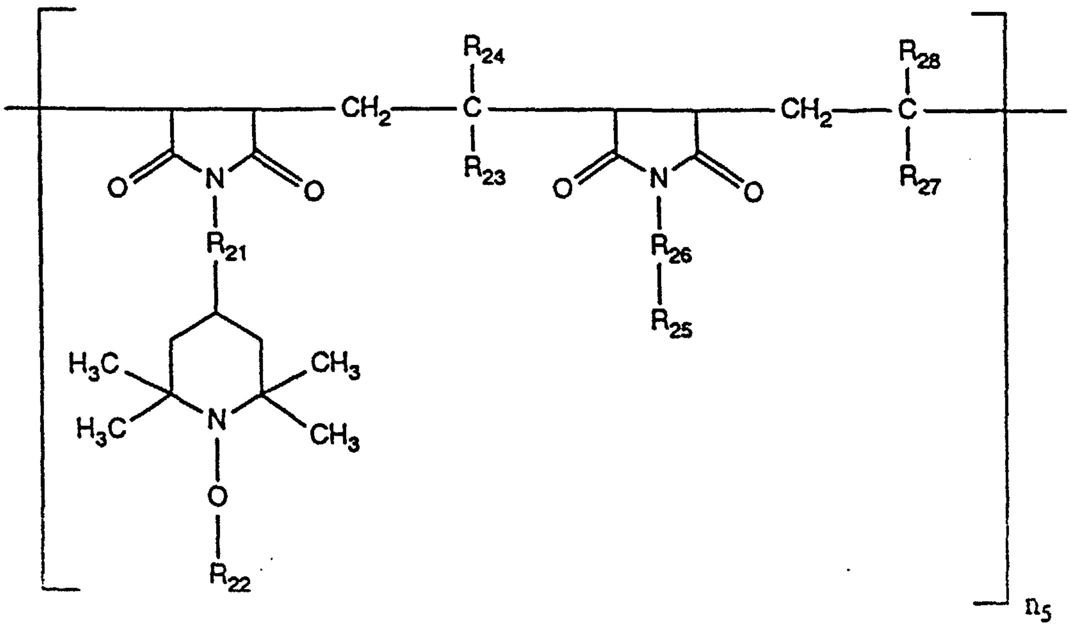

(IX)

dans laquelle

$R_{21}$ et $R_{26}$, indépendamment l'un de l'autre, représentent une liaison directe ou un groupe -$N(Y_1)$-CO-$Y_2$-CO-N-$(Y_3)$-, $Y_1$ et $Y_3$, indépendamment l'un de l'autre, représentent un atome d'hydrogène, des groupes alkyle en $C_1$-$C_8$, cycloalkyle en $C_5$-$C_{12}$, phényle, phénylalkyle en $C_7$-$C_9$ ou un groupe de formule IV, $Y_2$ représente une liaison directe ou un groupe alkylène en $C_1$-$C_4$,

$R_{22}$ possède l'une des significations données pour $R_1$,

$R_{23}$, $R_{24}$, $R_{27}$ et $R_{28}$, indépendamment l'un de l'autre, représentent un atome d'hydrogène, un groupe alkyle en $C_1$-$C_{30}$, cycloalkyle en $C_5$-$C_{12}$ ou phényle,

$R_{25}$ représente un atome d'hydrogène, des groupes alkyle en $C_1$-$C_{30}$, cycloalkyle en $C_5$-$C_{12}$, phényle, phénylalkyle en $C_7$-$C_9$ ou un groupe de formule IV, et

$n_5$ représente un nombre de 1 à 50 ;

le composant h) représente au moins un composé de formule X,

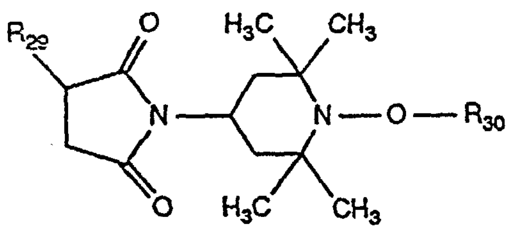

(X)

dans laquelle

$R_{29}$ représente un groupe alkyle en $C_1$-$C_{24}$ et
$R_{30}$ possède l'une des significations données pour $R_1$ ;

le composant i) représente au moins un composé de formule XI,

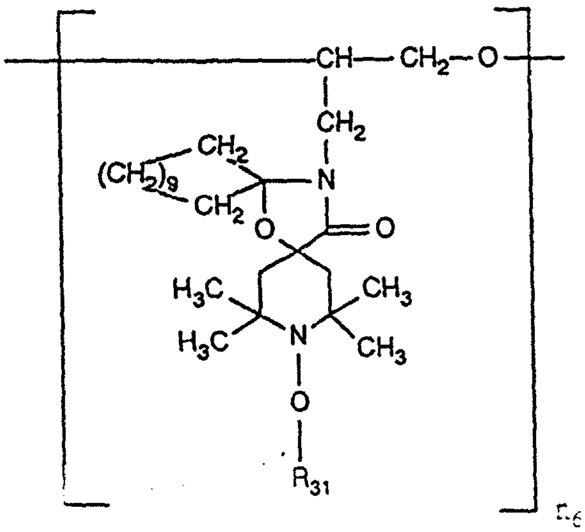

(XI)

dans laquelle

$R_{31}$ possède l'une des significations données pour $R_1$ et
$n_6$ représente un nombre de 2 à 50 ;

le composant j) est au moins un composé de formule XII,

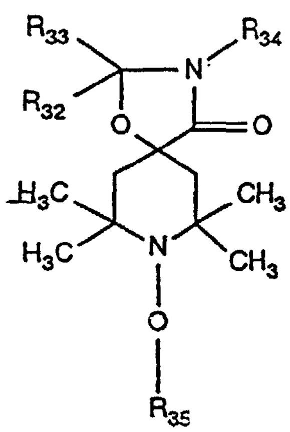

(XII)

dans laquelle

$R_{32}$ et $R_{33}$ ensemble forment un groupe alkylène en $C_2$-$C_{14}$,
$R_{34}$ représente un atome d'hydrogène ou un groupe -$Z_1$-COO-$Z_2$-, $Z_1$ représente un groupe alkylène en $C_2$-$C_{14}$ et $Z_2$ un groupe alkyle $C_1$-$C_{24}$ et
$R_{35}$ possède l'une des significations données pour $R_1$ ;

le composant k) est au moins un composé de formule XIII

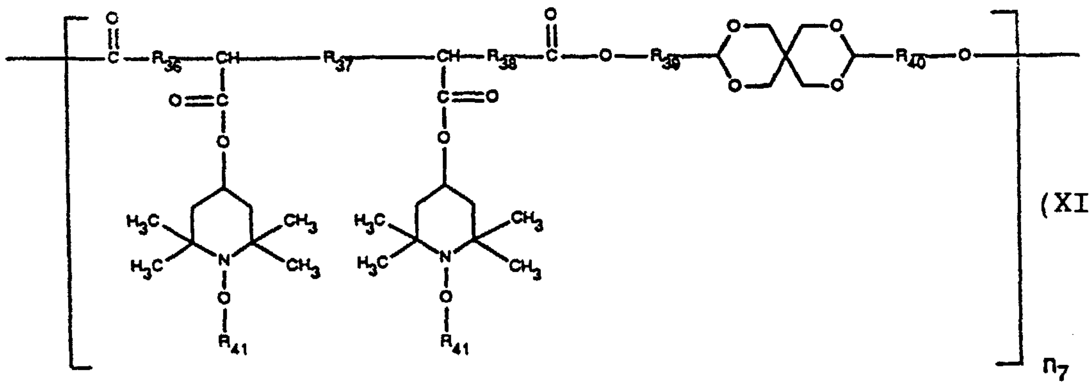

(XIII)

dans laquelle

| | |
|---|---|
| $R_{36}$, $R_{37}$, $R_{38}$, $R_{39}$ et $R_{40}$, | indépendamment les uns des autres, représentent une liaison directe ou un groupe alkylène en $C_1$-$C_{10}$, |
| $R_{41}$ | possède l'une des significations données pour $R_1$ et |
| $n_7$ | est un nombre de 1 à 50 ; |

le composant l) est au moins un composé de formule XIV,

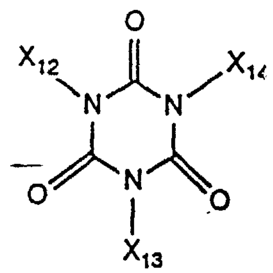

(XIV)

dans laquelle

| | |
|---|---|
| $X_{12}$, $X_{13}$ et $X_{14}$, | indépendamment les uns des autres, représentent un groupe de formule XV |

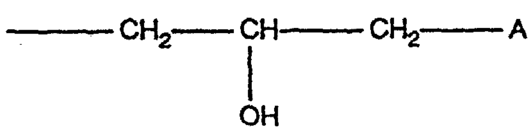

(XV)

dans laquelle A représente un groupe de formule III.

2. Mélange de stabilisants selon la revendication 1, dans lequel $R_1$, $R_9$, $R_{10}$, $R_{18}$, $R_{20}$, $R_{22}$, $R_{30}$, $R_{31}$, $R_{35}$ et $R_{41}$, indépendamment les uns des autres, représentent des groupes alkyle en $C_1$-$C_4$, cycloalkyle en $C_5$-$C_8$ ou cycloalkyle en $C_5$-$C_8$ substitué par méthyle.

3. Mélange de stabilisants selon la revendication 1, dans lequel $R_1$, $R_9$, $R_{10}$, $R_{18}$, $R_{20}$, $R_{22}$, $R_{30}$, $R_{31}$, $R_{35}$ et $R_{41}$, indépendamment les uns des autres, représentent des groupes méthyle, octyle ou cyclohexyle.

4. Mélange de stabilisants selon la revendication 1, contenant au moins un composé à partir du composant a) et au

moins un composé à partir du composant b), c), d), e), f), g), h), i), j), k) ou l).

**5.** Mélange de stabilisants selon la revendication 1, contenant au moins un composé à partir du composant a) et au moins un composé à partir du composant b), c), d), e), f), g), h) ou j).

**6.** Mélange de stabilisants selon la revendication 1, contenant au moins un composé à partir du composant b) et au moins un composé à partir du composant d), e), f), g) ou k).

**7.** Mélange de stabilisants selon la revendication 1, contenant au moins un composé à partir du composant c) et au moins un composé à partir du composant a), b), d), e), f), g), h) ou j).

**8.** Mélange de stabilisants selon la revendication 1, où

| | |
|---|---|
| $n_1$ | vaut 1, 2 ou 4, |
| lorsque $n_1$ | est égal à 1, $R_2$ représente un groupe alkyle en $C_{10}$-$C_{20}$, |
| lorsque $n_1$ | est égal à 2, $R_2$ représente un groupe alkylène en $C_6$-$C_{10}$ et |
| lorsque $n_1$ | est égal à 4, $R_2$ représente un groupe butanetétrayle ; |
| $R_3$ et $R_7$, | indépendamment l'un de l'autre, représentent un atome d'hydrogène ou un groupe alkyle en $C_1$-$C_4$, |
| $R_4$, $R_5$ et $R_6$, | indépendamment les uns des autres, représentent un groupe alkylène en $C_2$-$C_6$, |
| $R_8$ | représente un atome d'hydrogène, des groupes alkyle en $C_1$-$C_6$, cycloalkyle en $C_5$-$C_8$, cycloalkyle en $C_5$-$C_8$ substitué par méthyle, phényle, phénylalkyle en $C_7$-$C_9$ ou un groupe de formule IV ; |
| $R_{11}$, $R_{13}$, $R_{14}$ et $R_{15}$, | indépendamment les uns des autres, représentent un atome d'hydrogène, des groupes alkyle en $C_1$-$C_8$, cycloalkyle en $C_5$-$C_8$, cycloalkyle en $C_5$-$C_8$ substitué par méthyle, phényle, phénylalkyle en $C_7$-$C_9$ ou un groupe de formule IV ou les restes $R_{14}$ et $R_{15}$, ensemble avec l'atome d'azote auquel ils sont liés, forment un cycle hétérocyclique à 6 chaînons, |
| $R_{12}$ | représente un groupe alkylène en $C_2$-$C_6$ et |
| $n_2$ | va de 2 à 25 ; |
| $R_{16}$ | représente des groupes alkyle en $C_1$-$C_4$, cycloalkyle en $C_5$-$C_8$ ou phényle, |
| $R_{17}$ | représente un groupe alkylène en $C_3$-$C_6$ et |
| $n_3$ | va de 1 à 25 ; |
| $n_4'$, $n_4''$ et $n_4'''$, | indépendamment les uns des autres, vont de 2 à 4 et |
| $R_{19}$ | représente un groupe alkyle en $C_1$-$C_4$ ; |
| $R_{21}$ et $R_{26}$, | indépendamment l'un de l'autre, représentent une liaison directe ou un groupe -N($Y_1$)-CO-$Y_2$-CO-N($Y_3$)-, $Y_1$ et $Y_3$, indépendamment l'un de l'autre, représentent un atome d'hydrogène ou un groupe alkyle en $C_1$-$C_4$, $Y_2$ est une liaison directe, |
| $R_{23}$ et $R_{27}$ | représentent des groupes alkyle en $C_1$-$C_{25}$ ou phényle, |
| $R_{24}$ et $R_{28}$ | représentent un atome d'hydrogène ou un groupe alkyle en $C_1$-$C_4$, |
| $R_{25}$ | représente un groupe alkyle en $C_1$-$C_{25}$ ou un groupe de formule IV et |
| $n_5$ | représente un nombre de 1 à 25 ; |
| $R_{29}$ | représente un groupe alkyle en $C_8$-$C_{15}$ ; |
| $n_6$ | représente un nombre de 2 à 25 ; |
| $R_{32}$ et $R_{33}$ | ensemble forment un groupe alkylène en $C_8$-$C_{14}$, |
| $R_{34}$ | représente un atome d'hydrogène ou un groupe -$Z_1$-COO-$Z_2$, $Z_1$ représente un groupe alkylène en $C_2$-$C_6$ et $Z_2$ un groupe alkyle en $C_8$-$C_{15}$ ; |
| $R_{36}$, $R_{38}$, $R_{39}$ et $R_{40}$, | indépendamment les uns des autres, représentent un groupe alkylène en $C_1$-$C_4$, |
| $R_{37}$ | est une liaison directe et |

$n_7$ représente un nombre de 1 à 25.

**9.** Mélange de stabilisants selon la revendication 1, dans lequel

le composant a) est au moins un composé de formule a-I-1, a-I-2 ou a-I-3,

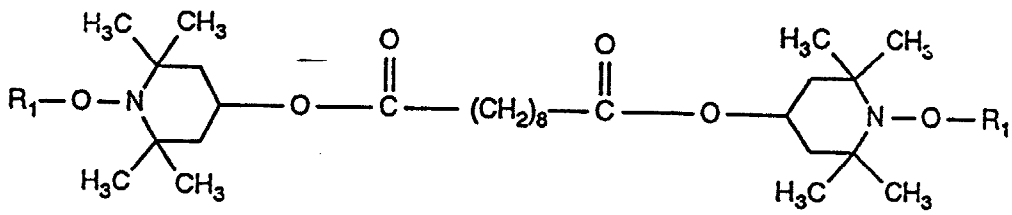

(a-I-1)

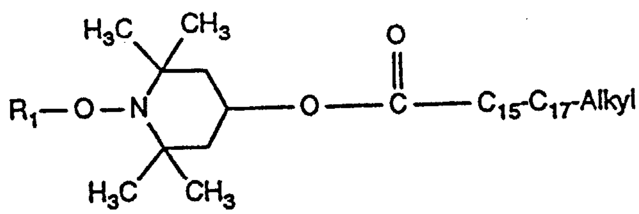

(a-I-2)

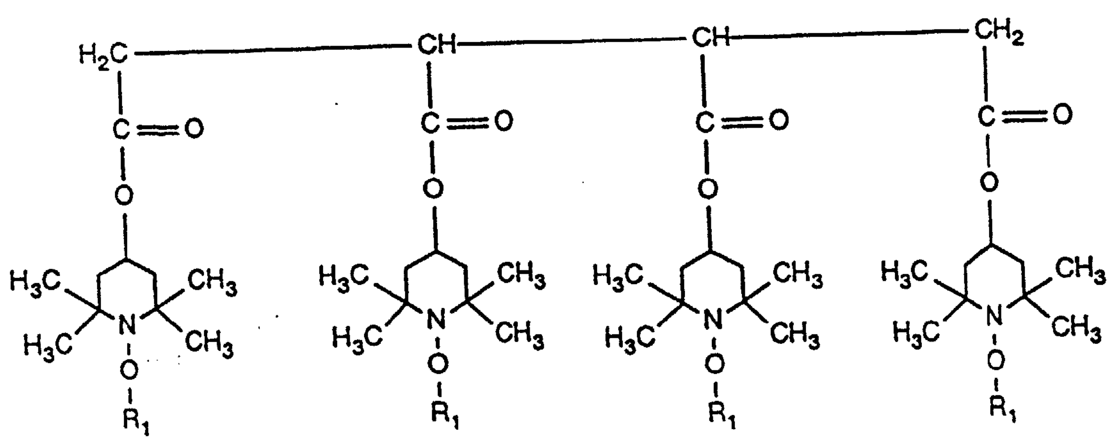

(a-I-3)

$R_1$ étant méthyle, octyle ou cyclohexyle ;

le composant b) est au moins un composé de formule b-II,

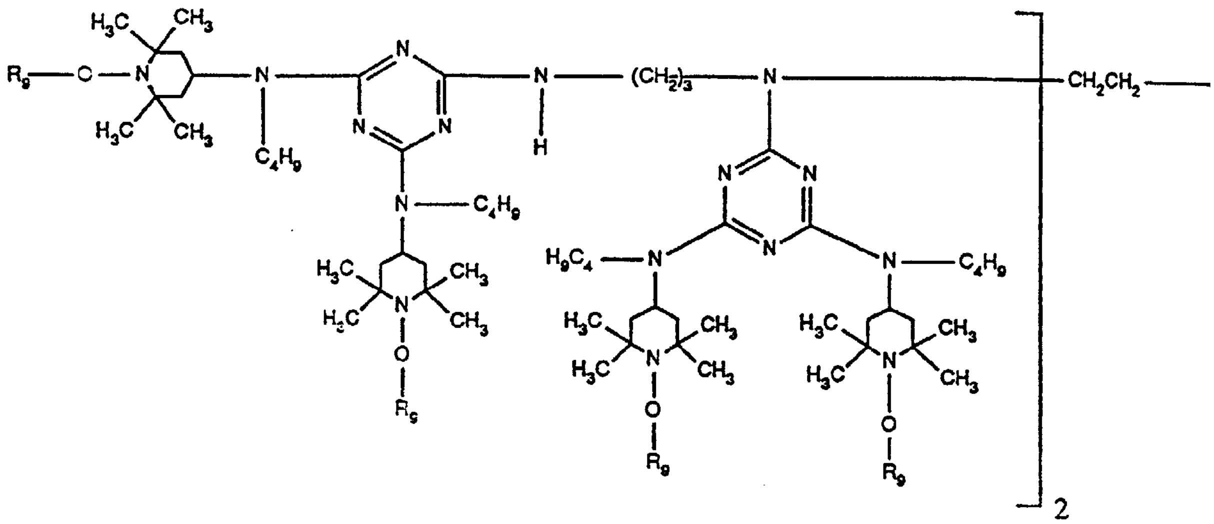

(b-II)

$R_9$ ayant l'une des significations données pour $R_1$ ;

le composant c) est au moins un composé de formule c-V,

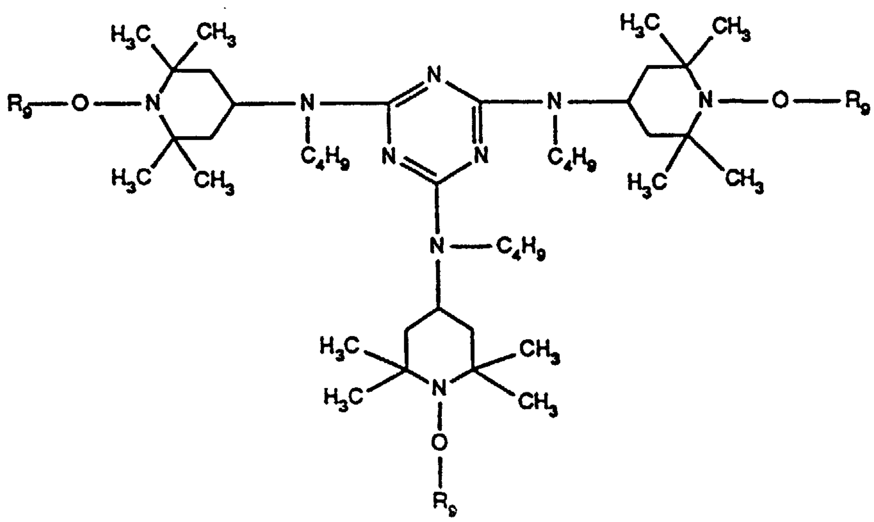

(c-V)

$R_9$ ayant la signification donnée ci-dessus ;

le composant d) étant au moins un composé de formule d-VI-1, d-VI-2 ou d-VI-3

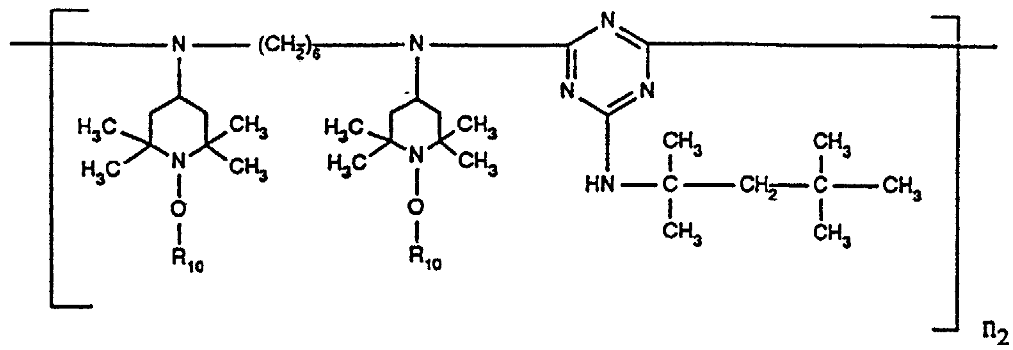

(d-VI-1)

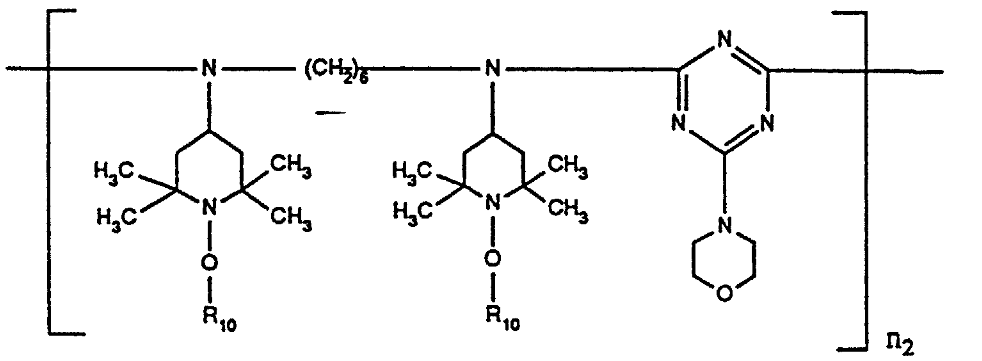

(d-VI-2)

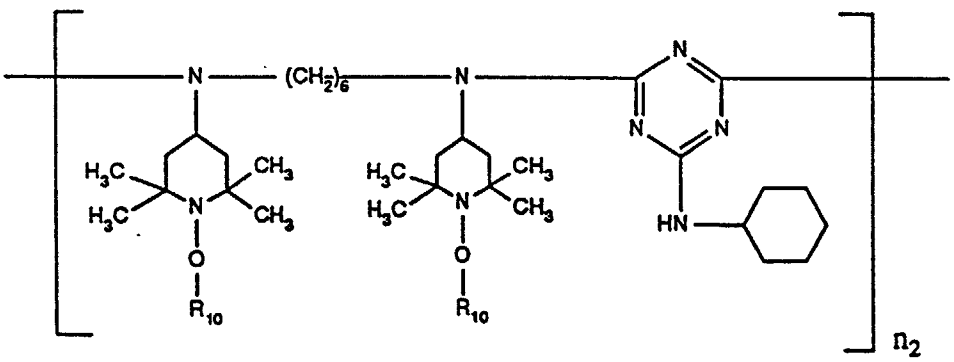

(d-VI-3)

$R_{10}$ ayant l'une des significations données pour $R_1$ et $n_2$ est un nombre de 2 à 25 ;

le composant e) est au moins un composé de formule e-VII,

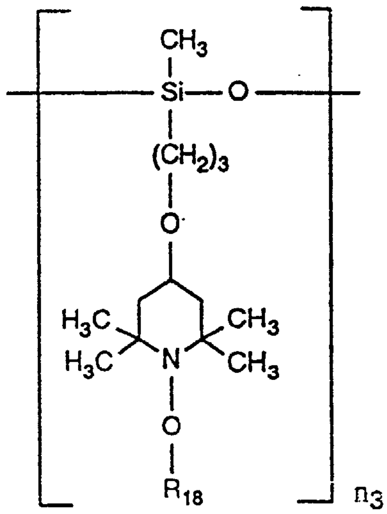

(e-VII)

dans laquelle $R_{18}$ possède l'une des significations données pour $R_1$ et $n_3$ est un nombre de 1 à 25 ;
le composant f) représente un produit que l'on peut obtenir par réaction d'un produit obtenu par réaction d'une polyamine de formule

$$H_2N-(CH_2)_3-NH-(CH_2)_2-NH-(CH_2)_3-NH_2$$

avec du chlorure de cyanuryle, avec un composé de formule

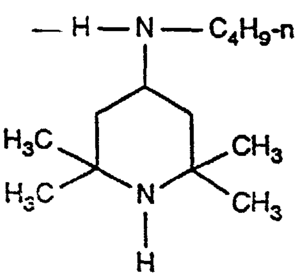

pour obtenir un dérivé de la triazine contenant des groupes 2,2,6,6-tétraméthyl-4-pipéridyle et par réaction ultérieure des groupes 2,2,6,6-tétraméthyl-4-pipéridyle contenus dans le dérivé de la triazine en groupes de formule

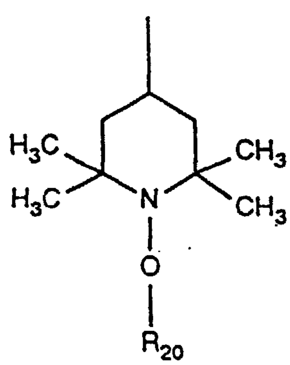

,

$R_{20}$ ayant l'une des significations données pour $R_1$ ;

le composant g) est au moins un composé de formule g-IX-1, g-IX-2 ou g-IX-3,

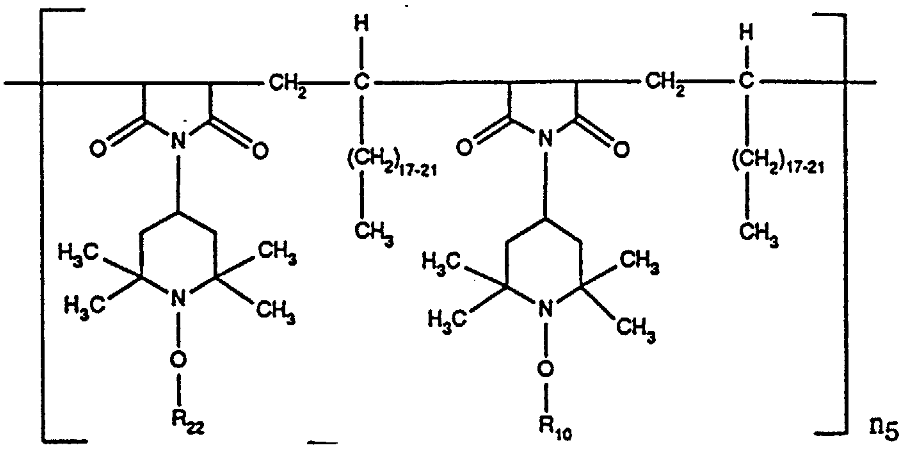

(g-IX-1)

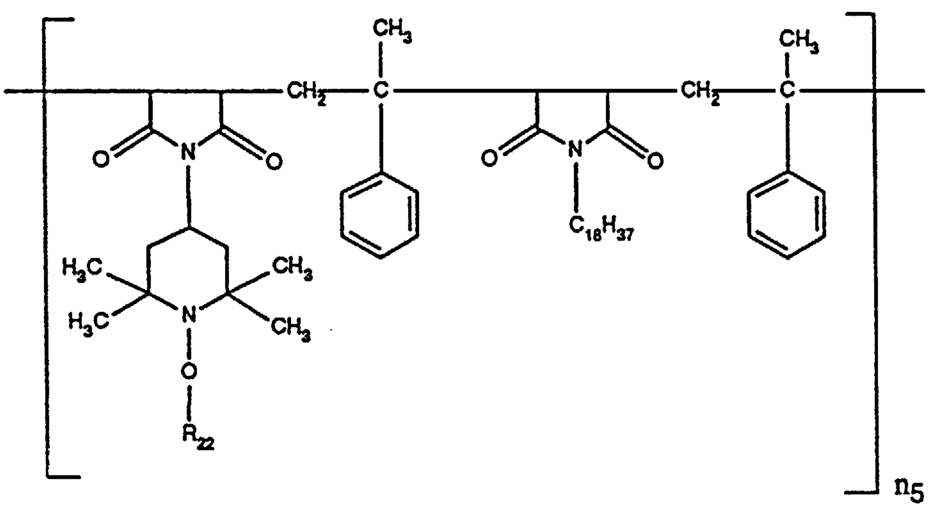

(g-IX-2)

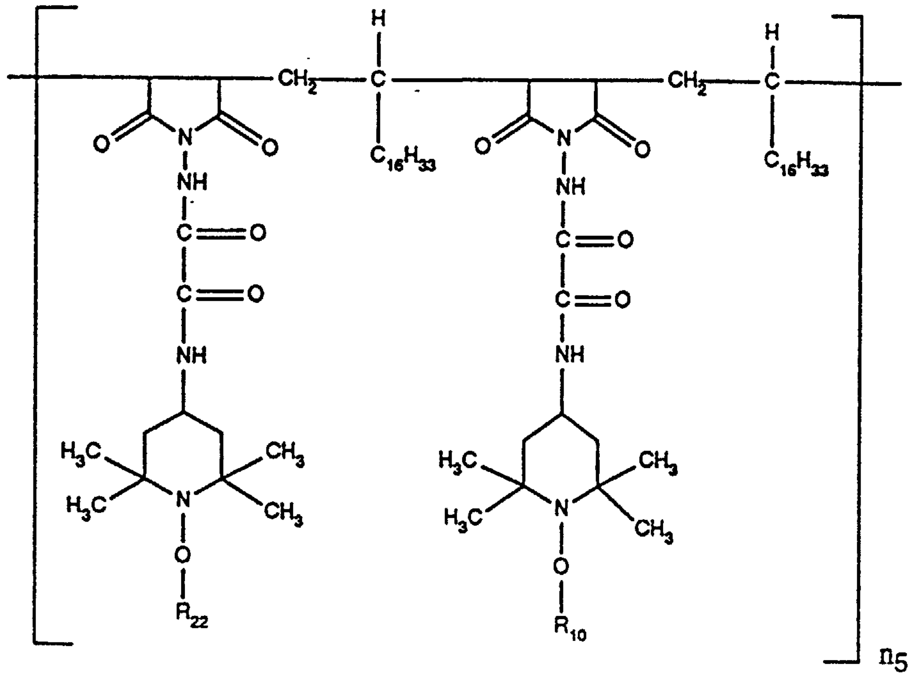

(g-IX-3)

$R_{10}$ et $R_{22}$ ayant l'une des significations données pour $R_1$ et $n_5$ est un nombre de 1 à 25 ;

le composant h) est au moins un composé de formule h-X,

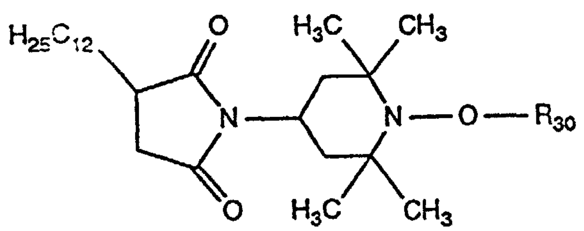

(h-X)

$R_{30}$ ayant l'une des significations données pour $R_1$ ;

le composant i) est au moins un composé de formule XI, où $R_{31}$ possède l'une des significations données pour $R_1$ et $n_6$ est un nombre de 2 à 25 ;
le composant j) est au moins un composé de formule j-XII-1 ou j-XII-2,

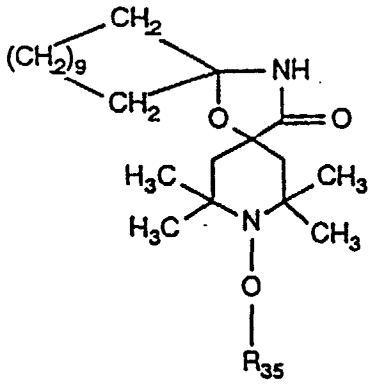

(j-XII-1)

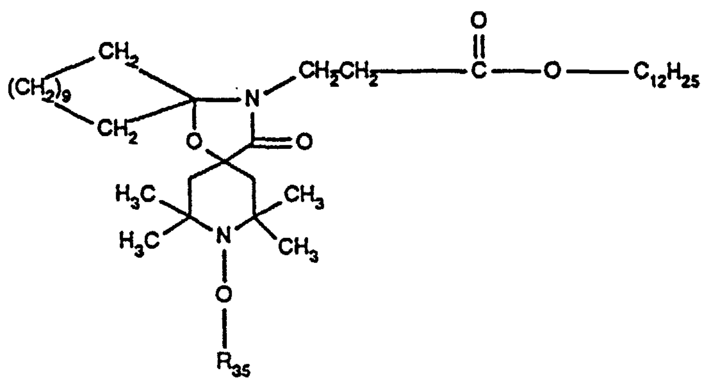

(j-XII-2)

$R_{35}$ possède l'une des significations données pour $R_1$ ;

le composant k) est au moins un composé de formule k-XIII,

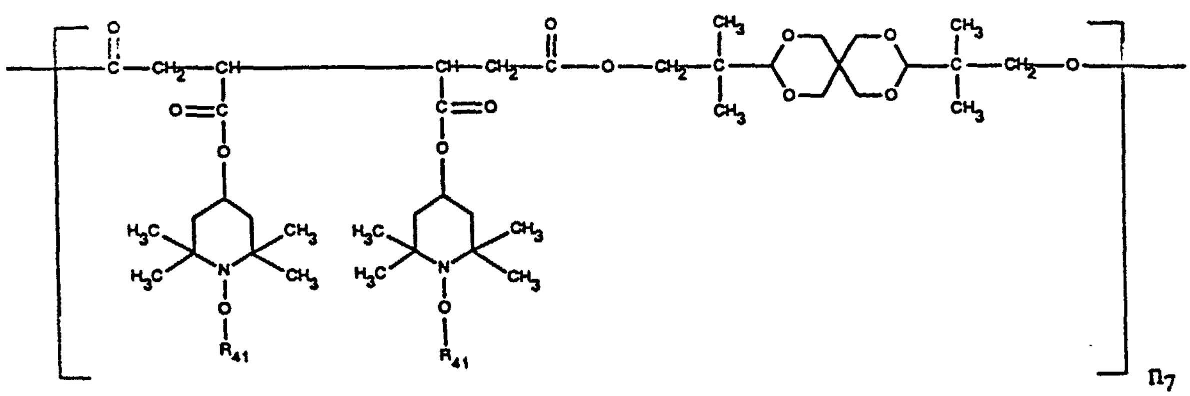

(k-XIII)

$R_{41}$ possédant l'une des significations données pour $R_1$ et $n_7$ représente un nombre de 1 à 25 ;

le composant l) est au moins un composé de formule 1-XIV,

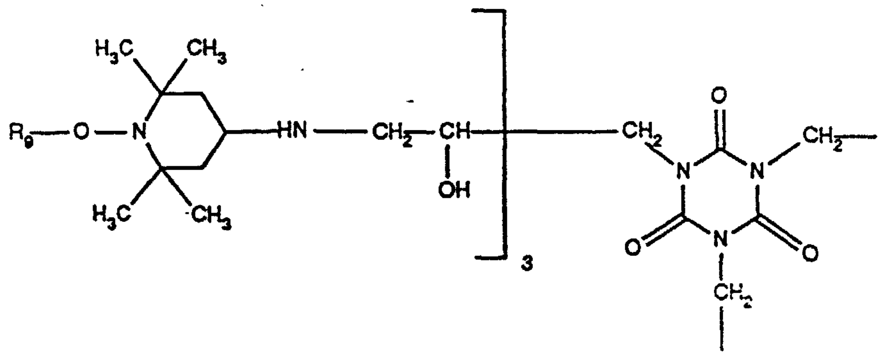

(1-XIV)

$R_9$ ayant l'une des significations données pour $R_1$.

**10.** Composition contenant une matière organique sensible à la dégradation oxydative, thermique ou induite par la lumière et un mélange de stabilisants selon la revendication 1.

**11.** Composition selon la revendication 10, où la matière organique est une polyoléfine.

**12.** Composition selon la revendication 10, où la matière organique est le polyéthylène, le polypropylène ou un copolymère de polyéthylène ou de polypropylène.

**13.** Procédé pour la stabilisation d'une matière organique sensible à la dégradation oxydative, thermique ou induite par la lumière, caractérisé en ce que l'on incorpore dans la matière organique un mélange de stabilisants selon la revendication 1.